# EUROPÄISCHE PATENTANMELDUNG

(11) **EP 0 960 986 A2**
(43) Veröffentlichungstag der Anmeldung: **01.12.1999**
(21) Anmeldenummer: 99110070.2
(22) Anmeldetag: 22.05.1999
(51) Int. Cl.: E04B 1/34, E04H 12/12

(54) **Verfahren und Vorrichtung zum Herstellen von hohen, hohlen, turmartigen Bauwerken von zweihundert Metern Höhe und mehr, insbesondere von Türmen für Windkraftanlagen**

(30) Priorität: 27.05.1998 DE 19823650
(71) Anmelder: Arand, Wilfried, 59425 Unna (DE)
(72) Erfinder: Arand, Wilfried, 59425 Unna (DE)

(57) **Zusammenfassung**

Die Erfindung betrifft ein Verfahren und eine Vorrichtung zum Herstellen turmartiger Gebäude. Bei dieser erfinderischen Verfahrensweise wird eine Doppelschalung, vorzugsweise aus einem metallischen Werkstoff, verwendet, in die ein Betonkern eingebracht wird. Die Doppelschalung besteht aus Ringsegmenten, die weitestgehend fabrikatorisch vorgefertigt werden, unter anderem auch mit der Bewehrung. Diese Ringsektoren werden zu Schalungsrohrschüssen zusammengestellt, übereinandergestülpt und anschließend mit Beton ausgegossen. Diese Schalungsrohrschüsse werden in geeigneter Weise, zum Beispiel durch Schrauben, miteinander verbunden. Bei einer Verfahrensweise werden diese Schalungsrohrschüsse als sogenannte 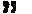 verlorene Schalung" eingesetzt, die nicht in die Festigkeitsberechnung einbezogen werden. Bei einer anderen erfinderischen Verfahrensweise wird diese Ringschalung mit in die Berechnung einbezogen, wodurch sich erhebliche Kosteneinsparungen erzielen lassen. Bei einer dritten Verfahrensweise, erstreckt sich die Ringschalung nur über eine gewisse Höhe des turmartigen Gebäudes, weil der Turmkopf sich bis zu einer begrenzten Höhe wirtschaftlicher aus Stahl als Stahlmantel herstellen läßt. Dadurch ist eine weitere Einsparung möglich. Insgesamt lassen sich auf diese Weise turmartige Gebäude, z. B. Windkraftanlagen, kostengünstiger und wesentlich schneller herstellen, als dies nach üblichen Verfahrensweisen mit üblichen Vorrichtungen möglich war.

## Beschreibung

Die Erfindung betrifft ein Verfahren zum Herstellen von hohen, hohlen, turmartigen Bauwerken von zweihundert Metern Höhe und mehr, insbesondere von Türmen für Windkraftanlagen.

Des weiteren betrifft die Erfindung eine Vorrichtung zum Durchführen des erfindungsgemäßen Verfahrens.

### Stand der Technik

Herkömmliche Verfahren arbeiten mit Ortbeton für Brückenpfeiler und für andere Turmkonstruktionen, unter anderem auch für Türme von Windkraftanlagen, mit sogenannter ziehender Schalung oder Kletterschalung vor Ort, wobei bei der Herstellung solcher Bauwerke oder Türme in der Regel ein Zeitraum von 50 und mehr Arbeitstagen für nur einen Brückenpfeiler oder Turm erforderlich ist und Kosten je Bauwerk bei etwa 1,4 Millionen Deutsche Mark beginnen und von vornherein unwirtschaftlich sind.

Die typischen Produktions-, Fertigungs- und Baukosten und der damit einhergehende Zinsaufwand sowie die längere Produktionsdauer sind nach herkömmlichen Verfahren wesentlich zu hoch.

### Aufgabe

Der Erfindung liegt zunächst die Aufgabe zugrunde, ein Verfahren zum Herstellen von hohen, hohlen, turmartigen Bauwerken von bis zu zweihundert Metern Höhe und mehr, insbesondere von Türmen für Windkraftanlagen, vorzuschlagen, das eine erheblich schnellere und kostengünstigere Herstellung solcher turmartigen Bauwerke gestattet.

Des weiteren liegt der Erfindung die Aufgabe zugrunde, eine Vorrichtung zum Durchführen des erfindungsgemäßen Verfahrens bereitzustellen.

### Lösung der Aufgabe hinsichtlich des Verfahrens

Diese Aufgabe wird durch die in **Patentanspruch 1** wiedergegebenen Merkmale gelöst.

### Einige Vorteile

Das erfindungsgemäße Verfahren ermöglicht im Gegensatz zu vorbekannten Verfahrensweisen die Vorfertigung von transportfähigen, komplett vorbehandelten, fertigen Einzelschalungsteilen in Modulbauweise mit zum Beispiel eingehängter fertiger Bewehrung in den einzelnen Einzelschalungsteilen, die in den Produktionsabmessungen in genormten Größen, insbesondere für einen 40 Fuß Container, passend sind. Dabei kann die Bewehrung entweder komplett an der Außen- und/oder an der Innenschalung fabrikmäßig angeordnet sein.

Die Montage vor Ort erfolgt zum Beispiel durch einfache Schraub-Steckverbindungen. Dabei werden die fabrikmäßigen vorgefertigten Modul-Einzelschalungsteile vor Ort zu Schalungsrohrschüssen für die Innen- und Außenschalung zusammengebaut und dadurch eine verlorene Schalung gebildet, in der sich die vorgefertigte Stahlarmierung befindet. Diese einzelnen Schalungsrohrschüsse der Innen- und Außenschalung werden z. B. sektionsweise übereinandergestülpt und miteinander verbunden, können aber auch in anderer Reihenfolge montiert werden, bis die angestrebte Höhe in dieser Bauweise, für das betreffende Bauwerk erreicht ist. Abschnittsweise, vorzugsweise nach Fertigstellung jedes Stahlrohrschusses, wird der Ringraum zwischen den äußeren Schalungsrohrschüssen und den inneren Schalungsrohrschüssen mit Fertigbeton verfüllt, wodurch die Bauzeit erheblich reduziert wird. Um eine Entmischung des Fertigbetons zu vermeiden, kann dieser z. B. auch jeweils von unten in den Ringraum des betreffenden Schalungsrohrschusses eingepreßt und durch Rütteln oder dergleichen verdichtet werden.

Solchermaßen hergestellte Pfeiler oder Masten, insbesondere Türme für Windkraftwerke werden in der Regel in einem Arbeitsrhythmus von nur 13 Arbeitstagen auf der Baustelle hergestellt.

Durch die erfindungsgemäße Verfahrensweise lassen sich etwa 50 % der Arbeitszeit vor Ort gegenüber vorbekannten Verfahren auf der Baustelle einsparen, was zu einer Reduzierung der Personalkosten beiträgt.

Zusammengefaßt ergeben sich wesentliche Vorteile:
- Die Schalung und die Bewehrung werden im Werk vorgefertigt, auf der Baustelle nur aufgestellt und der Ringraum zwischen Außen- und Innenrohrschüssen mit Beton verfüllt. Die Montage der Einzelschalungsteile als verlorene Schalung im zum Beispiel Schraub-Stecksystem und das Verfüllen mit Beton ist u. a. auch durch die Schußhöhe von 12 m vom Zeitaufwand in 50 % der bisher üblichen Zeit realisierbar.
   Sofern die Innen- und Außenschalung als sogenannte 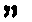 verlorene Schalung" eingesetzt wird, wird sie in die statische Berechnung nicht mit einbezogen. Durch die Erfindung werden allerdings auch Verfahren und Vorrichtungen erfaßt, bei denen die Innen- und Außenschalung als statisch mittragende Schalung gilt, also demgemäß mit in die statische Berechnung einbezogen wird. Dadurch ist eine weitere erhebliche Reduzierung des Stahlgewichtes und der Kosten möglich.
- Die Maße der Einzelschalungsteile für die Innen- und Außenschalung, also für die einzelnen Schalungsrohrschüsse werden in Maßeinheiten für 40 Fuß Container produziert, die weltweit sowohl bei Schiffstransporten als auch im Luftfrachtverkehr üblich sind. Dadurch sind die Exportaussichten positiv zu bewerten. Die Einzelsektoren lassen sich in Serie produzieren, direkt im Herstellerbetrieb im Container verpacken und können per Bahn oder Schiff weltweit preisgünstig und damit wirtschaftlich versandt werden.
   Zum Beispiel hat die Produktion von Strom mittels Windkraftwerken nur dann eine Zukunft, wenn es gelingt, diesen Wirtschaftszweig so effektiv zu gestalten, daß die Wirtschaftlichkeit nicht nur von Subventionen wie dem Stromeinspeisegesetz, abhängig ist.
   Ein erster Schrift dazu ist die Herstellung von 1,5 MW-Klasse. Die Entwicklung bleibt nicht stehen und die 6 MW-Klasse ist in Planung.
- Ein weiterer Schrift ist der Übergang zum Bau von Windparks von vier bis dreißig Windkraftanlagen und mehr, auch im Binnenland, aber aus Gründen des Windertrages mit mindestens 100 Metern Nabenhöhe für den Rotor. Größere Höhen der Türme von Windkraftanlagen von 130 bis 150 Metern und darüber sind in absehbarer Zeit realistisch.

Es ist ebenfalls realistisch, auf diese Weise im Jahr über 100 Türme für Windkraftanlagen herzustellen, so daß sich insgesamt eine bedeutende Kostenreduzierung gegenüber herkömmlichen Verfahrensweisen ergibt.

### Weitere erfinderische Verfahrensweisen

Von besonderem Vorteil ist es, wenn die Einzelrohrschüsse der Innen- und Außenschalung werkseitig in mehrere Schalungsringsektoren unterteilt werden, die dann an der Baustelle zu dem Schalungsrohrschuß miteinander verbunden werden - **Patentanspruch 2.** Durch die Unterteilung läßt sich besonders bei kreisförmigem oder polygonförmigem Querschnitt diese Querschnittsform leicht auf die Sektoren aufteilen.

In **Patentanspruch 3** ist die Anbringung von Zugelementen, vornehmlich von Stahlseilen, beschrieben, mittels deren sich die erforderliche Vorspannkraft auf den Beton, auch bei sehr hohen turmartigen Bauwerken, zum Beispiel bei Türmen für Windkraftanlagen bis zu mehreren Hundert Metern Höhe, aufbringen läßt.

In **Patentanspruch 4** wird eine Verfahrensweise vorgeschlagen, bei welcher die Anzahl der Zugelemente mit zunehmender Höhe über den Umfang des Bauwerkquerschnittes gesehen, verringert wird. Dies ist auch deshalb möglich, weil sich mit zunehmender Höhe der Querschnitt des Bauwerkes verringert.

Bei Anwendung einer Verfahrensweise mit Kopfbolzen gemäß **Patentanspruch 5** wird das gemeinsame Tragverhalten zwischen Innen- und Außenschalung mit dem Betonkern sichergestellt, so daß auch unterschiedliche Materialien gemeinsam Kräfte aufnehmen können, was auch für Wärmespannungen gilt.

Aus **Patentanspruch 6** geht hervor, daß die Länge jedes einzelnen Schalungsrohrschusses der Innen- und Außenschalung nur einen Bruchteil der Gesamthöhe des Bauwerkes beträgt. Dies kommt der Forderung entgegen, die Einzelschalungsteile oder Sektoren werkseitig so vorfertigen zu können, daß sie sich als Bausatz, also modulartig zu der Schalung des entsprechenden Bauwerkes zusammenbauen lassen.

In **Patentanspruch 7** ist eine weitere vorteilhafte Verfahrensweise der Erfindung beschrieben.

Eine weitere vorteilhafte Verfahrensweise ergibt sich aus **Patentanspruch 8**. Hierbei werden die einzelnen Sektoren der Schalungsrohrschüsse der Innen- und Außenschalung sowohl mit Ringbewehrungen als auch mit Längsbewehrungen werkseitig versehen.

### Lösung der Aufgabe hinsichtlich der Vorrichtung zum Durchführen des erfindungsgemäßen Verfahrens

Diese Aufgabe wird durch die in **Patentanspruch 9** wiedergegebenen Merkmale gelöst.

### Einige Vorteile

Die erfindungsgemäße Vorrichtung zum Durchführen des Verfahrens besteht aus einer Doppelschalung, die entweder als 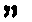 verlorene Schalung" ausgebildet ist, das heißt bei der Festigkeitsberechnung des Bauwerkes nicht mit herangezogen wird, oder aber die Schalung wird bei der Festigkeitsberechnung mit berücksichtigt, wodurch sich eine erhebliche Gewichtsersparnis an eingesetztem Stahl und damit auch eine Verringerung der Kosten erzielen lassen. Im Falle der 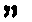 verlorenen Schalung" geht man davon aus, daß die Kräfte von dem Stahlbeton und dessen Rundstahlbewehrungen aufgenommen werden, so daß man im Bedarfsfalle auch Zugelemente zur Vorspannung einsetzen wird.

Die bei der erfindungsgemäßen Vorrichtung verwendete Doppelschalung besteht jeweils aus Schalungsrohrschüssen, die die Innen- und Außenschalung bilden. Die einzelnen Schalungsrohrschüsse werden wiederum aus Einzelrohrschußteilen aufgebaut, die fabrikseitig als Module für einen Bausatz vorgefertigt werden, also nicht nur die Anschlußmittel zum Zusammenbau an der Baustelle zu dem betreffenden Schalungsrohrschuß aufweisen, sondern auch schon mit der erforderlichen Bewehrung versehen sind. An der Baustelle brauchen deshalb die Einzelschalungsteile nur zu dem betreffenden Schalungsrohrschuß zusammengesetzt und diese wiederum koaxial zueinander angeordnet zu werden, und zwar bis zu der entsprechenden Höhe des Bauwerkes, dabei werden bei der Vormontage jeweils die Schalungsrohrschüsse der Außenschalung über dem jeweiligen Schalungsrohrschuß der Innenschalung von oben gestülpt und die entsprechenden Schalungsrohrschüsse miteinander verbunden, gemeinsam auf das Fundament oder den schon montierten Schuß gesetzt, woraufhin die Verfüllung des zwischen Außen- und Innenschalung entstehenden Ringraumes mit Beton erfolgen kann.

Dadurch, daß die Schalungsrohrschüsse aus Einzelschalungsteilen bestehen, hat man es in der Hand, diese Einzelschalungsteile so zu dimensionieren, daß sie sich in den weltweit, also üblicherweise verwendeten See- und Aircargo-Containern problemlos transportieren lassen.

Die erfindungsgemäße Vorrichtung trägt auch zur Spezialisierung bei, da ein bestimmtes Herstellerwerk die Einzelschalungsteile in Serienfertigung, also in Modulbauweise, vorfertigen kann. Diese Einzelschalungsteile werden dann wie in einem Baukastensystem an Ort und Stelle zusammengesetzt, wobei durch die weitgehende fabrikmäßige Vorfertigung der Einzelschalungsteile auch Fehler vermieden werden. Die Modulbauweise ermöglicht einen schnellen Aufbau des entsprechenden turmartigen Bauwerkes, zum Beispiel eines Turmes für eine Windkraftanlage, wobei gegenüber herkömmlichen Schalungen sich erhebliche Einsparungen erzielen lassen. Diese Einsparungen überwiegen bei weitem die Kosten für die Schalung.

### Weitere erfinderische Ausführungsformen

In **Patentanspruch 10** ist eine Ausführungsform beschrieben, bei welcher jeder Schalungsrohrschuß der Innen- und Außenschalung aus mehreren miteinander verbundenen Sektoren besteht. Die Sektorenbauweise kommt der Forderung entgegen, hohe, turmartige Bauwerke, insbesondere Brückenpfeiler und Türme für Windkraftanlagen, im Querschnitt kreisrund, oder aber auch polygonförmig auszugestalten. Durch die Aufteilung in Sektoren hat man es demgemäß in der Hand, die Schalungsrohrschüsse, zum Beispiel in 45 Grad Sektoren zu zerlegen und ihre Länge auf ein Maß zu begrenzen, daß sie nicht nur von den Querabmessungen, sondern auch längenmäßig in die üblichen Transportcontainer hineinpassen.

Die **Patentansprüche 11** bis **15** beschreiben weitere erfinderische und vorteilhafte Ausführungsformen.

Bei der Ausführungsform nach **Patentanspruch 16** sind die Sektoren mit Abstandhaltern oder Anordnungen zum Aufnehmen von Abstandhaltern versehen. Dadurch werden die z. B. bei Temperaturschwankungen oder beim Betoniervorgang auftretenden Beanspruchungen im Bedarfsfalle von der Außenschalung auf den Beton abgeleitet.

Besonders vorteilhaft ist es, wenn gemäß **Patentanspruch 17** die Sektoren der Schalungsrohrschüsse mit Flanschen versehen sind. Über diese Flansche lassen sich die einzelnen Schalungsrohrschüsse zentrisch und damit koaxial sowie sicher miteinander verbinden. Dies kann auf verschiedene Arten und Weisen geschehen, beispielsweise über Schrauben, die durch Bohrungen hindurchgeführt werden, die in den Flanschen vorgesehen sind und die miteinander fluchten, oder aber durch andere geeignete Verbindungselemente wie Zapfen, Stifte, Niete, Klammern oder dergleichen. Die verschiedenen Verbindungselemente können auch miteinander gemischt werden, falls dies sich als zweckmäßig oder notwendig erweisen sollte.

Eine besonders vorteilhafte Ausführungsform beschreibt in diesem Zusammenhang **Patentanspruch 18** (gilt für vertikale Stöße). Bei dieser Ausführungsform sind die aneinander angrenzenden Stirnseiten von Sektoren mit einwärts gerichteten Vorsprüngen oder dergleichen versehen, die kraftschlüssig durch Verbindungsmittel miteinander gekuppelt sind. Die Vorsprünge der die Außenschalung bildenden Schalungsrohrschüsse sind demgemäß dem Beton zugekehrt, liegen also in dem Ringraum zwischen Außen- und Innenschalung, während die Vorsprünge der die Innenschalung bildenden Schalungsrohrschüsse vorzugsweise nach außen, also von dem mit Beton auszufüllenden Ringraum hingerichtet sind und demgemäß ebenfalls in den Ringraum zwischen Außen- und Innenschalung hineinragen.

Erfindungsgemäß werden die Verbindungsmittel als federnde Klammern oder Spangen ausgebildet, die mit ihren Federschenkeln die miteinander zu kuppelnden Vorsprünge oder dergleichen der Schalungsrohrschüsse kraftschlüssig verbinden. Hierzu werden die Federschenkel der Klammern oder Spangen durch eine geeignete Vorrichtung auseinandergespreizt, die Klammern auf die leistenfömig und ununterbrochen durchlaufenden, aneinander liegenden Vorsprünge oder dergleichen der Schalungsringsektoren von oben aufgeschoben und anschließend die Spreizkraft weggenommen, so daß die Federschenkel mit hoher Kraft die Vorsprünge oder dergleichen gegeneinander pressen und dadurch die Sektoren zu dem betreffenden Schalungsrohrschuß miteinander verbinden. Bei einer weiteren Alternative ist es aber auch möglich, die Pressung dadurch zu erzeugen, daß die Klammer keilförmig an einem Ende geöffnet ist, so daß beim Aufschieben die Klemmkraft erzeugt wird. Zusätzlich können die Sektoren über Laschen und Schrauben, die mit den Flanschen der Segmente zu verbinden sind, miteinander gekuppelt sein - **Patentanspruch 19.**

Gemäß **Patentanspruch 20** sind über die Höhe eines Schalungsrohrschusses, also in seiner Längsachsrichtung gesehen, mehrere Klammern oder Spangen übereinander angeordnet. Es steht dem jedoch auch nichts im Wege, statt mehreren Klammern nur eine Klammer vorzusehen, wenngleich es vorteilhafter sein dürfte, die Sektoren über die gesamte Länge (Höhe) eines Schalungsrohrschusses über die Vorsprünge oder dergleichen miteinander zu kuppeln. In diesem Fall sind über die gesamte Länge (Höhe) der Vorsprünge oder dergleichen leistenförmige, federnde Klemmspangen angeordnet, die mit ihren Stirnseiten gegeneinander liegen und die Vorsprünge oder dergleichen der Segmente der Schalungsrohrschüsse miteinander verbinden **- Patentanspruch 21.**

Erfindungsgemäß weist jede federnde Klemmspange im Querschnitt etwa die Form eines gleichschenkligen Dreiecks auf, wobei allerdings in den Eckpunkten des Dreieckes materialmäßig einstückige Übergänge aus gebogenem Material vorhanden sind - **Patentanspruch 22**. Dadurch werden Spannungsanhäufungen in den Übergangsbereichen der federnden Klemmspangen und ihrer Schenkel vermieden, so daß sehr hohe Federkräfte aufgebracht werden können, die die Sektoren halten, ohne daß es durch Kerbschlagwirkung und Spannungsanhäufungen zu Brüchen kommen kann.

In den **Patentansprüchen 23** bis **27** sind weitere erfinderische Ausgestaltungen beschrieben.

Durch die besondere räumliche Ausgestaltung gemäß **Patentanspruch 23** ist es ohne weiteres möglich, die Vorsprünge oder dergleichen relativ lang auszubilden, um einerseits eine sichere Befestigung der Sektoren der Schalungsrohrschüsse zu erreichen, andererseits wird aber auch durch die besondere Gestaltung der federnden Klemmspangen erreicht, daß diese Vorsprünge oder dergleichen zwischen den Schenkeln ergriffen werden können, der Klammer sicheren Sitz geben, ohne daß es zu einer Behinderung kommt.

In der Regel wird man die federnden Spangen gemäß **Patentanspruch 24** aus Federstahl herstellen.

Es steht jedoch dem auch nichts im Wege, die federnden Klemmspangen aus einem geeigneten kautschukartigen Kunststoff, zum Beispiel aus Polyurethan-Kunststoff, also einem Polymerkunststoff, herzustellen, der die erforderliche Shore-Härte, Federelastizität, Rückprallelastizität und Alterungsbeständigkeit aufweist sowie Beständigkeit gegen Ozon und die normalerweise auf Baustellen und im Beton auftretenden aggressiven Wässer besitzt. Zu diesem Zweck kann die Klemmspange als Extrusionsteil auf die erforderliche Länge entweder extrudiert oder von einem leistenförmigen Element auf Länge abgeschnitten werden - **Patentansprüche 25** und **26.**

In **Patentanspruch 27** ist beschrieben, daß eine federnde Klemmspange zum Beispiel eine Länge von zwei bis fünf Metern, vorzugsweise von drei Metern, aufweisen kann. Man muß hierbei auch berücksichtigen, daß bei den angestrebten hohen Klemmkräften die federnden Spangen durch ein geeignetes Werkzeug aufgebogen, über die Vorsprünge oder dergleichen gesetzt und dann wieder entspannt werden müssen, bis die federnden Schenkel die Vorsprünge oder dergleichen unter hoher Kraft gegeneinander pressen. Bei einer federnden Klemmspange von drei Meter Länge kann es hierbei zu erheblichen Aufspreizkräften kommen, die in dem einen oder anderen Fall je nach Querschnitt des zu bauenden Bauwerkes, zum Beispiel eines Turmes für Windkraftanlagen, auch in der Länge kürzer bemessen werden müssen, um die erforderlichen hohen Aufspreizkräfte noch beherrschbar zu machen.

Erfindungsgemäß ist jeder Schalungsrohrschuß der Innenschalung durch mehrere in axialer Richtung des betreffenden Schalungsrohrschusses mit Abstand zueinander bzw. über den Umfang angeordneten oder spiralförmig gewendelt angeordneten Verstärkungen versehen (**Patentanspruch 28**).

Gemäß **Patentanspruch 29** können die Verstärkungen jeweils aus mehreren Trägern, Stützen, Winkel, Flacheisen oder Leisten bestehen. Dies bedeutet, daß in einer Ebene, in der sich jeweils eine solche Verstärkung befindet, über den rohrförmigen Querschnitt der Innenschalung mehrere solcher Träger, Stützen, Winkel, Flacheisen oder Leisten befinden, die die Verstärkung in dieser Ebene des Schalungsrohrschusses bilden - **Patentanspruch 30**.

Die Verstärkungen können gemäß **Patentanspruch 31** aus Stahl bestehen. Hierzu bieten sich Stahlträger, zum Beispiel Doppel-T-Träger, U-Eisen, Winkel, Flacheisen oder dergleichen, an.

Vorteilhafterweise bestehen nicht nur die Bewehrungen, sondern auch die Schalungsrohrschüsse der Innen- und Außenschalung gemäß **Patentanspruch 32** aus Stahl.

Gemäß **Patentanspruch 33** können diese Teile aber auch aus Kunststoff bestehen. Hierfür beschreiben die **Patentansprüche 34** bis **37** mehrere erfinderische Ausgestaltungen.

Gemäß **Patentanspruch 38** sind im Bereich der oberen Mündungsöffnung jedes Schalungsrohrschusses der Innenschalung mehrere Podestträger im Innenraum angeordnet, auf denen begehbare Roste, Podestbleche oder dergleichen angeordnet sind, oder alternativ eine etwa ein Meter breite, umlaufende Brüstung auf Kragarmen gelagert und mit Blech- oder Lichtgitterabdeckung und Schutzgeländer vorgesehen ist. Dadurch können die erforderlichen Arbeiten beim Zusammenfügen der horizontalen Stöße durch zumindest teilweises Begehen des Innenraumes der Innenschalung ausgeführt werden.

In den **Patentansprüchen 39** bis **40** sind weitere vorteilhafte Ausführungsformen beschrieben.

Eine weitere bevorzugte Ausführungsform beschreibt **Patentanspruch 41.** Die Zugelemente dienen zum Vorspannen des Betons (Spannbeton).

Gemäß **Patentanspruch 42** sind im unteren Bereich des turmartigen Bauwerkes mehrere Zugelemente über den Umfang des Bauwerkes verteilt angeordnet als im oberen Bereich. Dies hat auch seinen Grund darin, daß mit zunehmender Höhe in der Regel der Querschnitt des Bauwerkes abnimmt, in der Regel nach oben konisch oder in sonstiger Weise verjüngt ausläuft und auch die aufzunehmenden Kräfte sich verringern.

**Patentanspruch 43** beschreibt eine bevorzugte Ausführungsform.

Bei der Ausführungsform nach **Patentanspruch 44** weist der Turmkopf der auch aus zwei Teilen bestehen kann, unten einen verstärkten Flansch auf, mit dem der aus Stahl bestehende Turmkopf unter Zwischenschaltung von Dichtungen aufgesetzt ist, derart, daß alle von oben, im wesentlichen aus Rotor, Gondel und Turmkopf kommenden Kräfte in den Stahlbeton abgeleitet werden. Um eine gleichmäßige und großflächige Krafteinleitung in den Betonkern zu erreichen, wird auf die Oberseite des Stahlbetons Mörtel aufgebracht und vor dessen Abbinden der Turmkopf aufgesetzt. Damit der Beton nicht an seiner oberen, dem Turmkopf zugekehrten Seite ausbricht, sind innen und außen Bandagen aus Stahl vorgesehen, die ringförmig umlaufen. Der erheblich verstärkte nach innen gerichtete Flansch ist durch Schrauben, Zugelemente oder dergleichen fest, aber lösbar, gekuppelt. Der hier oben am Turmkopf z. B. nach außen gerichtete Flansch ist als Anschluß vorgesehen für die horizontal drehbare Gondel mit den Aggregaten für die Stromerzeugung und dem diese antreibenden Rotor.

**Patentanspruch 45** beschreibt eine vorteilhafte Ausführungsform der Erfindung.

In den **Patentansprüchen 46** bis **51** sind weitere vorteilhafte Ausführungsformen beschrieben.

**Patentanspruch 52** beschreibt eine bevorzugte Ausführungsform der Erfindung.

Die Begrenzung auf 12 Meter oder kürzer gemäß **Patentanspruch 53** stellt sicher, daß sich die Einzelschalungsteile besonders problemlos transportieren lassen. Außerdem handelt es sich noch um handelsübliche Längen.

Dies gilt auch für die Ausführungsform nach **Patentanspruch 54.**

Da hohe Bauwerke, zum Beispiel Türme für Windkraftanlagen, die 100 Meter und höher sein können, oftmals erheblicher Sonnenbestrahlung ausgesetzt sind, was zu Wärmespannung führt, gilt es, diese möglicherweise nur durch einseitige Erhitzung des Turmes in der Außenschalung auftretenden Spannung abzuleiten. Die hammerartig ausgebildeten Vorsprünge, z. B. Kopfbolzen enden im Beton. Diese Vorsprünge sind mit der Innen- und/oder Außenschalung fest, zum Beispiel durch Schweißen, verbunden, so daß sich ein guter Spannungs- und Wärmefluß von der in der Regel aus Stahl bestehenden Schalung auf den hammerartigen Vorsprung und damit in den Beton ergibt (- **Patentanspruch 55**)**.**

Bei der Ausführungsform nach **Patentanspruch 56** ergibt sich eine gute Krafteinleitung in den Beton.

Diese wird bei der Ausführungsform nach **Patentanspruch 57** noch durch die flächige Krafteinleitung in den Betonmantel vorteilhaft verbessert

Bei der Ausführungsform nach **Patentanspruch 58** wird ein Ausbrechen des Betons durch die Bandagen am oberen Ende des aus Beton bestehenden Teiles des Bauwerkes verhindert.

In den **Patentansprüchen 59** und **60** sind weitere vorteilhafte Ausführungsformen beschrieben.

Gemäß **Patentanspruch 61** ist eine formschlüssige Verbindung zwischen dem Abstandhalter und dem Außenmantel einerseits und eine kraftschlüssige Verbindung mit der Innenschalung andererseits vorgesehen.

Dafür beschreibt **Patentanspruch 62** eine besonders vorteilhafte Ausführungsform.

Eine besonders bevorzugte Ausführungsform ist in **Patentanspruch 63** beschrieben. Diese ermöglicht eine leichte Montage und ein genaues Einjustieren der Abstandhalter.

Die Ausführungsform nach **Patentanspruch 64** ermöglicht durch die Anordnung eines Mehrkantes, zum Beispiel eines Vierkantes, ein zuverlässiges Arretieren des Abstandhalters gegen Verdrehen bei dessen Montage, zum Beispiel beim Aufschrauben der Muttern.

Besonders vorteilhaft sind die in **Patentanspruch 65** beschriebenen Verlegehilfen, die eine besonders genaue Einstellung derselben ermöglichen, wobei die Klammer aus Metall oder Kunststoff mit einem Handgriff das Einschnappen und damit Arretieren der betreffenden Längs- und/oder Ringbewehrung ermöglichen, die dann die betreffende Bewehrung formschlüssig halten.

**Patentanspruch 66** beschreibt eine weitere vorteilhafte Ausführungsform der Erfindung.

In **Patentanspruch 67** ist eine bevorzugte Ausführungsform für die Klemmspange beschrieben, die einerseits hohe Kräfte aufzubringen vermag, andererseits konstruktiv relativ einfach aufgebaut ist.

Die **Patentansprüche 68** und **69** beschreiben weitere vorteilhafte Ausgestaltungen dieser Klemmspange.

Besonders vorteilhafte Ausführungsformen sind in den **Patentansprüchen 70** bis **77** beschrieben. Diese Ausführungsformen lassen sich mit besonderem Vorteil bei der Herstellung von Bauteilen, insbesondere von Windkraftanlagen, einsetzen, bei denen die Schalung mit in die Berechnung einbezogen wird, also nicht als sogenannte 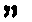 verlorene Schalung" gilt. Hinsichtlich der durch diese Patentansprüche erzielten vorteilhaften Eigenschaften und Wirkungen wird auf die dazu gemachten Ausführungen in der Zeichnungsbeschreibung verwiesen.

In den **Patentansprüchen 78** bis **86** sind weitere sehr vorteilhafte Ausführungsformen beschrieben. Hierbei wird von folgender Überlegung ausgegangen:

Bei den vorbeschriebenen Ausführungsbeispielen wurde davon ausgegangen, daß turmartige Gebäude, zum Beispiel Windkraftanlagen, in voller Höhe nach dem Sektor-Schalungssystem mit Betonkern aufgebaut wurden, bis auf den aufgesetzten Turmkopf in Stahlmantelkonstruktion.

Aus wirtschaftlichen Überlegungen könnte es allerdings zweckmäßiger sein, Stahlmanteltürme in der hier vorgesehenen Form bis etwa 40 Meter Höhe herzustellen und die Resthöhe nach dem vorbeschriebenen Verfahren zu vollenden, das heißt nach dem Sektor-Schalungssystem mit Betonkern.

Hierdurch lassen sich weitere wirtschaftliche bedeutende Vorteile erzielen.

In der Zeichnung ist die Erfindung - teils schematisch - beispielsweise veranschaulicht. Es zeigen:
- Fig. 1: eine Windkraftanlage in verschiedenen Ansichten;
- Fig. 2: eine aus einem Außen- und einem Innenschalungsrohrschuß bestehende Schalung gemäß der Erfindung, in anderem Maßstab;
- Fig. 3: die Anordnung von Zugelementen zum Spannen eines turmartigen Bauwerkes, teils im Schnitt;
- Fig. 4: einen eingebauten Abstandhalter für Innen- und Außenschalung aus Fig. 2, in größerem Maßstab, teils in der Ansicht;
- Fig. 5: eine Alternativlösung für Abstandhalter, ebenfalls in ausschnittsweiser Darstellung, teils abgebrochen dargestellt;
- Fig. 6: einen Vertikalstoß zwischen zwei aneinander anliegenden Sektoren eines Schalungsrohrschusses mit Klemmspange, teils abgebrochen, in der Draufsicht;
- Fig. 7: ein aus Außen- und Innenschalung bestehender Schalungssektor mit angedeuteter Längs- und Querbewehrung, Stoßlaschen und Flanschverschraubungen, teils abgebrochen dargestellt, in der Draufsicht;
- Fig. 8: einen Schalungssektor mit eingezeichneten Verstärkungen und Abstandhaltern für Innen- und Außenschalung;
- Fig. 9: den Anschluß eines Turmkopfes an die oberen Schalungsrohrschüsse der Innen- und Außenschalung sowie den Anschluß für die Gondel mit den Aggregaten für die Stromerzeugung;
- Fig. 10: eine Einzelheit aus Fig. 9, im größeren Maßstab, mit innen- und außenliegenden Bandagen;
- Fig. 11: einen Schnitt nach der Linie XI - XI der Fig. 10 mit Bandagen;
- Fig. 12: den Stoß der Bandagen am Turmkopf;
- Fig. 13: das Zuschneiden und Abkanten des Bleches für einen die Außenschalung bildenden Schalungskreisringsektor in der Seiten-, Stirnansicht und in der Untersicht,
- Fig. 14: das Anschweißen der bereits vorgefertigten und gebohrten Flansche, ebenfalls in drei verschiedenen Ansichten;
- Fig. 15: das Zuschneiden der Bleche für einen die Innenschalung bildenden Schalungskreisringsektor, ebenfalls in drei verschiedenen Ansichten;
- Fig. 16: das Anschweißen der bereits vorgefertigten und gebohrten Flansche;
- Fig. 17: das Anschweißen von Abstandhaltern an Schalungskreissektoren, die die Außenschalung bilden, ebenfalls in drei verschiedenen Ansichten;
- Fig. 18: das Einlegen der Längs- und Ringbewehrung, bei der Ausführungsform nach Fig. 17 für eine Außenschalung;
- Fig. 19: Beilegen von vertikalen und horizontalen Übergreiflängen zur Stoßüberdeckung bei der Außenschalung;
- Fig. 20: das Anbringen von Hüllrohren für die Zugelemente (Seile, Spannlitzen) an den Schalungsrohrschüssen, gleichfalls in drei verschiedenen Ansichten;
- Fig. 21: den Einbau der inneren Längs- und Ringbewehrung bei einem zur Innenschalung dienenden Schalungsringsektor, gleichfalls in drei Ansichten;
- Fig. 22: das Beilegen der Übergreiflängen für die Stoßüberdeckung der Längs- und Ringbewehrung an den vertikalen Stößen und im Bereich der unteren Flansche der horizontalen Stöße bei dem aus Fig. 21 ersichtlichen Schalungsringsektor;
- Fig. 23: das Anschweißen von Verstärkungen an einem Sektor der Innenschalung, gleichfalls in drei Darstellungen;
- Fig. 24: das Anschweißen von Gegenhaltern bei dem aus Fig. 23 ersichtlichen Schalungsringsektor;
- Fig. 25: das Zusammenstellen der Schalungsringsektoren der Innenschalung und das Verbinden der vertikalen Stöße;
- Fig. 26: einen Schalungsrohrinnenschuß in der Untersicht;
- Fig. 27: das Zusammenfügen von Schalungsringsektoren der Außenschalung;
- Fig. 28: eine Untersicht auf einen die Außenschalung bildenden Schalungsrohrschuß;
- Fig. 29: zwei Schalungsrohrschüsse der Außen- und der Innenschalung zu einem die Doppelschalung bildenden Rohrschuß, übereinandergestülpt;
- Fig. 30: Montagezustand vor dem Aufsetzen eines Schalungsringschusses mit Übergreiflängen für die Stoßüberdeckung und eine zusätzliche Ringbewehrung, werkseitig eingebaut;
- Fig. 31: Montagezustand nach dem Aufsetzen des Schalungsringschusses gemäß Fig. 29 und nach dem Verschrauben, wobei die Übergreiflängen für die Stoßüberdeckungen in die richtige Position gerückt wurden (schematisch übertrieben dargestellt) und die Fenster, die diese Arbeiten ermöglichen, bereits wieder geschlossen;
- Fig. 32: einen Abstandhalter für Bewehrung in der Seitenansicht;
- Fig. 33: eine Seitenansicht zu Fig. 32;
- Fig. 34: eine ausschnittsweise Darstellung aus zwei aneinander liegenden Sektoren eines Schalungsrohrschusses mit Klemmspangen einer anderen Ausführungsform, teils abgebrochen dargestellt, teils in der Draufsicht, teils im Schnitt;
- Fig. 35: das Zuschneiden der Bleche für einen die Innenschalung bildenden Schalungskreisringsektor in der Untersicht;
- Fig. 36: eine Ansicht zur Fig. 35;
- Fig. 37: das Anschweißen der bereits vorgefertigten und gegebenenfalls gebohrten Flansche in der Ansicht;
- Fig. 38: eine Seitenansicht zu Fig. 37;
- Fig. 39: eine Untersicht zur Fig. 37;
- Fig. 40: das aus Fig. 36 ersichtliche Blech nach dem Anschweißen von Kopfbolzen, in Ansicht;
- Fig. 41: Ansicht eines Bleches für einen Schalungskreisringsektor mit bereits angeschweißten Flanschen und durchgehenden Stoßflacheisen für die vertikalen Stöße zwischen den einzelnen Schalungskreisringsektoren;
- Fig. 42: eine Seitenansicht zur Fig. 41;
- Fig. 43: der aus Fig. 41 und 42 ersichtliche Schalungsringsektor der Innenschalung nach dem Anschweißen von Verstärkungen auf der dem Beton abgewandten Seite;
- Fig. 44: eine Seitenansicht zu Fig. 43;
- Fig. 45: einen Fachwerkverbinder angeschweißt an die Außenschalung für die spätere Verbindung zwischen Außenschalung und Innenschalung in der Ansicht;
- Fig. 46: eine Seitenansicht zur Fig. 45;
- Fig. 47: eine Ansicht auf einen Schalungsringsektor der Außenschalung mit kompletter Bewehrung, bestehend aus innerer und äußerer Längs- und Ringbewehrung im Abstand von ca. 90 mm von der Schale eingehängt sowie Beilegen der Übergreiflänge für die horizontalen und vertikalen Stöße;
- Fig. 48: eine Seitenansicht zur Fig. 47;
- Fig. 49: einen Schalungsrohrschuß der Außenschalung in der Draufsicht;
- Fig. 50: einen aus Außen- und Innenschalung bestehenden Schalungsrohrschuß, in der Draufsicht;
- Fig. 51: die Verbindung des letzten Innenschalungsringsektors, in der Draufsicht;
- Fig. 52: einen Fachwerkverbinder in der Seitenansicht;
- Fig. 53: einen Schnitt nach der Linie B - B der Fig. 54, ebenfalls in der Seitenansicht und in größerem Maßstab, mit einem Teil der Außen- und Innenschalung; teils abgebrochen dargestellt, teils im Längsschnitt, und
- Fig. 54: einen Schnitt nach der Linie A - A der Fig. 53;
- Fig. 55: den Aufbau eines turmartigen Bauwerkes für eine Windkraftanlage mittels einer statisch mittragenden Schalung;
- Fig. 56: eine weitere Ausführungsform der Erfindung;
- Fig. 57: abermals eine weitere Ausführungsform der Erfindung;
- Fig. 58: eine weitere Ausführungsform der Erfindung und
- Fig. 59: ein weiteres turmartiges Bauwerk, in der Seitenansicht.

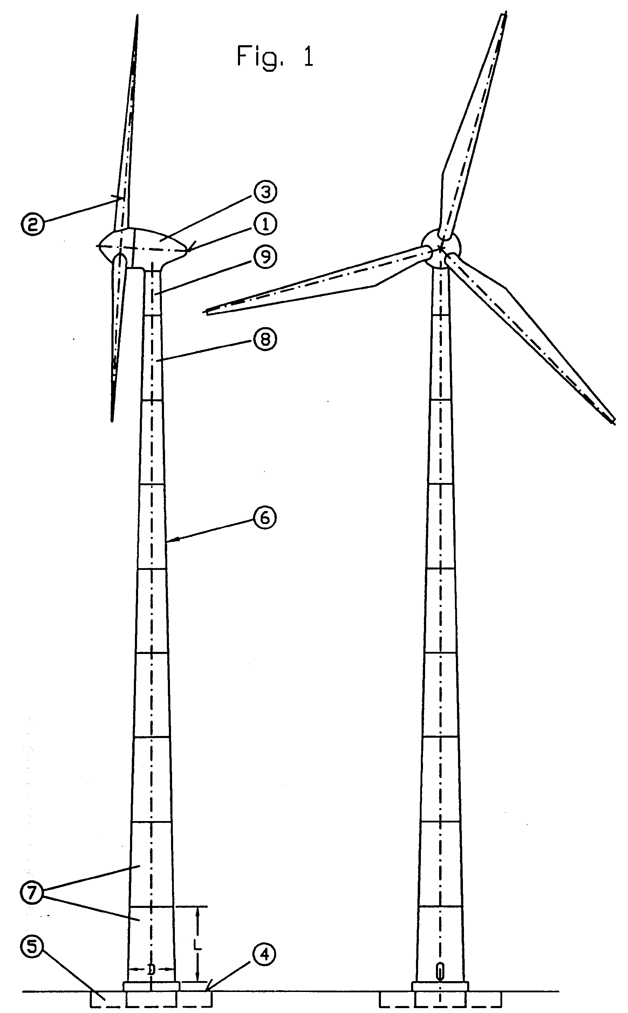

In der Zeichnung ist die Erfindung in Anwendung auf die Herstellung eines turmartigen Bauwerkes für ein Windkraftwerk dargestellt. Heutzutage werden Windkraftwerke konzipiert, die von der Oberkante 4 des Erdbodens oder eines Fundaments 5 aus Beton bis zu einer in einer Gondel 3 gelagerten fast horizontalen Drehachse 1 für einen Rotor 2 eine Höhe von zweihundert Metern und mehr aufweisen können. Das aus Fig. 1 ersichtliche Bauwerk 6 eines Windkraftwerkes ist zum Beispiel 98 Meter hoch, gemessen vom Erdboden 4. Bei großen Windkraftanlagen kann der Rotor 2 einen Durchmesser von 50 Metern und mehr aufweisen.

Das Bauwerk 6 besteht bei der dargestellten Ausführungsform aus insgesamt sieben koaxial zueinander angeordneten Bauwerkteilen 7, zusätzlich ein Bauwerkteil 8 und dem Turmkopf 9. Möglich wären aber z. B. auch vier Bauwerkteile 7, zusätzlich ein Bauwerkteil 8 und der Turmkopf 9, bestehend aus zwei Teilen, die nach oben hin sich z. B. konisch verjüngen. Die Länge der übereinander angeordneten Bauwerkteile 7 kann gleich, aber auch unterschiedlich bemessen sein, zum Beispiel mit zunehmender Höhe größer werden. Bei der dargestellten Ausführungsform ist die Länge L aller Bauwerkteile 7 gleich groß und beträgt zum Beispiel zwölf Meter.

Des weiteren ist jedes Bauwerkteil 7, 8 und 9 an seiner äußeren Peripherie kreisrund ausgebildet. Der untere äußere Durchmesser des untersten Bauwerkteiles 7 kann zum Beispiel 6,40 Meter betragen. Es ist auch möglich, einen anderen Durchmesser, zum Beispiel einen polygonförmigen Durchmesser für die Bauwerkteile 7, 8 und 9 zu wählen, jedoch muß Bauwerkteil 9 oben wieder kreisrund sein.

Die Fig. 1 läßt außerdem erkennen, daß die einzelnen Bauwerkteile 7 mit ihrem jeweils größeren Durchmesser auf die obere Seite des jeweils darunter liegenden Bauwerkteiles 7, also auf den kleineren Durchmesser des jeweils unten liegenden Bauwerkteils 7 aufgesetzt sind, derart, daß alle Bauwerkteile 7 mit ihrer äußeren Mantelfläche fluchten und sich ein glattes durchgehendes Äußeres ergibt. Die gleiche Aussage gilt für die Bauwerkteile 8 und 9.

Auf dem oben liegenden Bauwerkteil 8 ist ein Turmkopf 9 befestigt, dessen Ausbildung und Anordnung weiter unten im einzelnen beschrieben wird. Die Gondel 3 kann zum Beispiel Quer- und Längsabmessungen von sechs mal vier Meter aufweisen, und mit dem in ihr befindlichen Generator und gegebenenfalls Getriebe sowie dem Gewicht des Rotors 2 viele Tonnen, zum Beispiel 80 Tonnen, wiegen.

Selbstverständlich variieren diese Abmessungen und Gewichte je nach Ausführungsform. Die vorstehenden Angaben dienen lediglich zur Information und als Beispielsangaben, so daß die Erfindung darauf nicht beschränkt ist.

Die einzelnen Bauwerkteile 7 weisen eine jeweils innen und außen liegende, vorliegend aus Stahl bestehende, verlorene Schalung auf die aus einer Außenschalung 10 und einer Innenschalung 11 besteht. Außen- und Innenschalung 10 bzw. 11 sind ebenfalls konisch entsprechend dem Verlauf der Bauwerkteile 7 ausgebildet, da die Außenmantelfläche 12 der Außenschalung 10 auch die Außenmantelfläche des entsprechenden Bauwerkteils 7 bildet. Die Außenmantelfläche 12 kann nach entsprechender Behandlung mit einer geeigneten Schutzschicht, zum Beispiel mit einer wetterfesten, mehrschichtigen Lackschicht, versehen sein (nicht dargestellt).

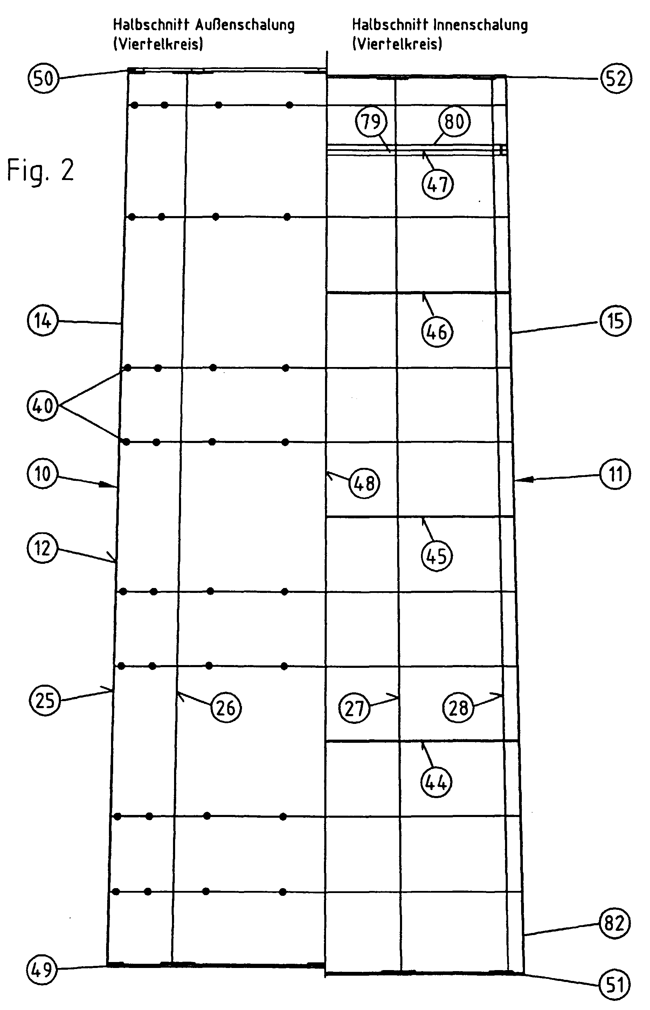

Wie man aus Fig. 2 erkennt, sind die Außen- und Innenschalung koaxial ineinander angeordnet, derart, daß zwischen Außen- und Innenschalung ein radialer Spalt oder Raum 13 verbleibt, der in der noch zu beschreibenden Art und Weise mit Beton ausgefüllt wird.

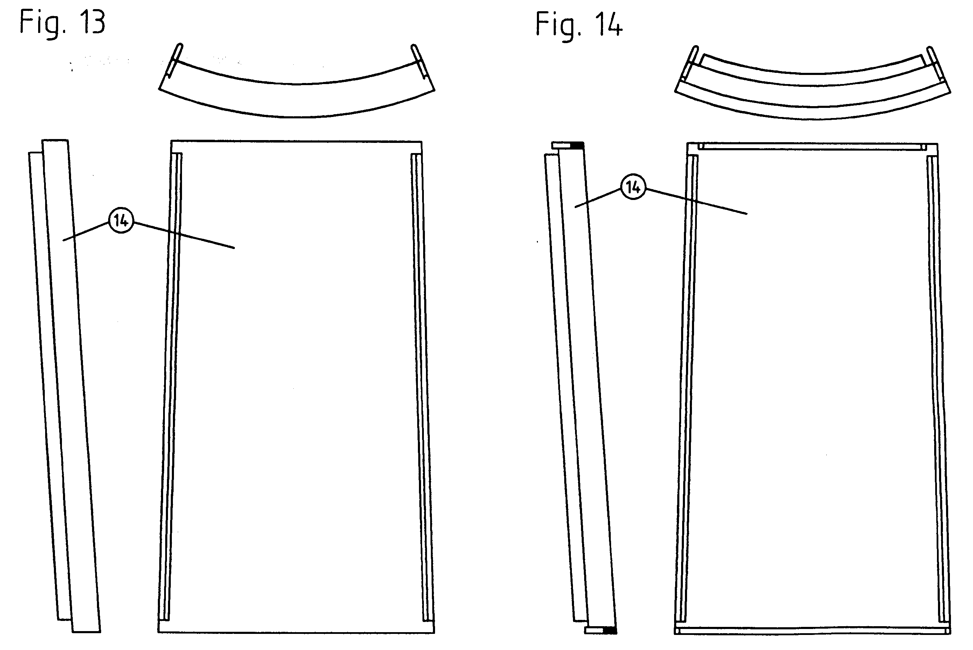

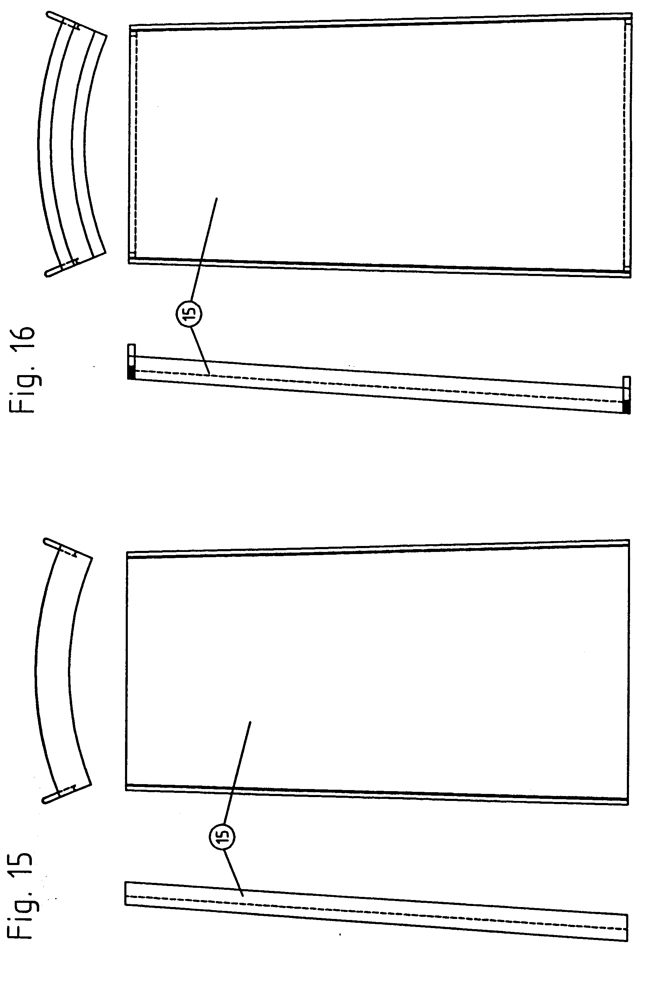

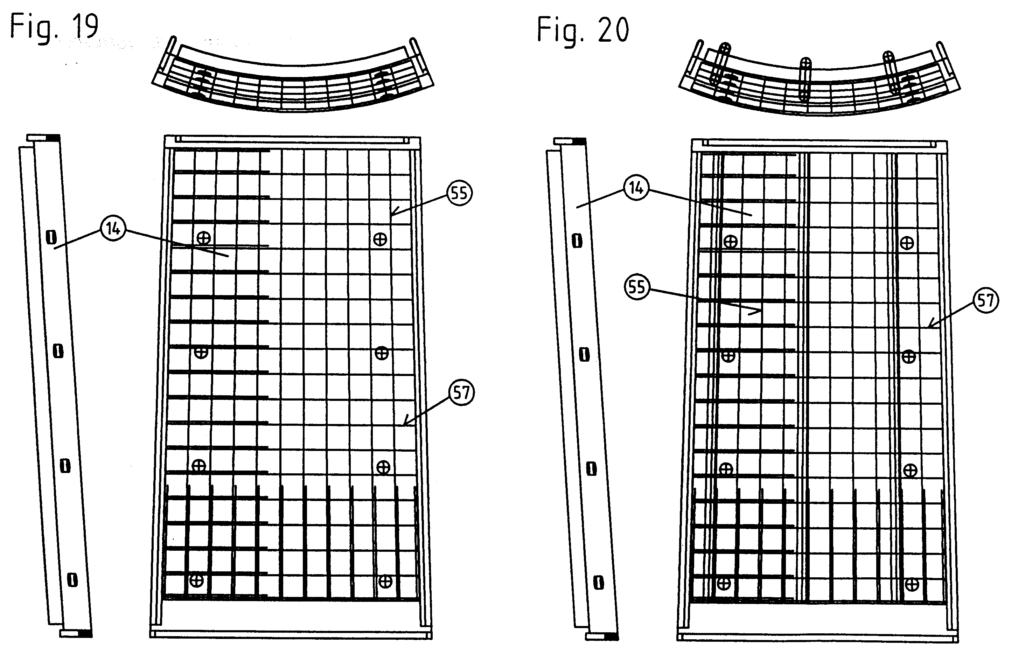

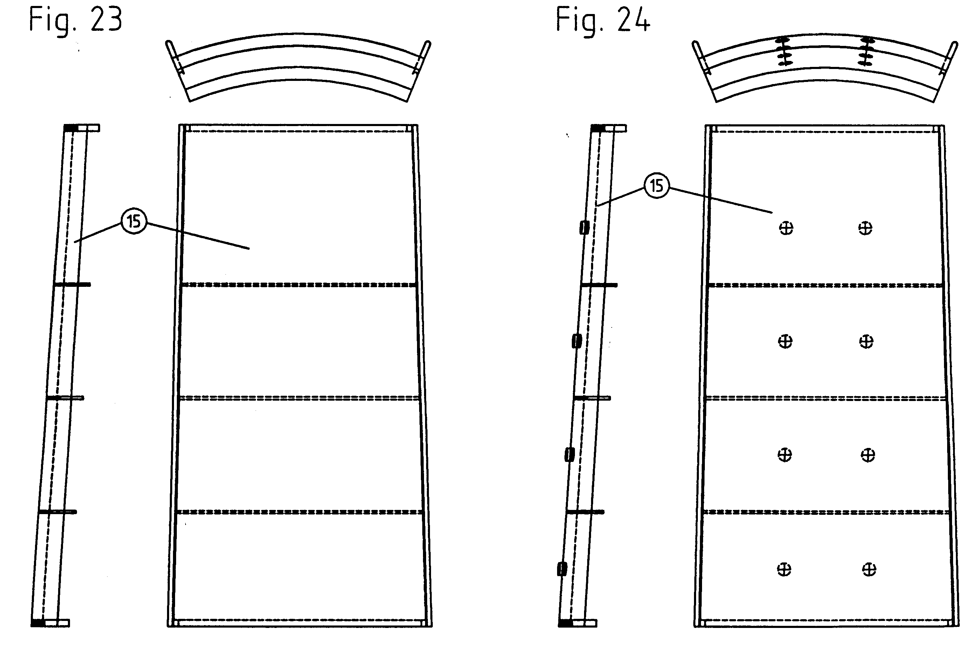

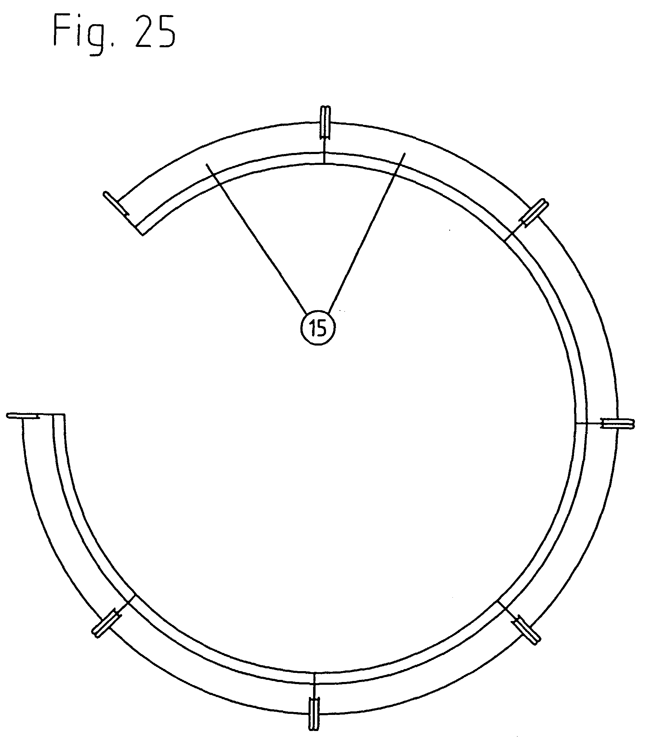

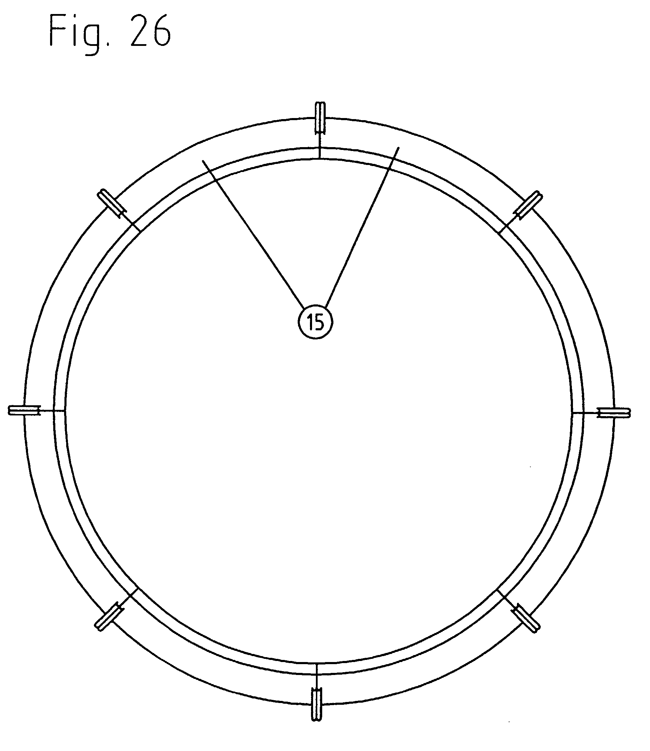

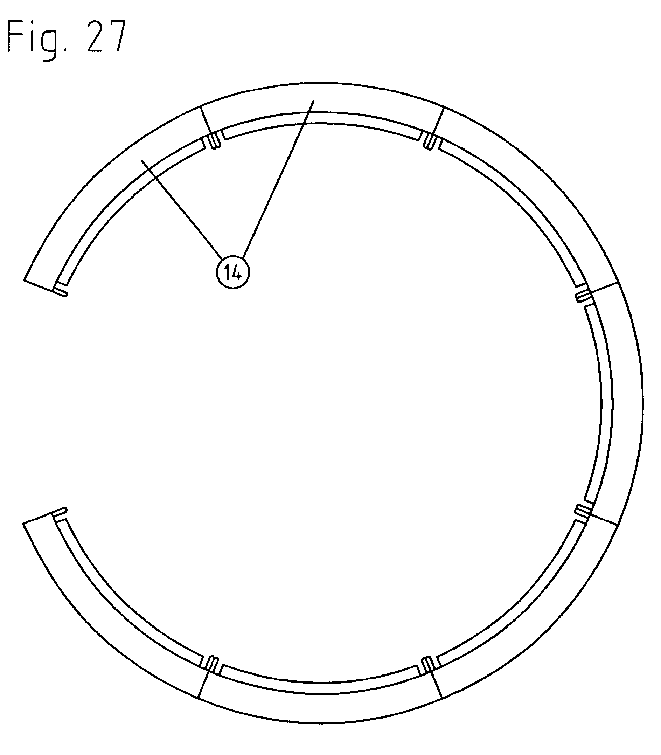

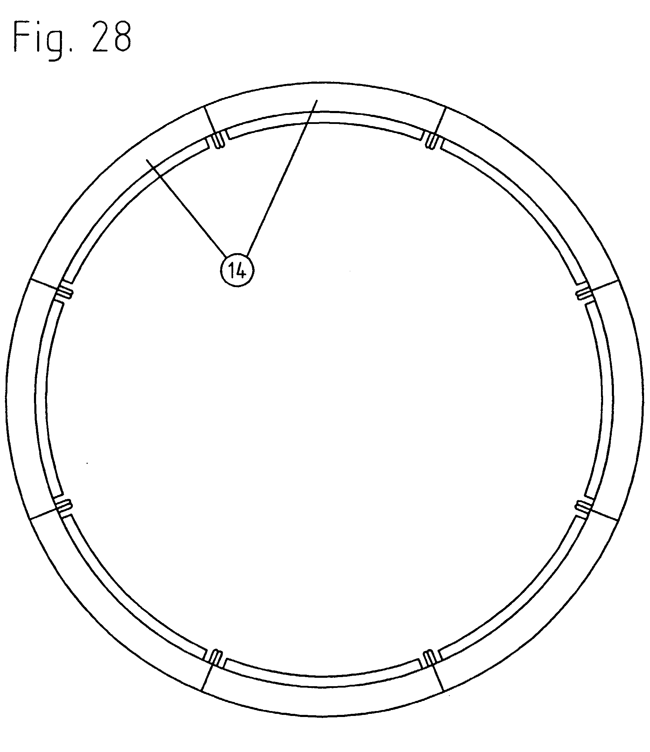

Außen- und Innenschalung 10 bzw. 11 erstrecken sich somit über die Abmessungen eines Bauwerkteils 7, wobei der Spalt bzw. Raum 13 die Wanddicke für den Beton bestimmt. Die Außenschalung 10 und die Innenschalung 11 bilden Schalungsrohrschüsse, die ineinander gesteckt sind. Jeder Schalungsrohrschuß der Außenschalung 10 und der Innenschalung 11 ist aus mehreren Schalungsringsektoren zusammengesetzt. Diese Schalungsringsektoren sind für die Außenschalung mit dem Bezugszeichen 14 und für die Innenschalung mit dem Bezugszeichen 15 bezeichnet. Jeweils mehrere dieser Schalungsringsektoren bilden einen Schalungsrohrschuß der Außenschalung 10 bzw. einen Schalungsrohrschuß der Innenschalung 11. Bei den aus den Fig. 13 bis 28 ersichtlichen Ausführungsformen sind die Schalungsrohrschüsse der Außenschalung 10 und der Innenschalung 11 jeweils aus acht Schalungsringsektoren zusammengesetzt, die sich jeweils zur Kreisform - in einem orthogonal zur Längsachse der Schalungsrohrschüsse geführten Schnitt gesehen - ergänzen und die konischen Schalungsrohrschüsse bilden, bei anderen Durchmessern der Rohrschüsse kann sich die Anzahl verkleinern oder vergrößern.

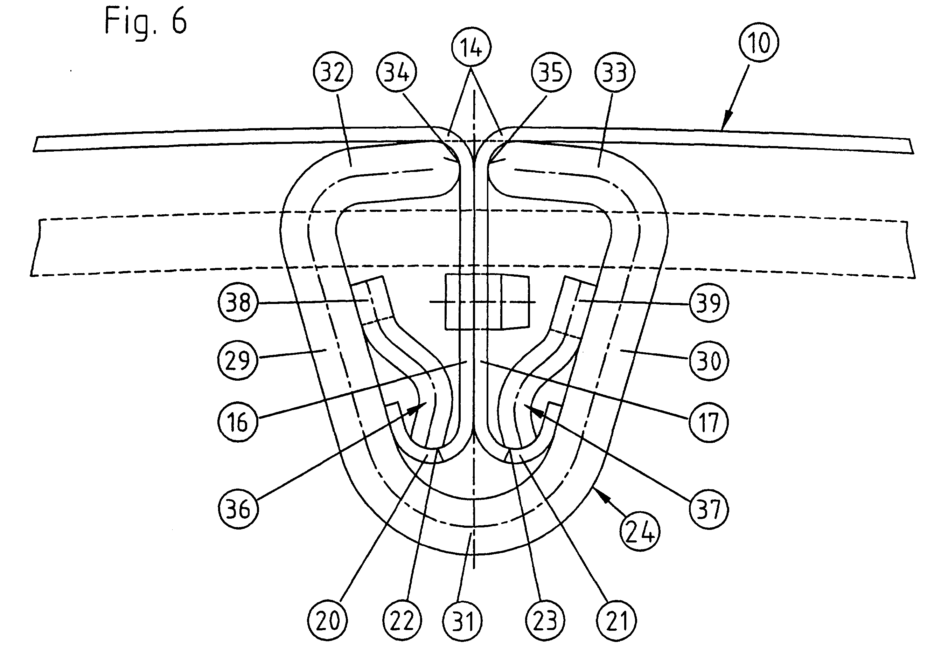

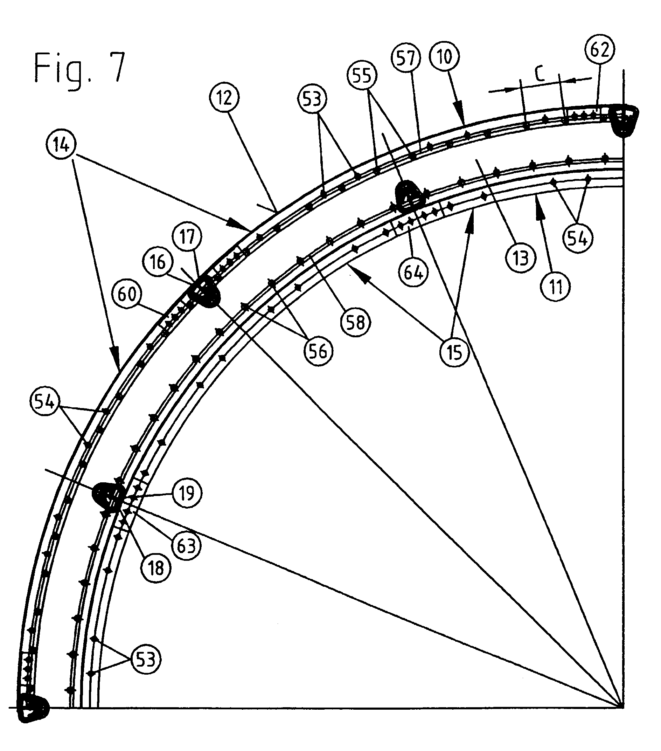

Sowohl die Schalungsringsektoren 14 der Außenschalung 10 als auch die Schalungsringsektoren 15 der Innenschalung 11 weisen an ihren Endabschnitten jeweils einwärts radial verlaufende Vorsprünge, Schultern oder dergleichen 16, 17 (Fig. 6) bzw. 18, 19 (Fig. 7) auf. Die Vorsprünge 16, 17 bzw. 18, 19 sind in Bezug auf den radialen Spalt oder Raum 13 gegeneinander gerichtet, was bedeutet, daß die Vorsprünge 16 und 17 des die Außenschalung 10 bildenden jeweiligen Schalungsrohrschusses nach innen gerichtet sind, während die Vorsprünge 18 und 19 nach außen gerichtet angeordnet sind (Fig. 7), so daß die Vorsprünge 16 und 17 bzw. 18 und 19 jeweils in den mit Beton zu verfüllenden Raum 13 zu liegen kommen. Die Vorsprünge 16 und 17 sowie 18 und 19 können sich jeweils über die gesamte Länge des betreffenden Schalungsringsektors erstrecken, verlaufen also demgemäß über die gesamte Länge L eines Schalungsrohrschusses. Sie können sich aber auch nur über einen etwas geringeren Teil erstrecken.

Wie man aus Fig. 6 besonders deutlich erkennt, liegen die Vorsprünge 16 und 17 mit dem größten Teil ihrer radialen Länge flächig aufeinander. Entsprechendes gilt auch für die Vorsprünge 18 und 19 der Innenschalung 11.

An ihren freien Enden sind die Vorsprünge 16 und 17 gemäß Fig. 6 nach einem relativ großen Biegeradius voneinander weggekröpft und annähernd in die entgegengesetzte Richtung gebogen. Der Biegewinkel kann zum Beispiel 110 bis 150, vorzugsweise etwa 135 Grad betragen, so daß die freien Endabschnitte 20 und 21 Lager- und Arretiertaschen 22 bzw. 23 bilden. Die Vorsprünge der Innenschalung 11 sind entsprechend ausgebildet.

Wie man aus Fig. 6 erkennt, ist über den Vertikalstoß zweier aneinander angrenzender Schalungsringsektoren 14 der Außenschalung 10 mindestens eine Klemmspange 24 angeordnet, die in der aus Fig. 6 ersichtlichen Draufsicht eine etwa dreieckförmige Gestalt aufweist und in Richtung des Vertikalstoßes leistenförmig verläuft. Bei der aus der Zeichnung ersichtlichen Ausführungsform ist die Länge jeder Klemmspange 24 geringer bemessen als die Länge L eines Vertikalstoßes zwischen zwei aneinander angrenzenden Schalungsringsektoren der Außenschalung 10 oder der Innenschalung 11. Zum Beispiel kann die Länge einer Klemmspange 24 drei Meter betragen, während die Länge L eines Schalungsrohrschusses 12 Meter in diesem Falle beträgt. Übereinander, also in Längsachsrichtung eines Vertikalstoßes sind demgemäß vier derartige Klemmspangen 24 angeordnet, die mit ihren Stirnseiten flächig gegeneinander liegen. Verschiedene Vertikalstöße sind in Fig. 2 mit gestrichelten Linien angedeutet und mit den Bezugszeichen 25, 26, 27 und 28 bezeichnet. Die übrigen Vertikalstöße sind aus dieser Figur nicht zu erkennen. Alle diese Vertikalstöße, und zwar sowohl für Außenschalung 10 als auch für Innenschalung 11 weisen derartige Klemmspangen 24 auf, was aus Gründen der Vereinfachung nicht dargestellt ist.

Die Klemmspangen 24 bestehen bei der dargestellten Ausführungsform aus Federstahl und besitzen zwei Federschenkel 29, 30, die an ihren dem jeweiligen Schalungsrohrschuß abgewandten Ende durch einen Federbogen 31 materialmäßig einstückig miteinander verbunden sind.

Die Endabschnitte der Federschenkel 29 bzw. 30 weisen jeweils einen Klemmschenkel 32 bzw. 33 auf, die zwischen sich die Vorsprünge 16 bzw. 17 der Außenschalung 10 mit großer Kraft federelastisch ergreifen. Entsprechendes gilt auch für die Innenschalung 11. Die Klemmschenkel 32 und 33 sind an ihren einander zugekehrten Stirnseiten getrennt und ballig ausgebildet. Im entspannten Zustand liegen diese balligen Stirnseiten 34 und 35 mit großer Kraft gegeneinander und müssen mit einem speziellen Werkzeug, in der Regel hydraulisch, aufgeweitet, also voneinander wegbewegt werden, um über die Vorsprünge 16 und 17 geschoben zu werden. Sie können auch jeweils einseitig am Anfang keilförmig an den Ballungen ausgebildet sein und werden bei Anwendung von entsprechenden Gleitmitteln hydraulisch oder mit anderen technischen Mitteln auf die Vorsprünge 16, 17 oder 18, 19 gepreßt oder gerammt. Dann wird das entsprechende Werkzeug (nicht dargestellt) entspannt, woraufhin die Federschenkel 29 und 30 die Klemmschenkel 32 und 33 mit großer Kraft gegen die Oberflächen der miteinander zu verklammernden Vorsprünge 16 und 17 der zugeordneten Schalungsringsektoren, beispielsweise 14, anpressen. Die Klemmspangen 24 weisen außerdem an ihren einander zugekehrten Innenseiten der Federschenkel 29 und 30 je einen durchgehenden Lager- und Arretieransatz 36 bzw. 37 auf (Fig. 6). Jedes der Lageransätze 36 bzw. 37 besitzt einen Abschnitt 38 bzw. 39, der mit dem betreffenden Federschenkel 29 bzw. 30 fest, und zwar entweder materialmäßig einstückig oder durch Schweißen, verbunden ist. Das freie Ende jedes Lager- und Arretieransatzes 36 bzw. 37 ist aus der Ebene der inneren Wandung des betreffenden Federschenkels 29 bzw. 30 in Richtung auf den Vorsprung 16 bzw. 17 um einen spitzen Winkel herausgebogen und anschließend wiederum um einen stumpfen Winkel in Richtung auf den zugehörigen Federschenkel 29 bzw. 30 sanft abgekröpft. Die freien Enden der Lager- und Arretierungsschenkel 36 und 37 greifen in die zugeordnete Lager- bzw. Arretiertasche 22 bzw. 23 des betreffenden Vorsprunges 16 bzw. 17 und liegen mit ihren freien, ebenfalls ballig ausgeführten Enden in den Lager- bzw. Arretiertaschen 22 bzw. 23. Dadurch ergibt sich für die Klemmspange eine abrutschsichere Halterung und kraftschlüssige Verbindung.

Aus Fig. 6 ist außerdem zu erkennen, daß die Klemmschenkel 32 und 33 mit ihren balligen Stirnseiten 34 und 35 unmittelbar gegen die Innenseite der Schalungsringsektoren anliegen. Entsprechendes gilt auch für die Schalungsringsektoren der Innenschalung 11. Ein Wegrutschen in radialer Richtung ist ausgeschlossen, da hieran die Klemmspangen durch Abstützen mit ihren Lager- und Arretieransätzen 36 und 37 in den Lager- und Arretiertaschen 22 bzw. 23 gehindert sind.

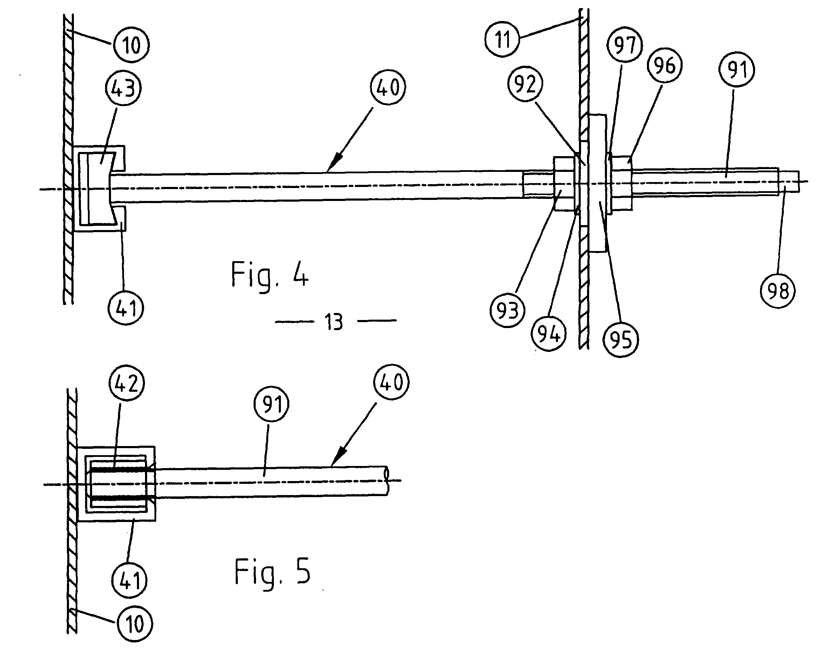

Jedem Schalungsrohrschuß ist eine Mehrzahl von in Längsachsrichtung des betreffenden Schalungsrohrschusses und in Umfangsrichtung gleichmäßig verteilt angeordneter Abstandhalter 40 zugeordnet. Zum Beispiel kann die Anzahl der Abstandhalter 40 für jedes Bauwerkteil 7, also pro Schalungsrohrschuß, gebildet aus Außenschalung 10 und Innenschalung 11 mehr als 60 Stück, vorzugsweise sogar mehr als 100 Stück, betragen. Diese Abstandhalter 40 können mehrteilig (Fig. 4) ausgebildet sein.

Bei einer Ausführungsform können mit dem jeweiligen Schalungsrohrschuß der Außenschalung 10 im Querschnitt etwa U-förmige Eisen 41 (Fig. 4 und 5) verbunden sein, die bei beiden aus den Fig. 4 und 5 ersichtlichen verschiedenen Ausführungsformen mit hakenförmigen Vorsprüngen versehen sind, die bei der Ausführungsform nach Fig. 4 hinter einen formmäßig entsprechend angepaßten hammerförmigen Kopf 43 und bei der Ausführungsform nach Fig. 5 hinter einen im Querschnitt quadratischen Kopf 42 greift, damit sich dieser nicht verdrehen kann.

Bei der Ausführungsform nach Fig. 4 geschieht der Formschluß durch keilförmig aneinander anliegende Flächen des etwa U-förmigen Eisens 41 andererseits und des hammerförmigen Kopfes 43 andererseits.

Sowohl der hammerförmige Kopf 43 bei der Ausführungsform nach Fig. 4 als auch der im Querschnitt quadratische oder annähernd quadratische Kopf 42 der Ausführungsform nach Fig. 5 werden nach einer entsprechenden Drehung um ihre Längsachse durch den Schlitz des U-Eisens 41 eingeführt und anschließend um 90 bzw. bis zum Anschlag Grad gedreht, woraufhin die formschlüssige Verbindung zwischen dem U-Eisen 41 und dem betreffenden Kopf 42 bzw. 43 erfolgt.

Die U-Eisen 41 sind jeweils mit der Innenseite des zugehörigen Schalungsrohrschusses der Außenschalung durch Schweißen verbunden.

Wie aus den Fig. 4 und 5 hervorgeht, ist mit jedem Kopf 42 bzw. 43 ein zylindrischer Bolzen 91 verbunden und durch eine Öffnung 92 der Innenschalung 11 gesteckt, wobei der korrekte Abstand des Kopfes 42 oder 43 zu seinem zugehörigen U-Eisen 41 einerseits und zur Innenschalung 11 andererseits durch eine Kontermutter 93 eingestellt wird, die sich an der abgesetzt hervorstehenden Fläche der auf der gegenüberliegenden Seite liegenden Platte 95 größerer Querabmessungen und dadurch die Öffnung 92 überdeckend bündig mit der Außenseite der Innenschalung 11 vorzugsweise über eine Unterlegscheibe 94 abstützt, nachdem durch die betreffende Öffnung Kopf 42 oder 43 bei der Montage hindurchgeführt worden ist. Festgespannt werden die Abstandhalter 40 über eine auf der Innenseite der Innenschalung 11 angeordnete weitere Mutter 96, die sich über eine Unterlegscheibe 97 gegen die Platte 95 abstützt. Das freie Ende des Bolzens 91 ragt in den Innenraum der Innenschalung 11, das an seinem freien Ende mit einem Vierkant 98 versehen ist, um beim Aufschrauben der Muttern 93 und 96 mittels eines Schraubenschlüssels oder dergleichen den Bolzen 91 durch Aufsetzen des Schraubenschlüssels auf den Vierkant 98 arretieren zu können.

Wie aus Fig. 4 und 5 zu ersehen ist, überbrücken die Abstandhalter 40 jeweils den radialen Spalt bzw. Raum 13 und sind später bis auf die freien, in den Innenraum der Innenschalung 11 hineinragenden Abschnitte des Bolzens 91 vom Beton umschlossen.

Über die Höhe des Schalungsrohrschusses der Innenschalung 11 gleichmäßig verteilt sind Verstärkungen 44, 45 und 46 angeordnet. Diese Verstärkungen 44 bis 46 können orthogonal zur Längsachse der Innenschalung 11 verlaufen und z. B. aus mehreren Trägern, zum Beispiel U-Eisen, Flacheisen, Winkeln oder Doppel-T-Trägern, bestehen. Die Verstärkungen 44 bis 46 sind auf der Beton abgewandten Seite sowohl mit den entsprechenden Schalungsringsektoren 15 der Innenschalung 11, als auch mit den Stoßflacheisen 110 - 113, fest, beispielsweise durch Schweißen, Verschraubungen oder dergleichen, verbunden oder werden bei der Ausführung mit im Raum 13 liegenden Verbindungen der vertikalen Stöße mit Klemmspangen, mit Stoßlaschen und Schraub-, Schweißverbindungen kraftschlüssig verbunden. Mit 48 ist eine Turmachse bezeichnet. Jede Verstärkung 44 bis 46 kann aus parallel zueinander verlaufenden umfangsseitig oder spiralförmig angeordneten Trägern, bestehen, die entsprechend dem Durchmesser der Innenschalung 11 somit unterschiedlich lang sind, um die Verstärkung, beispielsweise 44, in der entsprechenden Höhenlage zu bilden. Außer in der Höhe der Podeste brauchen für die Verstärkung derartige Träger oder dergleichen nicht vorgesehen zu sein. Hier genügt es, die Konstruktion 79, 80 und 47 für die Podeste als Verstärkung heranzuziehen.

Wie insbesondere deutlich aus Fig. 2 zu erkennen ist, weist sowohl der Schalungsrohrschuß der Außenschalung 10 als auch der Schalungsrohrschuß der Innenschalung 11 an den Stirnseiten jeweils einen umlaufenden Flansch 49, 50 bzw. 51, 52 auf. Die Flansche 49 bzw. 50 werden jeweils durch Einzelflansche gebildet, die an den entsprechenden Schalungsringsektoren angeordnet sind, die die Außenschalung 10 bzw. die Innenschalung 11 bilden (Fig. 13 bis 28). Über die Flansche 49 bzw. 50 lassen sich jeweils die Schalungsrohrschüsse der Außenschalung 10 und über die Flansche 51 bzw. 52 die Schalungsrohrschüsse der Innenschalung 11 unter Zuhilfenahme der entsprechenden Stoßlaschen koaxial miteinander verbinden, was durch Schrauben geschieht, die durch in den Flanschen angeordnete Schraubenlöcher hindurchgesteckt werden.

Einige der zur Verschraubung dienenden Bohrungen sind mit den Bezugszeichen 53 bzw. 54 bezeichnet.

Durch die Bohrungen 53, 54 der jeweils aufeinanderliegenden Flansche, zum Beispiel 49 und 50, werden Schraubbolzen hindurchgesteckt und durch Muttern arretiert, um die Schalungsrohrschüsse fest miteinander zu verbinden.

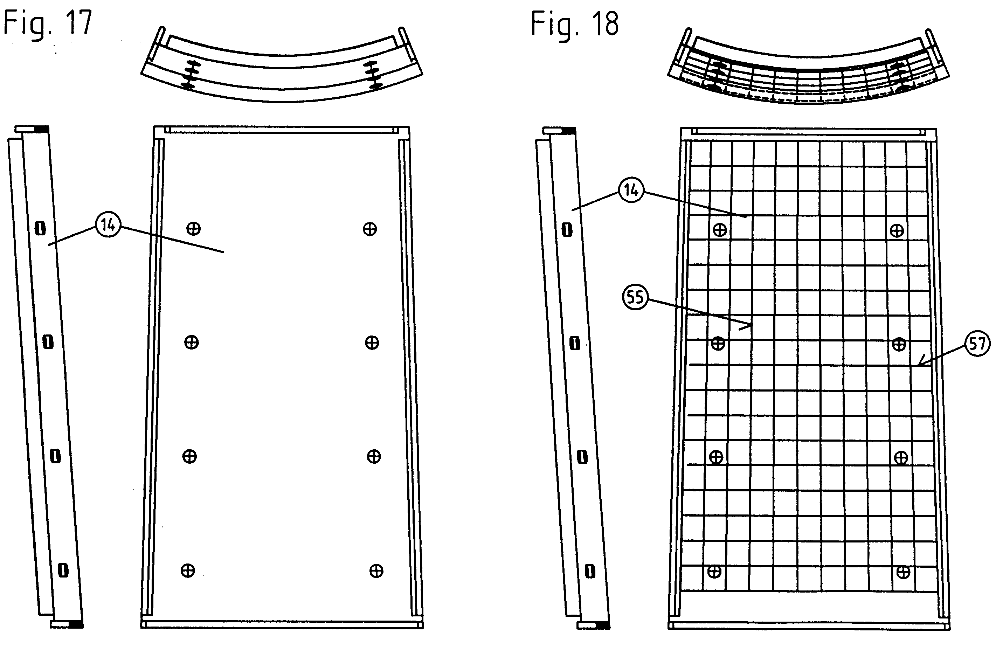

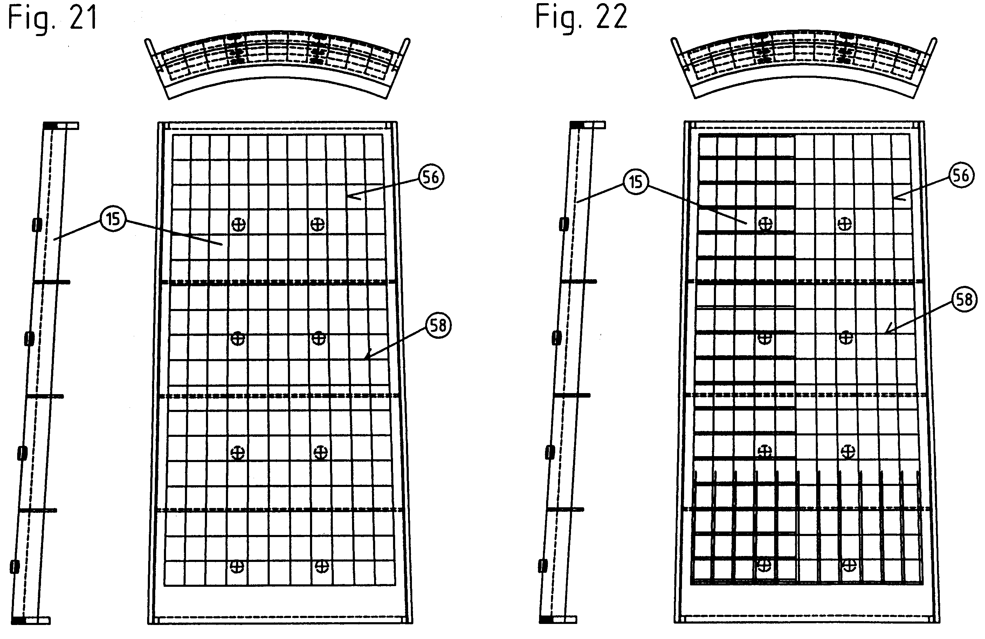

Die Längsbewehrung der Außenschalung 10 ist mit 55 bezeichnet, während die Längsbewehrung der Innenschalung 11 mit 56 bezeichnet ist. Beide Längsbewehrungen 55 und 56 bestehen aus einer Vielzahl von im wesentlichen parallel und mit Abstand zueinander über den Umfang der Außen- und Innenschalung 10 bzw. 11 angeordneten Stahlstäben, von denen einige zum Beispiel aus den Fig. 18, 19 und 20 zu erkennen sind. Die Längsbewehrung 56 der Innenschalung 11 ist zum Beispiel aus den Fig. 21 und 22 zu ersehen. Die Längsbewehrungen 55 und 56 können mittels Rödeldraht, Haltern oder dergleichen mit den entsprechenden Schalungsrohrschüssen der Außenschalung 10 bzw. der Innenschalung 11 verbunden werden.

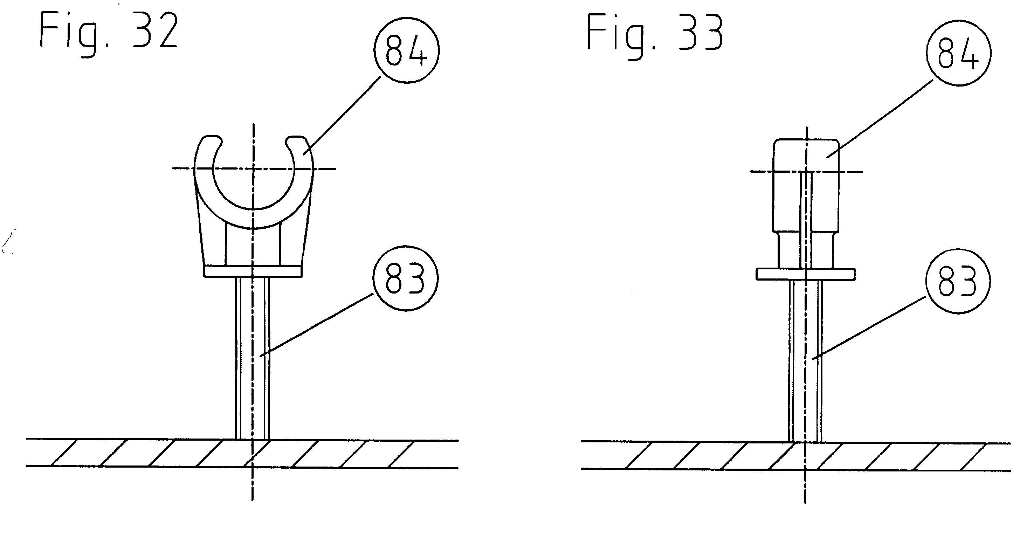

In den Fig. 32 und 33 ist eine Verlegehilfe für die Ring- und Längsbewehrung dargestellt. Diese Verlegehilfen sind sowohl an der Innenwand der Außenschalung 10 als auch an der Innenwand der Innenschalung 11 angeordnet und mittels Punktschweißung befestigt.

Die Verlegehilfen bestehen aus einem bolzenförmigen Teil 83, das mit der jeweiligen Innenwandung durch Punktschweißen fest verbunden ist. Das bolzenförmige Teil 83 ist außerdem mit Gewinde versehen, auf das eine Klammer 84 aus Metall oder Kunststoff angeordnet ist. Durch mehr oder weniger weites Aufschrauben der Klammer 84 auf dem bolzenförmigen Teil 83 kann der Abstand zu der betreffenden Wandung des Schalungsrohrschusses genau eingestellt werden. Bei der dargestellten Ausführungsform ist für die Ringbewehrungen allerdings ein bolzenförmiger Teil mit geringerer Länge als für die Längsbewehrung vorgesehen. Es steht jedoch nichts im Wege, die bolzenförmigen Teile 83 jeweils so lang auszubilden, daß sie mit ein- und derselben Länge für alle bolzenförmigen Teile 83 verwendet werden können.

In die Klammern 84 werden die jeweiligen Bewehrungen eingelegt und durch die Spannkraft fixiert.

Quer zu den Längsbewehrungen 55 und 56 ist eine Ringbewehrung 57 (Außenschalung 10) bzw. 58 (Innenschalung 11) angeordnet. Die Ringbewehrungen 57 und 58 bestehen bei jedem der Schalungsrohrschüsse der Außen- und Innenschalung 10 bzw. 11 ebenfalls aus einer Mehrzahl von mit Abstand zueinander angeordneten, die Längsachsen der Längsbewehrungen 55 und 56 quer bzw. orthogonal schneidenden Stahlstäben, die zum Beispiel durch Halter oder Rödeldraht, mit den zugeordneten Längsbewehrungen 55 oder 56 verbunden sind. Statt dessen können aber auch die aus den Fig. 32 und 33 ersichtlichen Verlegehilfen verwendet werden, wie sie oben beschrieben sind.

Auf diese Weise werden die Schalungsringsektoren 14 der Außenschalung 10 und die Schalungsringsektoren 15 der Innenschalung 11 fabrikseitig mit den Längsbewehrungen 55 und den Ringbewehrungen 57 vorgefertigt, so daß beim Zusammenbau der Schalungsringsektoren 14 und 15 zu dem betreffenden Schalungsrohrschuß der Außenschalung 10 bzw. Innenschalung 11 praktisch eine komplette Schalung zur Verfügung steht, die zum Einbringen des Betons weitgehend vorbereitet ist.

An den horizontalen Stößen von zwei Schalungsrohrschüssen zwischen zwei aneinander angrenzender Schalungsringsektoren 14 mit 14 bzw. 15 mit 15 werden Übergreiflängen 85, 86 in den radialen Raum 13 den Längsbewehrungen 56 bzw. 55 und Übergreiflängen 87, 88 den Ringbewehrungen 57 und 58 zugeordnet und Übergreiflängen zur Stoßüberdeckung eingebracht.

Sämtliche Schalungsringsektoren 14 bzw. 15 der Außenschalung 10 und der Innenschalung 11 sind mit ihren Längsbewehrungen 55 bzw. 56 und ihren Ringbewehrungen 57 bzw. 58 als einstückige Bauteile transportfähig und brauchen demgemäß in dieser Form lediglich an der Baustelle zu dem betreffenden Schalungsrohrschuß zusammengebaut zu werden. Der Abstand C zwischen zwei aufeinanderfolgenden Längsbewehrungen der Außenschalung 10 kann zum Beispiel 15 cm betragen.

An den Horizontalstößen sind Stoßlaschen sowohl an der Außenschalung 10 als auch an der Innenschalung 11 angeordnet. Diese Stoßlaschen sind an der Außenschalung 10 beispielsweise mit den Bezugszeichen 60, 61, 62 bezeichnet, während einige der Stoßlaschen der Innenschalung 11 mit den Bezugszeichen 63, 64 bezeichnet sind. Diese Stoßlaschen sind mit den entsprechenden Flanschen 49 bis 52 der Schalungsringsektoren jeweils so verschraubt, daß die Stoßflächen der miteinander zu verbindenden Rohrschüsse glatt aufeinander liegen.

In dem Fundament 5 sind wie in dem Bauwerk 6 Hüllrohre angebracht, durch die Zugelemente, vornehmlich Stahlseile oder Spannlitzen, hindurchgeführt werden. Diese Zugelemente dienen der Vorspannung des Betons und damit des Bauwerks 6.

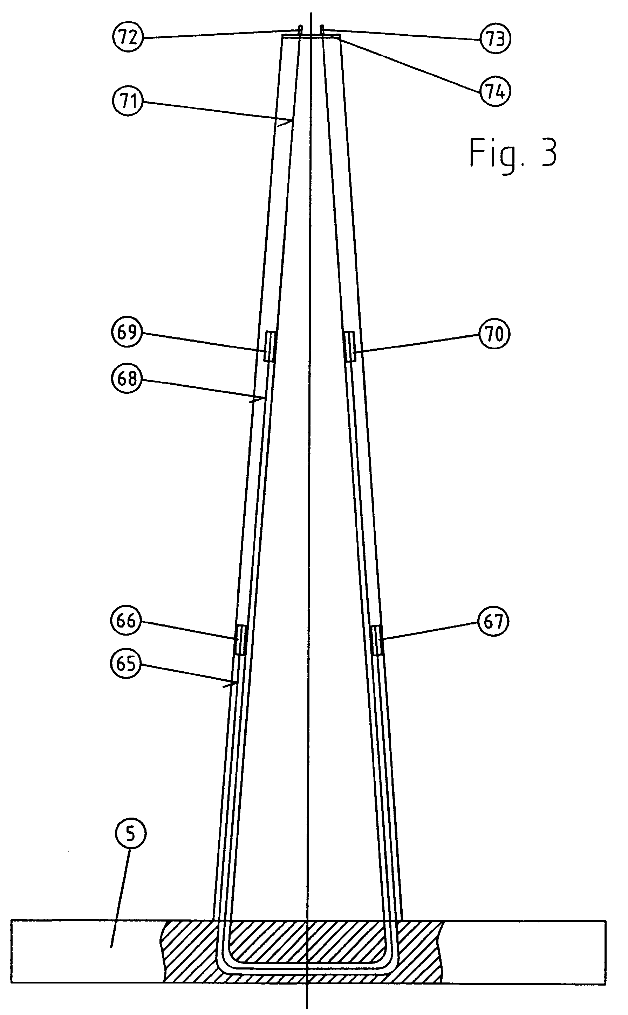

Aus Fig. 3 ist zu erkennen, daß bei einem für ein Windkraftwerk geeignetes Bauwerk von insgesamt ca. 96 Metern Höhe zahlreiche Zugelemente angeordnet sind, die schleifenförmig durch das aus Beton bestehende Fundament hindurchgeführt sind. Acht dieser Zugelemente reichen bis zu einer Höhe von ca. 20 Metern. Weitere acht Zugelemente reichen bis zu einer Höhe von ca. 70 Metern und die letzten acht schleifenförmig geführten Zugelemente reichen bis zu einer Höhe von ca. 96 Metern. Diese Zugelemente sind in Spann-Nischen 66 bis 67 arretiert. Hierzu werden die Zugelemente 65 zum Beispiel an beiden Enden arretiert und durch geeignete, insbesondere hydraulisch angetriebene Vorrichtungen auf die erforderliche Zugspannung von zum Beispiel 800 KN nach Vorgabe aus der statischen Berechnung gebracht und danach unter Last arretiert, so daß auch der Beton des Bauwerks 6 entsprechend vorgespannt ist.

Mit dem Bezugszeichen 68 sind Zugelemente bezeichnet, die bei dem angenommenen Beispiel bis zu einer Höhe von 70 Metern reichen und hier durch geeignete Widerlager 69 und 70 arretiert sind. Von den Zugelementen 68 sind bei dem angenommenen Ausführungsbeispiel acht Stück über den Umfang des Bauwerks 6 gleichmäßig verteilt angeordnet und ebenfalls unter der erwähnten Zugspannung gesetzt und dann arretiert.

Mit dem Bezugszeichen 71 sind insgesamt acht Zugelemente bezeichnet, die ebenfalls über das Bauwerk 6 gleichmäßig verteilt angeordnet sind und gleichfalls unter der erwähnten Zugbelastung durch Widerlager 72 bzw. 73 direkt auf dem Flansch 74 des Stahlmantelteils 9 arretiert sind.

Dadurch wird der Beton des gesamten Bauwerkes über seine Höhe und seinen Umfang unter der erforderlichen Vorspannung gehalten.

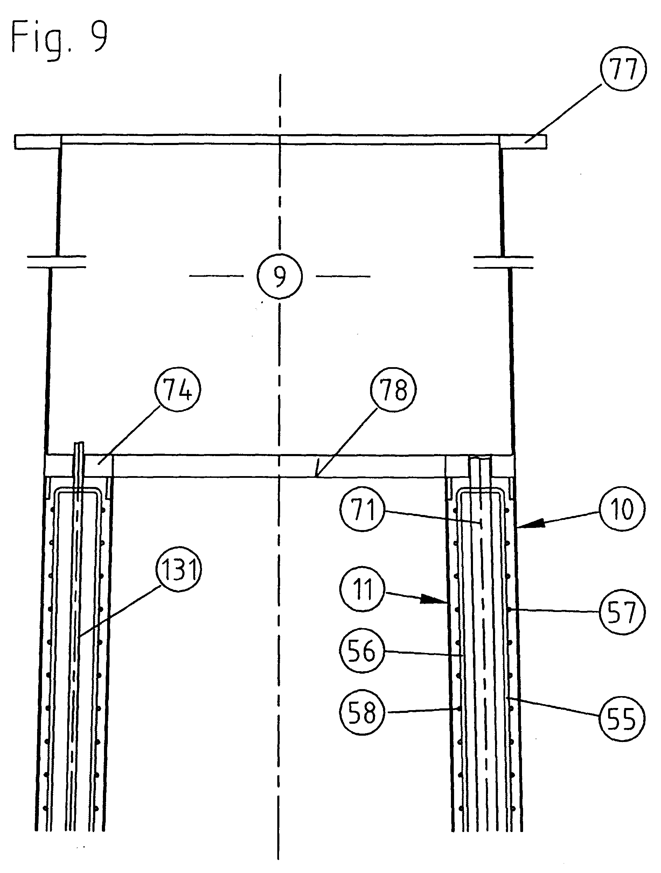

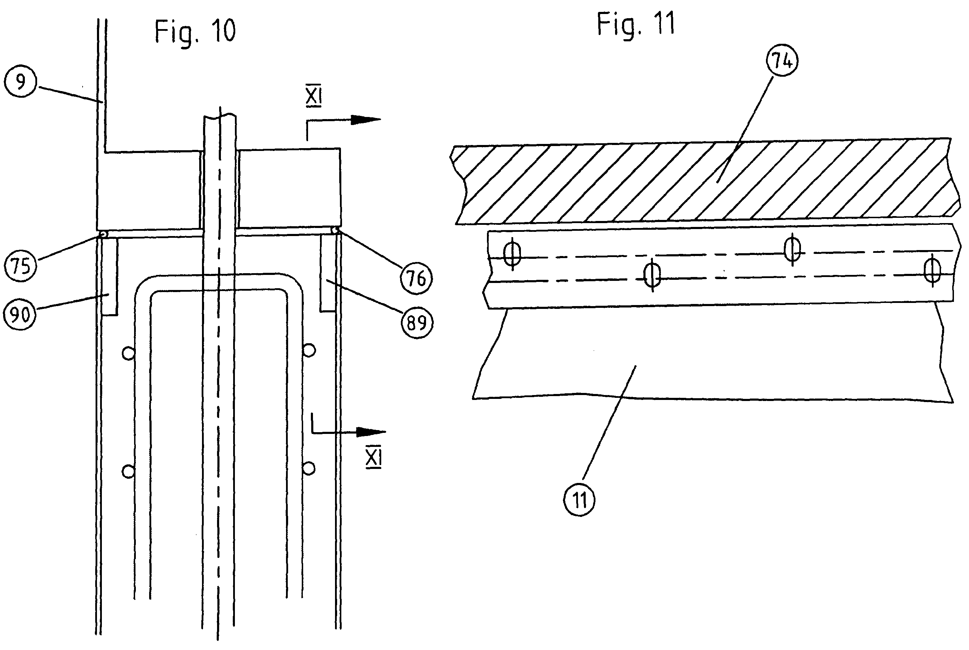

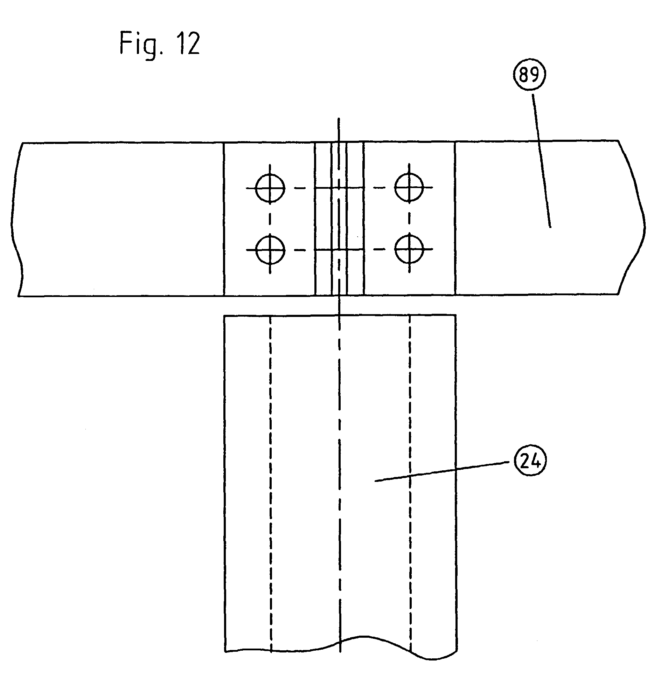

Der aus Fig. 9 ersichtliche Turmkopf 9 weist an seiner Unterseite einen nach innen gerichteten Flansch 74 auf, mit dem der aus Stahl bestehende Turmkopf 9 unter Zwischenschaltung von Dichtungen 75 bzw. 76 (Fig. 10) aufgesetzt ist, der über mehrere über seinen Umfang verteilte Zugelemente wie Stahlseile, Spannlitzen 68, Ankerschrauben 131 über die erheblich verstärkten Flansche 74 derart aufgesetzt ist, daß alle von oben, im wesentlichen aus Rotor 2, Gondel 3 und Stahlmantelteil 9 kommenden Kräfte in den Stahlbeton eingeleitet werden. Um eine möglichst flächige Krafteinleitung in den Betonkern zu erreichen, wird auf die Oberseite des Stahlbetons Mörtel aufgebracht und vor dessen Abbinden der Stahlmantelteil 9 mit dem Flansch 74 aufgesetzt. Damit die Innen- und Außenkanten des Betons nicht an seiner oberen, dem Turmkopf 9 zugekehrten Seite unter Belastung ausbrechen, sind innen und außen Bandagen 89 und 90 vorgesehen. Diese Bandagen 89, 90 bestehen aus Stahl und sind rundumlaufend, also ringförmig, ausgebildet (Fig. 12.)

An der Oberseite weist der Turmkopf 9 einen nach außen gerichteten Flansch 77 auf, mit dem der Drehkranz der Gondel 3 (Fig. 1) durch Schrauben oder dergleichen fest, aber lösbar, gekuppelt ist.

Bis zur Ebene 78 ist das Bauwerk 6 bei dem dargestellten Ausführungsbeispiel 96 Meter hoch. Nach dem gleichen erfindungsgemäßen Verfahren mit der gleichen Vorrichtung lassen sich aber zum Beispiel auch Bauwerke, insbesondere für Windkraftanlagen, von etwa 200 Metern Höhe und mehr bauen.

Die Durchführung eines Verfahrens zum Herstellen des aus Fig. 1 ersichtlichen Bauwerkes 6 für ein Windkraftwerk ist folgende:

Zunächst erfolgt das Zuschneiden, Bohren und Walzen sowie Abkanten der einzelnen Schalungsringsektoren 14 und 15 der Außenschalung 10 und der Innenschalung 11 mit einer Bauhöhe von etwa 12 Metern.

Daraufhin erfolgt das Zuschneiden, Bohren, Walzen und Abkanten der einzelnen Schalungsringsektoren 14 und 15 für die Innenschalung 11, und zwar ebenfalls mit einer Bauhöhe, die passend zur Bauhöhe der Außenschalung 10 ist, vorliegend also etwa 12 Meter.

Darauf werden die sogenannten Podestträger 79 (Fig. 2) zugeschnitten, die sich jeweils im Bereich der oberen Mündungsöffnung eines jeden Schalungsrohrschusses, und zwar in der Innenschalung 11, befinden. Bei der dargestellten Ausführungsform sind vier solcher Podestträger vorgesehen. Auf diese Podestträger werden Podestbleche 80 (Fig. 2) angeordnet, die begehbar sind, Daraufhin werden die Verstärkungen angefertigt. Die sogenannten Anbauteile wie Flansche, zum Beispiel 49, 50, 51, 52 der Schalungsrohrschüsse der Außenschalung 10 und der Innenschalung 11 werden ebenso hergestellt wie die sogenannten Fensterschließbleche 81 zum Verschließen der Fenster 82 (Fig. 2).

Auch die Stoßlaschen, zum Beispiel 60, 61, 62, der Außenschalung 10 und 63 sowie 64 der Innenschalung 11 werden vorgefertigt wie die Abstandhalter 40, Klemmspangen 24, gegebenenfalls Futterbleche mit Flanschen und Transportvorrichtungen, Verstärkungen.

Im Anschluß daran erfolgt das Anschweißen der Flansche, zum Beispiel 49, 50 sowie 51 und 52 und das Anschweißen der Abstandhalter 41. Die Längs- und Ringbewehrungen 55, 56 bzw. 57, 58 werden eingelegt und befestigt. Des weiteren erfolgt das Beilegen der Übergreiflängen 85, 86 und 87, 88 für die Stoßüberdeckung der Längs- und Ringbewehrungen 55, 56 sowie 57, 58 an den horizontalen Stößen und im Bereich der unteren Flansche der vertikalen Stöße.

Es erfolgt außerdem der Einbau der Hüllrohre für die Zugelemente 65, 68 bzw. 71 und das Anschweißen der Kopfbolzen und das Anbringen von Transportvorrichtungen an einzelnen Schalungsringsektoren 14, 15.

Die Schalungsringsektoren 14, 15 werden anschließend nach dem Sandstrahlen oder dergleichen an der dem Beton abgewandten Seite mit einem geeigneten konservierenden nach den Erfordernissen für Innen- und Außenschalung unterschiedlichem Anstrich, bestehend aus Rostschutz, Grundierungen und Deckfarbenanstrichen, versehen.

Daraufhin erfolgt eine Verpackung als Schutz bei Lagerung und Transport.

An der Baustelle erfolgt eine Vormontage der Innen- und Außenschalung.

Außen- und Innenschalung 10 bzw. 11 werden unabhängig voneinander durch Verbinden der vertikalen Stöße in Form von Kegelstümpfen zu den Schalungsrohrschüssen vormontiert, wobei Maßgenauigkeit gewährleistet ist. Die justierten Stöße werden mit den Klemmspangen, zum Beispiel 24, befestigt.

Die endgültige Zentrierung wird durch den Zusammenschluß der oben und unten umlaufenden Flansche, also 49, 50 bzw. 51, 52 mit den entsprechenden Stoßlaschen erreicht.

Bei der Außenschalung 10 werden die Übergreiflängen 87 der Ringbewehrung und die Übergreiflängen 86 der Längsbewehrung in die endgültige Lage eingelegt, um eine Überdeckung der vertikalen und horizontalen Stoßfugen zu erreichen. Das gleiche geschieht bei den Stoßzulagen der Ringbewehrung und Längsbewehrung für die Innenschalung 11.

Daraufhin erfolgt ein Verbinden der ringförmigen Verstärkungen 44, 45 und 46 mittels Stoßlaschen.

Anschließend werden die Podestträger 79 im Bereich der entsprechenden Mündungsöffnung der Innenschalung 11 auf den umlaufend innen an der Innenschalung befestigten Winkel 47 gelegt, die Verbindung hergestellt und die begehbaren, zum Beispiel als Riffelbleche ausgebildeten Podestbleche, aufgelegt bzw. je nach Konstruktion wird das gesamte Podest als ein Stück montiert.

Die Schalungsrohrschüsse der Außenschalung 10 werden nun als zwölf Meter hohe Kegelstümpfe mittels eines Moblikrans oder dergleichen über die kegelstumpfförmige Innenschalung 11 gestülpt, woraufhin ein Verbinden zwischen Außenschalung 10 und Innenschalung 11 mit den Abstandhaltern 40 erfolgt.

Mittels Mobilkran oder dergleichen, Doppeltraverse und entsprechendem Gehänge werden die vormontierten Doppelschalungsrohrschüsse (Kegelstumpf aus Außenschalung 10 und Innenschalung 11) des ersten Abschnittes auf das Fundament 5 mit den in Betonfundament 5 eingebauten Schraubenankern befestigt.

Anschließend kann ein Bearbeiten der entsprechenden am Stoß erforderlichen Verbindungen durch Fenster 82 der Innenschalung 11 erfolgen.

Nischen für die Anschlüsse der Zugkabel an die im Fundament 5 eingebauten Anker bzw. Zugmittel werden hergestellt, für die Verankerung in den verschiedenen Höhen.

Im Fundament 5 verankerte Anschlußeisen der 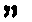 Schlaffen Bewehrung" werden daraufhin mit denen des auf das Fundament 5 aufgesetzten Doppelschalungsrohrschusses, bestehend aus dem Kegelstumpf der Außenschalung 10 und der Innenschalung 11, kraftschlüssig verbunden.

Anschließend erfolgt ein Verbinden der Hüllrohre für die Zugelemente 65, 68 und 71.

Die Fenster 82 werden anschließend durch die Fensterschließbleche 81 verschlossen.

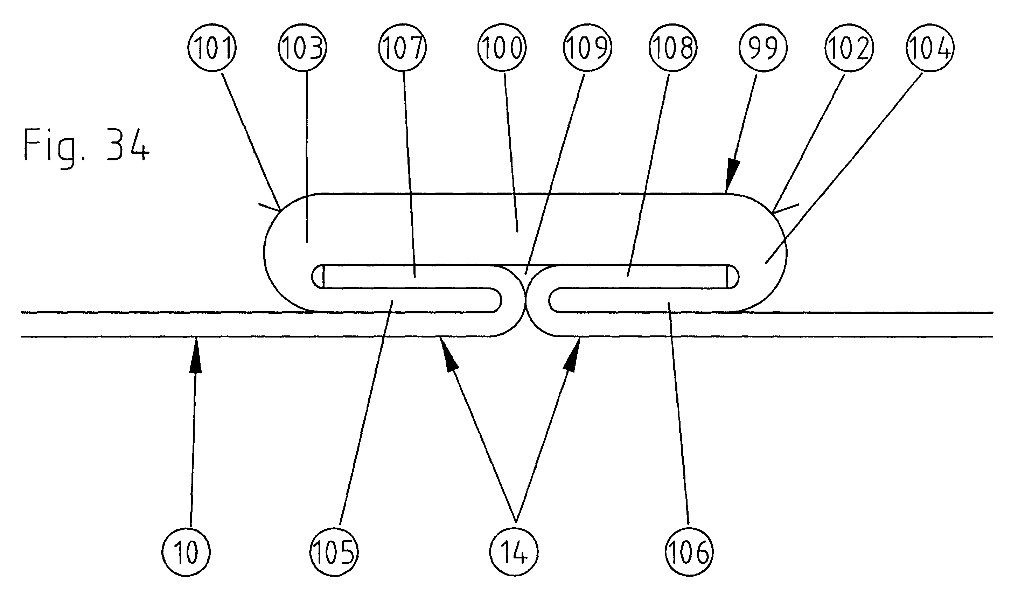

Aus Fig. 34 ist eine Alternative zu Fig. 6 für eine Klemmspange 99 dargestellt. Diese Klemmspange 99 besteht im wesentlichen aus einem leistenförmigen, in einen orthogonal zu ihrer Längsachse geführten Querschnitt rechteckförmigen Teil 100, an das materialmäßig auf beiden Seiten über je einen Kreisbogen 101 bzw. 102 Teilkreise 103 bzw. 104 materialmäßig einstückig angeschlossen sind. Mit Spaltabstand zu dem rechteckförmigem Teil 100 sind gegeneinander gerichtete Klemmzungen 105 bzw. 106 materialmäßig einstückig angeordnet, die zwischen sich die aneinander angrenzenden Schalungsringsektoren 14 der Außenschalung 10 bzw. 15 der Innenschalung 11 spannen. Zu diesem Zweck greifen die Schalungsringsektoren 14 oder 15 mit um 180 Grad abgebogene Lappen 107 bzw. 108 in den Spaltbereich zwischen dem rechteckförmigen Teil 100 und den Klemmzungen 105 und 106 ein. Dabei ist die Anordnung so getroffen, daß zu dem einen Ende der betreffenden Klemmspange 99 der zwischen dem reckeckförmigen Teil 100 und den Klemmzungen 105 und 106 gebildete Spalt sich in Längsachsrichtung der Klemmspange zum Ende hin etwas konisch erweitert, so daß die Klemmzungen 105, 106 leichter auf die miteinander zu verspannenden Schalungsringsektoren 14 oder 15 aufgesetzt werden können, woraufhin die Klemmspange 99 zum Beispiel durch ein hydraulisch o. ä, angetriebenes Werkzeug in ihre Lage gedrückt wird. Auch hier können mehrere Klemmspangen 99 über den Höhenbereich eines rohrförmigen Schalungsrohrschusses der Außenschalung 10 oder der Innenschalung 11 übereinander angeordnet sein und mit ihren Stirnseiten jeweils flächig aneinander anliegen. Die Länge der Klemmspange 99 kann wie die der aus Fig. 6 ersichtlichen Klemmspange 24 gebildet sein, zum Beispiel können über die Länge (Höhe) eines Schalungsrohrschusses der Außenschalung 10 oder der Innenschalung 11 vier solcher Klemmspangen 99 jeweils übereinander angeordnet werden. Besteht zum Beispiel der Außenmantel 10 und der Innenmantel 11 insgesamt aus acht Schalungsringsektoren, so bedeutet dies, daß jeder Rohrschuß der Außen- und Innenschalung 10 bzw. 11 acht x vier = 32 Teile solcher Klemmspangen 99 aufweist.

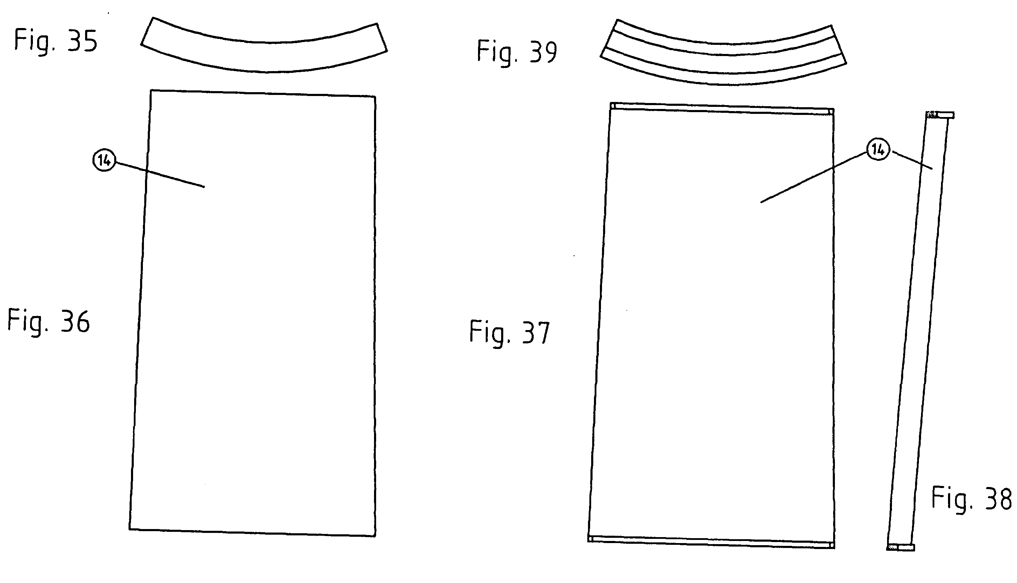

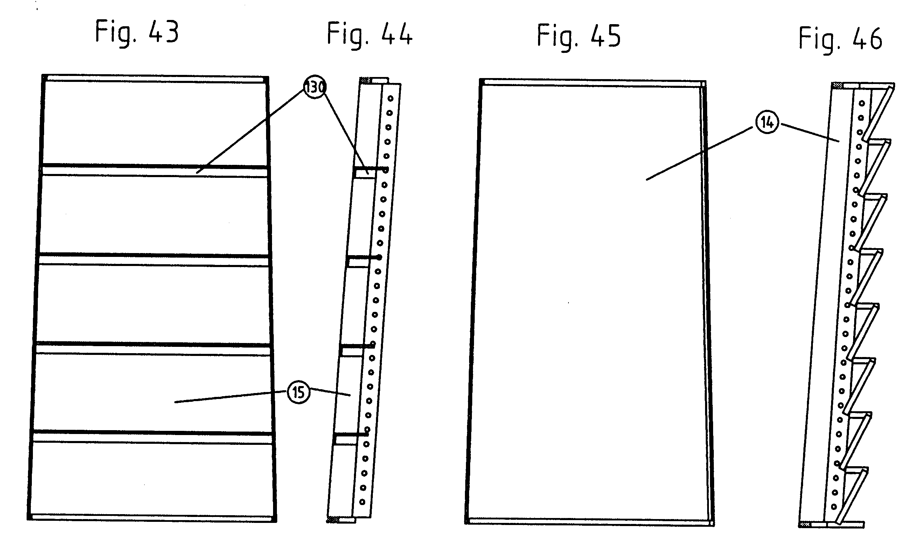

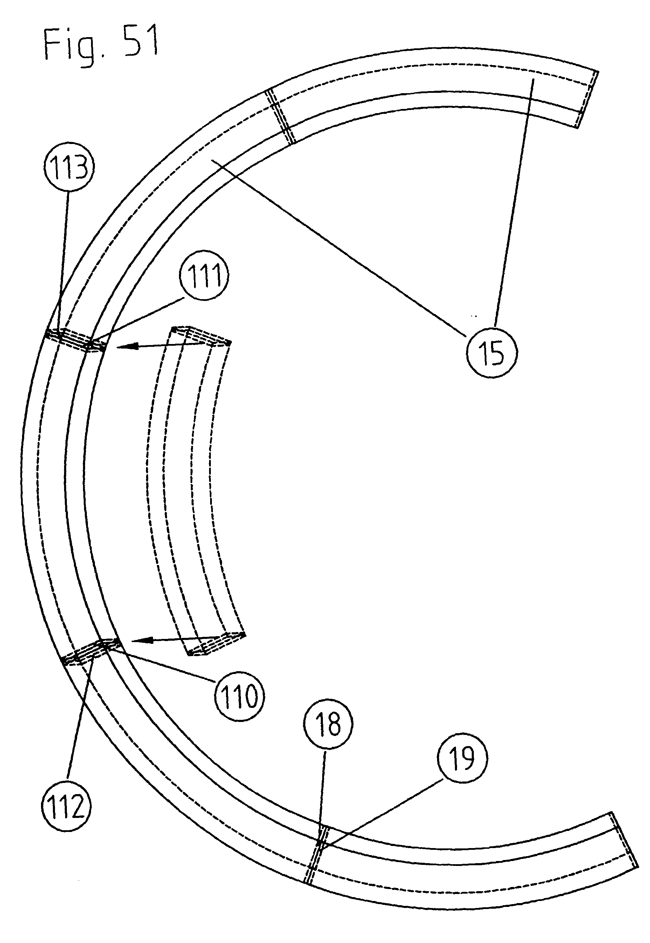

Die aus den Fig. 35 bis 54 ersichtliche Ausführungsform unterscheidet sich im wesentlichen von der vorbeschriebenen Ausführungsform dadurch, daß die Außen- und Innenschalung mit ihren Fachwerkverbindern und den übrigen Einzelteilen nicht als 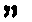 verlorene Schalung" wie bei der vorbeschriebenen Ausführungsform gilt. Vielmehr wird bei dieser Ausführungsform die Innen- und Außenschalung mittels Kopfbolzen, Fachwerkverbinder, Verstärkungen und dergleichen mit in die Festigkeitsberechnung einbezogen. Dadurch lassen sich Ersparnisse an eingesetztem Stahl bis zu 50 Prozent erzielen, was entsprechende Kostenersparnisse zur Folge hat.

Auch sind Zugelemente als Spannseile zum Vorspannen des Betons nicht mehr erforderlich, wenngleich im Bedarfsfalle nichts im Wege steht, derartige Zugelemente wie bei der aus Fig. 3 ersichtlichen Ausführungsform einzusetzen.

Auf weitere bedeutsame Unterschiede wird in der nachfolgenden Beschreibung im einzelnen näher eingegangen.

Auch die aus den Fig. 35 bis 54 ersichtliche Ausführungsform eignet sich wie die vorbeschriebene Ausführungsform zum Herstellen turmartiger Gebäude, zum Beispiel von Windkraftanlagen, wie sie in Fig. 1 und den folgenden Zeichnungen dargestellt ist.

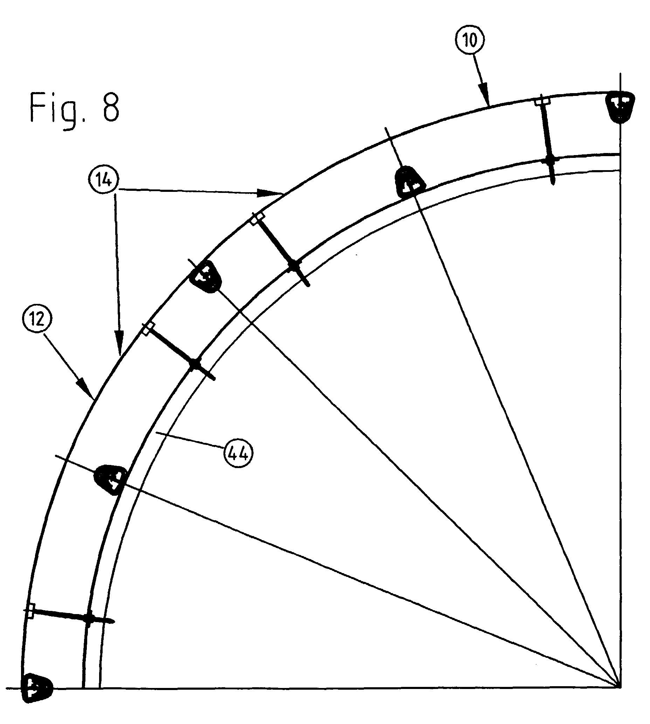

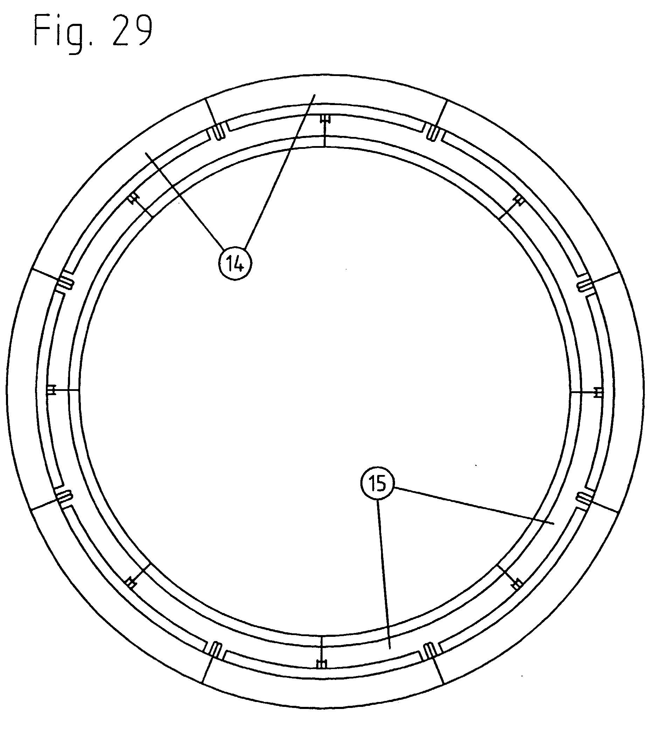

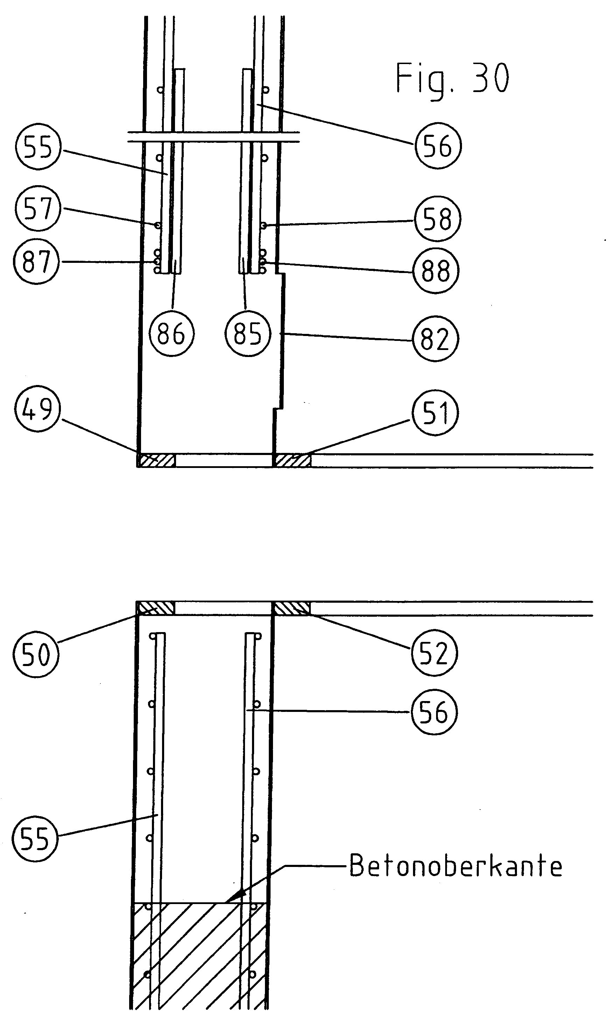

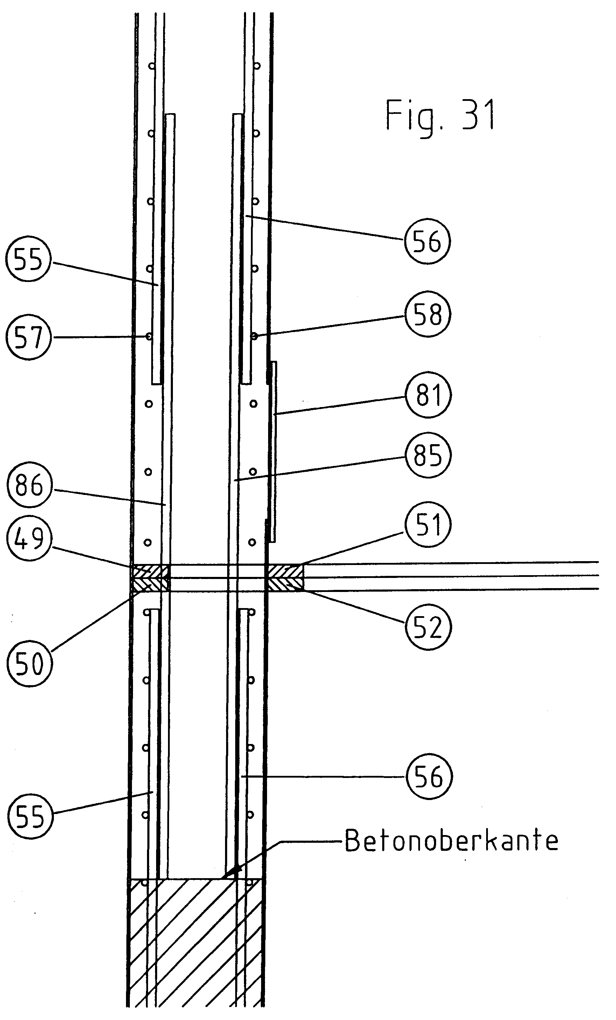

Lediglich aus Gründen der Vereinfachung wurden diese Zeichnungen im Zusammenhang mit der Ausführungsform nach Fig. 35 bis 54 nicht wiederholt. Es kann deshalb im Interesse einer Vermeidung von Wiederholungen auf die in diesem Zusammenhang mit der Ausführungsform nach Fig. 1 bis 34 gemachten Ausführungen verwiesen werden.

Aber nicht nur Windkraftanlagen, sondern auch hohe Türme, Brückenpilone und dergleichen lassen sich mit der Ausführungsform nach den Fig. 35 bis 54 ebenso herstellen, wie mit der Ausführungsform nach den Fig. 1 bis 34.

Sofern Werkstoffangaben, Höhenangaben, Längen- und Durchmesserabmessungen für die Innenschalung und Außenschalung, für das Fundament und dergleichen im Zusammenhang mit der Ausführungsform nach den Fig. 1 bis 34 gemacht werden, gelten diese sinngemäß auch für die Ausführungsform nach Fig. 35 bis 54. Insbesondere gelten diese Abmessungen hinsichtlich der Gesamtabmessungen der einzelnen Schalungsrohrschüsse der Außenschalung und Innenschalung, damit diese ebenso wie bei der oben beschriebenen Ausführungsform in den üblichen Transportcontainern, auf Tiefladern, in Eisenbahnwaggons und dergleichen transportiert werden können. Auch diesbezüglich wird im Interesse einer Vermeidung von Wiederholungen auf die im Zusammenhang mit der Ausführungsform nach den Fig. 1 bis 34 gemachten Ausführungen verwiesen.

Ähnliches gilt auch für die Witterungsbeständigkeit, die Aufbringung von Rostschutzanstrichen, Transportösen und dergleichen sowie für das Einbringen von Beton zwischen der Außen- und Innenschalung. Hinsichtlich der prinzipiellen Verfahrensweise bestehen somit zwischen der Ausführungsform nach den Fig. 1 bis 34 und der Ausführungsform nach den Fig. 35 bis 54 praktisch keine Unterschiede.

Auch bei der Ausführungsform nach Fig. 35 bis 54 kann zum Beispiel das entsprechend Fig. 1 gestaltete Bauwerk aus insgesamt sieben koaxial zueinander angeordneten Bauwerkteilen entsprechend der Bauwerkteile 7, zusätzlich ein Bauteil 8 nach dieser Erfindung und dem Turmkopf 9 bestehen. Möglich wären aber auch z. B. vier Bauwerkteile 7, zusätzlich ein Bauwerkteil 8 und der Turmkopf 9, bestehend aus zwei Teilen, die sich jeweils nach oben hin zum Beispiel konisch verjüngen. Die Länge der übereinander angeordneten Bauwerkteile kann gleich, aber auch ebenfalls unterschiedlich bemessen sein, zum Beispiel mit zunehmender Höhe ebenfalls größer werden.

Auch bei der aus den Fig. 35 bis 54 ersichtlichen Ausführungsform ist die Länge L aller Bauwerkteile 7 und 8 gleich groß und beträgt zum Beispiel ebenfalls zwölf Meter.

Des weiteren ist jedes Bauwerkteil 7 an seiner äußeren Peripherie ebenfalls kreisrund ausgebildet. Der untere äußere Durchmesser des untersten Bauwerkteils 7 kann zum Beispiel auch hier wiederum 6,40 Meter betragen. Es ist auch möglich, einen anderen Durchmesser bei dieser Ausführungsform, zum Beispiel einen polygonförmigen Durchmesser wie bei der Ausführungsform nach Fig. 1 bis 34 zu wählen, jedoch muß Bauwerkteil 9 oben wieder kreisrund sein.

Auch bei der Ausführungsform nach Fig. 35 bis 54 werden wiederum die einzelnen Bauwerkteile 7 mit ihrem jeweils größeren Durchmesser auf die obere Seite des jeweils darunter liegenden Bauwerkteiles 7, also auf den kleineren Durchmesser des jeweils unten liegenden Bauwerkteiles 7 aufgesetzt, derart, daß alle Bauwerkteile 7 mit ihrer Mantelfläche fluchten und sich ein glattes durchgehendes Äußeres ergibt.

Wiederum wird auf dem oben liegenden Bauwerkteil wie bei dem Bauwerkteil 8 der ersten Ausführungsform ein Turmkopf entsprechend dem Turmkopf 9 befestigt (gleichfalls nicht dargestellt), dessen Ausbildung und Anordnung wie bei der ersten Ausführungsform sein kann. Die Gondel 3 kann die gleichen oder anderen Querabmessungen wie die der ersten Ausführungsform aufweisen und mit dem in ihr befindlichen Generator und gegebenenfalls Getriebe sowie dem Gewicht des Rotors viele Tonnen, zum Beispiel 100 Tonnen und mehr, wiegen.

Selbstverständlich variieren auch bei der Ausführungsform nach den Fig. 35 bis 54 Abmessungen und Gewichte, so daß die vorgenannten Abmessungen und Gewichte ebenso wie bei der erstbeschriebenen Ausführungsform nur als Beispielsangaben dienen und die Erfindung im Hinblick auf die zweite Ausführungsform darauf nicht beschränkt ist.

Die einzelnen Bauwerkteile 7 weisen wiederum eine innen- und außenliegende, auch bei der zweiten Ausführungsform nach den Fig. 35 bis 54 vorzugsweise aus Stahl bestehende Schalung auf, die in die Festigkeitsberechnung des turmartigen Bauwerkes mit einbezogen wird. Die Schalung besteht wiederum aus einer Außenschalung 10. Außen- und Innenschalung 10 und 11 sind ebenfalls konisch entsprechend dem Verlauf der Bauwerkteile 7 ausgebildet, da die Außenmantelfläche der Außenschalung 10 auch die Außenmantelfläche des entsprechenden Bauwerkteiles 7 bildet. Die Außenmantelfläche kann nach entsprechender Behandlung mit einer geeigneten Schutzschicht, zum Beispiel mit einer wetterfesten, mehrschichtigen Lackschicht, versehen sein (ebenfalls nicht dargestellt).

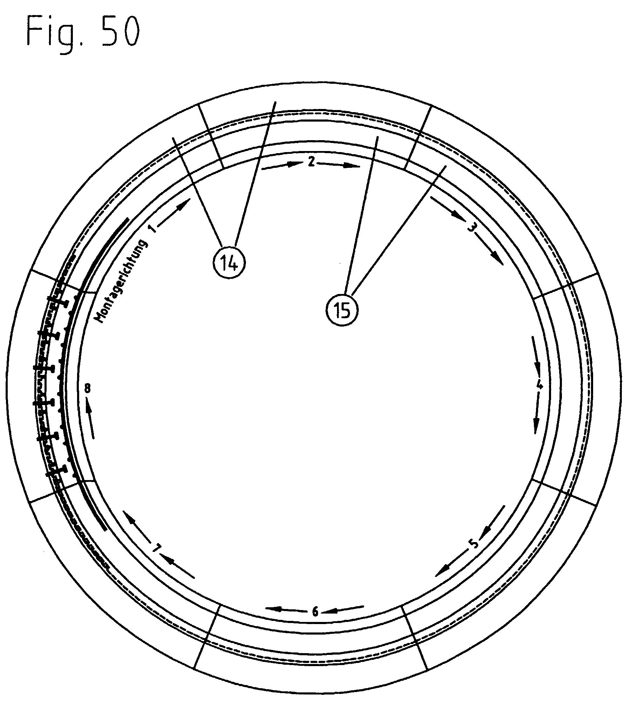

Wie man aus Fig. 50 erkennt, sind Außen- und Innenschalung 10 bzw. 11 koaxial zueinander angeordnet, derart, daß zwischen Außen- und Innenschalung ein radialer Spalt oder Raum 13 wie bei der erstbeschriebenen Ausführungsform verbleibt, der in ebensolcher Weise mit Beton ausgefüllt wird.

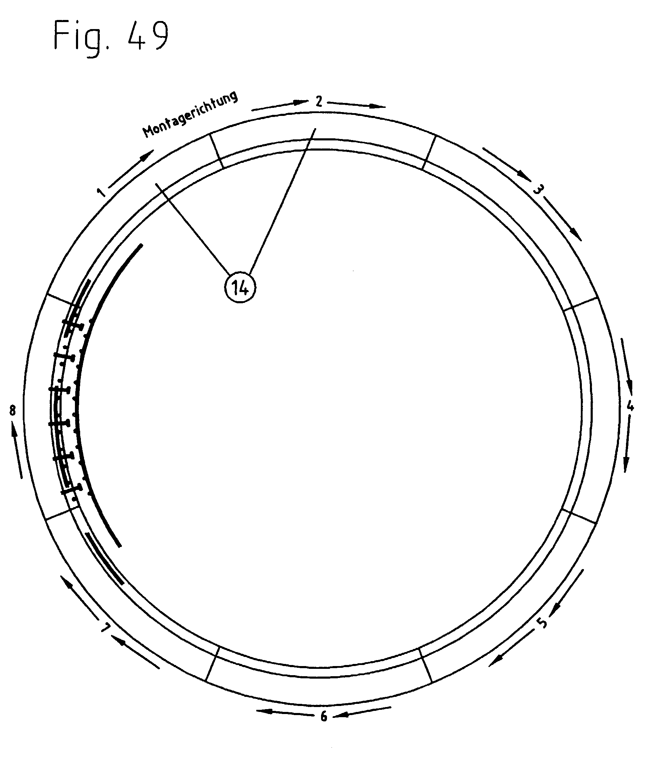

Außen- und Innenschalung 10 bzw. 11 erstrecken sich somit über die Abmessungen eines Bauwerkteiles 7 wobei der Spalt bzw. Raum 13 die Wanddicke für den Beton bestimmt. Die Außenschalung 10 und die Innenschalung 11 bilden wiederum Schalungsrohrschüsse, die ineinander gesteckt sind. Jeder Schalungsrohrschuß der Außenschalung 10 und der Innenschalung 11 ist aus mehreren Schalungsringsektoren zusammengesetzt. Diese Schalungsringsektoren sind für die Außenschalung wiederum mit dem Bezugszeichen 14 (Fig. 49, 50) und für die Innenschalung 11 mit dem Bezugszeichen 15 (Fig. 50) bezeichnet. Jeweils mehrere dieser Schalungsringsektoren 14 bzw. 15 bilden einen Schalungsrohrschuß der Außenschalung 10 bzw. einen Schalungsrohrschuß der Innenschalung 11. Bei den insbesondere aus Fig. 50 ersichtlichen Ausführungsformen sind die Schalungsrohrschüsse der Außenschalung 10 und der Innenschalung 11 jeweils aus sechs Schalungsringsektoren 14 bzw. 15 zusammengesetzt, die jeweils zur Kreisform - in einem orthogonal zur Längsachse des betreffenden Schalungsrohrschusses geführten Schnitt gesehen - ergänzen und die konischen Schalungsrohrschüsse bilden.

Sowohl die Schalungsringsektoren 14 der Außenschalung 10 als auch die der Schalungsringsektoren 15 der Innenschalung 11 weisen wiederum an ihren Endabschnitten jeweils einwärts radial verlaufende Vorsprünge, Schultern, Flacheisen, Winkel oder dergleichen 16, 17 bzw. 18, 19 auf, die als vertikal durchgehende Stoßflacheisen für die Stöße zwischen den Mantelteilen der Außenschalung 10 bzw. der Innenschalung 11 ausgebildet sind.

Die Vorsprünge, Schultern oder dergleichen, des zuletzt einzubauenden Sektors der Innenschalung ist mit von der radialen Erstreckung abweichend gekröpften Vorsprüngen 110, 111 und der entsprechend angrenzende Vorsprung des angrenzenden Schalungsringsektors mit einem Vorsprung 112 bzw. 113 ausgerüstet, damit dieser innere Schalungsringsektor in der noch zu beschreibenden Art und Weise als letzter in den betreffenden Schalungsrohrschuß eingesetzt werden kann. Die Vorsprünge 16, 17 des die Außenschalung 10 bildenden jeweiligen Schalungsrohrschusses sind nach innen gerichtet, während die Vorsprünge 18 und 19 bzw. 110, 111 sowie 112 und 113 in den Innenraum des inneren Rohrschusses, also vom Beton weggerichtet, verlaufen, so daß die Vorsprünge 16 und 17 in den mit Beton zu verfüllenden Raum 13 zu liegen kommen. Die Vorsprünge 18, 19 sowie 110, 111, 112 und 113 liegen dagegen nicht im Beton.

Im Gegensatz zu der Ausführungsform nach den Fig. 1 bis 34 werden die Flansche 16 und 17 einerseits sowie 18 und 19 sowie 110 und 111, 112 und 113 nicht durch Klammern, sondern durch Schraubbolzen, die durch entsprechende koaxial miteinander jeweils fluchtende Bohrungen hindurchgreifen, gegeneinander verspannt. Zu diesem Zwecke können über die vertikal durchgehenden Stoßflacheisen, die die Flansche 16, 17 sowie 18, 19, 110, 111 sowie 112, 113 bilden mehrere Bohrungen über und/oder nebeneinander angeordnet sein, durch die jeweils Schraubbolzen hindurchgreifen, die durch Muttern (nicht dargestellt) arretiert sind. Diese Vorsprünge 16 und folgende erstrecken sich somit jeweils über die Länge eines Schalungsringsektors bzw. über die Länge des darauf aufgebauten Schalungsrohrschusses, abzüglich der oberen Flansche 50, 52 und Stoßlaschen und der unteren Flansche 49, 51 und Stoßlaschen. Ebenso wie bei der Ausführungsform nach Fig. 1 bis 34 liegen sämtliche Vorsprünge 16, 17, 18, 19 sowie 110, 111 bzw. 112 und 113 jeweils paarweise flächig aufeinander.

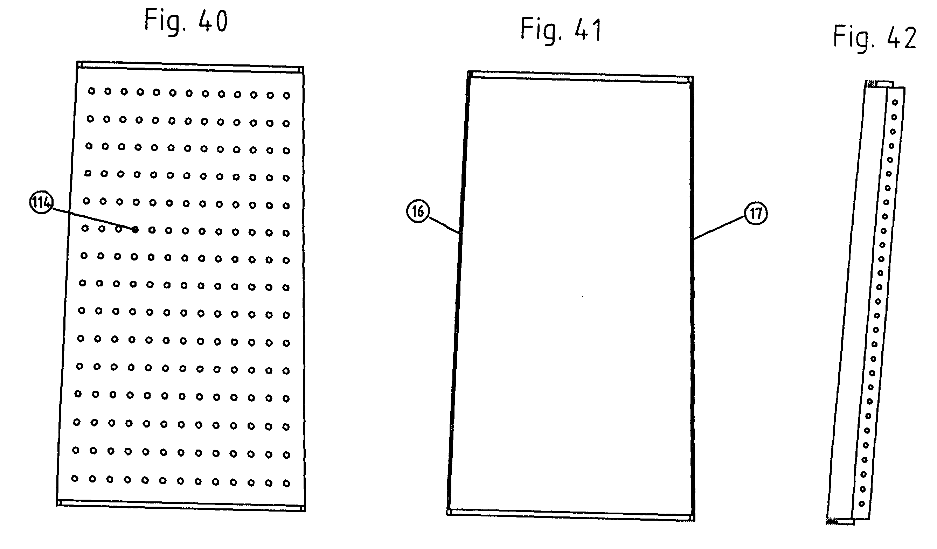

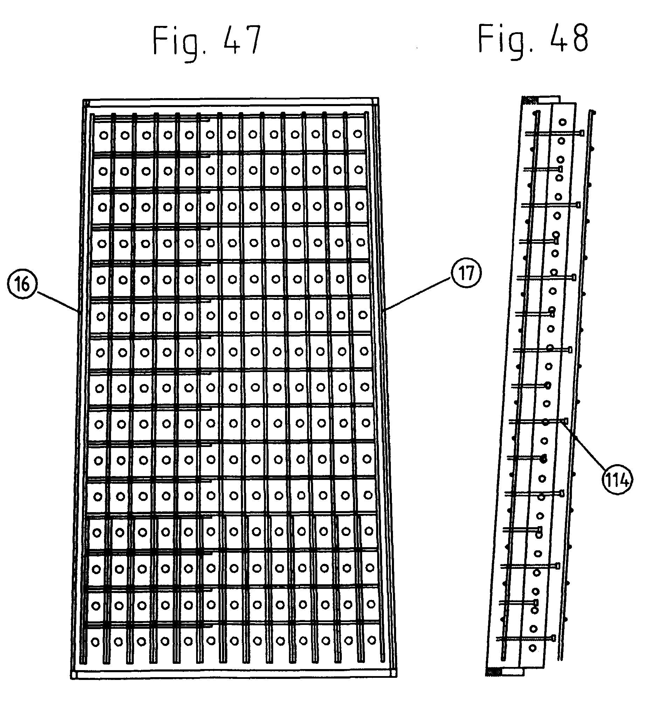

An den Schalungsringsektoren 15 der Innenschalung 10 sind über die Höhe und über den Umfang des betreffenden Schalungsrohrschusses gesehen eine Vielzahl von sogenannten Kopfbolzen auf der dem Beton zugekehrten Seite angeschweißt. Diese Kopfbolzen 114 bestehen aus etwa orthogonal zu der jeweiligen Oberfläche des betreffenden Schalungsringsektors 15 geradlinig verlaufende bolzenförmige Abschnitte (Fig. 48) und zu deren Längsachse rechtwinklig verlaufende, gleichsinnig gerichtete Querabschnitte. Diese Kopfbolzen sind später im Beton angeordnet. Im Gegensatz zu der dargestellten Ausführungsform werden auch die Schalungsringsektoren der Außenschalung 14 mit derartigen Kopfbolzen versehen (Fig. 40), die ebenfalls im Beton zu liegen kommen und die gleiche Ausbildung, aber andere Anordnung besitzen können, wie die Kopfbolzen 114 der Innenschalung 11. Die Kopfbolzen 114 stellen ein gemeinsames Tragverhalten der Außen- und Innenschalung mit dem Betonkern sicher, so daß auch unterschiedliche Materialien gemeinsam Kräfte aufnehmen können. Außerdem sind die Kopfbolzen 114 so angeordnet, daß sie die beiderseitigen Stahlschalungen zum Beispiel bei Druck- oder Wärmespannungen, gegen Ausbeulen sichern.

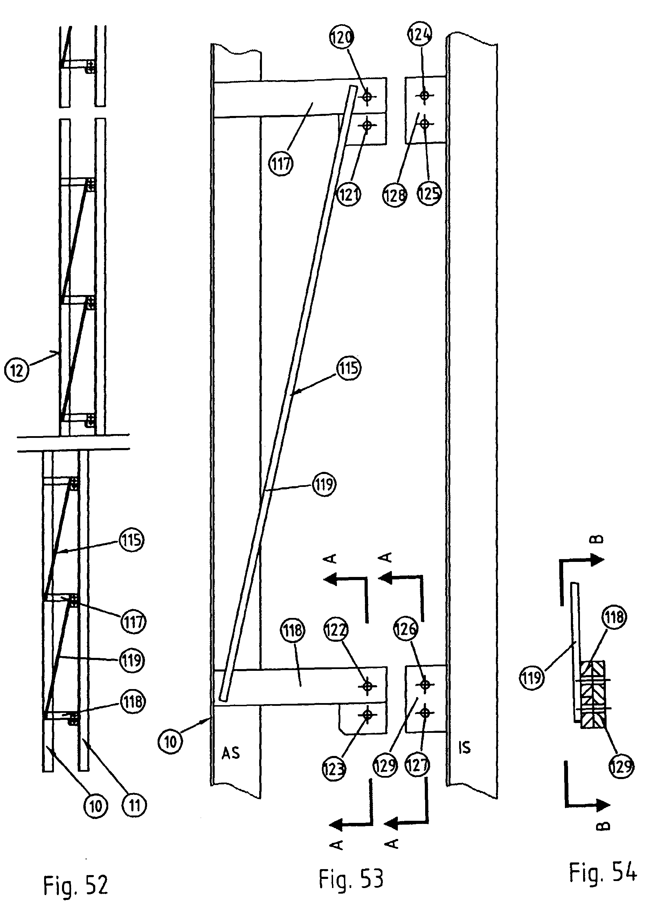

Im Gegensatz zu der Ausführungsform nach den Fig. 1 bis 34 sind bei der zweiten Ausführungsform in dem Ringraum 13 sogenannte Fachwerkverbinder angeordnet, die insgesamt mit dem Bezugszeichen 115 (Fig. 52, 53) bezeichnet sind. Diese Fachwerkverbinder erstrecken sich über die gesamte Länge L eines betreffenden Schalungsrohrschusses und sind jeweils im Bereich der die Vorsprünge bildenden Stoßflacheisen 16, 17 bzw. 18, 19 in dem Innenraum 13 angeordnet. Diese Fachwerkverbinder weisen im wesentlichen über die Länge L eines Schalungsrohrschusses eine Mehrzahl von mit Abstand zueinander angeordneten, orthogonal zur Innenmantelfläche 116 der Außenschalung 10 verlaufende Flacheisen 117 und 118 auf, die jeweils durch ein diagonal verlaufendes Verbindungsglied 119 miteinander gekuppelt sind. Das Verbindungsglied 119 kann zum Beispiel durch Schweißen mit dem Flacheisen 117 und 118 gekuppelt sein.

Wie man aus Fig. 52 erkennt, sind alle diagonalen Verbindungsglieder gleich groß, gleich lang und parallel mit ihren Längsachsen zueinander gerichtet verlaufend. Die Verbindungsglieder können aus Rundeisen, aber auch aus im Querschnitt quadratischem oder rechteckförmigem Material, bevorzugt Stahl, bestehen.

Die Flacheisen 117 und 118 weisen an ihren Enden zwei gleich große und mit ihren Längsachsen parallel zueinander gerichtete Löcher 120 und 121 sowie 122 bzw. 123 auf, die mit entsprechenden Löchern 124, 125 bzw. 126, 127 in den Anschlußblechen 128 und 129, welche an die dem Raum 13 zugewandte Seite der Innenschalung 11 geschweißt sind, zur Deckung gebracht werden können. Durch diese Löcher können jeweils Schraubbolzen hindurchgesteckt werden (nicht dargestellt), mittels deren sich die Fachwerkverbinder 115 mit dem betreffenden Schalungsringsektor der Innenschalung 11 kuppeln lassen.

Die Löcher 120 und 121 einerseits sowie 122 und 123 andererseits des Fachwerkverbinders 115 werden mit den in den Anschlußblechen 128 und 129 vorgesehenen Bohrungen 124 und 125 einerseits und 126 und 127 andererseits in regelmäßigen statisch erforderlichen Abständen mit der Innenschalung 11 durch Schrauben gekuppelt. Die Anschlußbleche 128 und 129 sind mit der dem Beton zugewandten Fläche der Innenschalung 11 durch Schweißen verbunden. Wie die Zeichnung erkennen läßt, sind die Fachwerkverbinder nicht durchgehend, sondern durch die mit Abstand zueinander angeordneten Flacheisen verbunden.

Mit dem Bezugszeichen 130 sind wiederum auf der dem Beton abgewandten Seite der Innenschalung 11 Verstärkungen über die Höhe eines Schalungsrohrschusses gesehen mit Abstand zueinander radial oder spiralförmig angeordnet, entsprechend den Verstärkungen 44 bis 46 der Ausführungsform nach den Fig. 1 bis 34.

Auch die Podestträger 79 und Podeste sowie die übrige Ausbildung im Innenraum der Innenschalung kann entsprechend der ersten Ausführungsform gestaltet sein, so daß im Interesse einer Vermeidung von Wiederholungen darauf verwiesen werden kann.

Die Durchführung des Verfahrens zum Herstellen des aus den Fig. 35 bis 54 ersichtlichen Bauwerkes, zum Beispiel eines Windkraftwerkes entsprechend dem Bauwerk 6 der Ausführungsform nach den Fig. 1 bis 33 ist folgende:

| **Innenschalung** | **Außenschalung** |
|---|---|
| (1) Zuschneiden, Rundung walzen | (1) Zuschneiden, Rundung walzen |
| (2) Flansche oben und unten anschweißen | (2) Flansche oben und unten anschweißen |
| (3) Kopfbolzen anschweißen | (3) Kopfbolzen anschweißen |
| (4) Für die vertikalen Stöße durchgehende Stoßflacheisen anschweißen | (4) Für die vertikalen Stöße durchgehende Stoßflacheisen anschweißen |
| (5) Auf der Beton abgewandten Seite die Verstärkungswinkel anschweißen | |
| | (6) Fachwerkverbinder für spätere Verbindung zwischen Innen- und Außenschalung anschweißen |
| | (7) Komplett erforderliche Bewehrung, bestehend aus innerer und äußerer Längs- und Ringbewehrung im Abstand von ca. 90 mm von der Schalung einhängen. |
| | Beilegen der Übergreiflängen für die horizontalen und vertikalen Stöße. |
| | Dieser Vorgang hat sich erheblich vereinfacht, da die Bewehrung sich wegen der Verbundwirkung zwischen Schalung und Beton um mind. 50 % reduziert. |
| Grund- und Deckanstriche an der Beton abgewandten Seite anbringen | Sandstrahlen, Grund- und Deckanstriche an der Beton abgewandten Seite anbringen |
| Schutzverpackung für Transport anbringen | Schutzverpackung für Transport anbringen |

| | **Vormontage I** |
|---|---|
| | Montagehilfsgerät mit Innengerüst aufstellen |
| | Schalung komplett aus den Einzelsektoren einen Schuß hoch montieren |
| | Gerüst etwas verkleinern |

| **Vormontage II** | |
|---|---|
| Jetzt die Innenschalung innerhalb der Außenschalung ebenfalls aus den Einzelsektoren komplett zusammenbauen | |
| Hierbei ist jeweils an den gegenüberliegenden Stößen der an der Außenschale vorhandene Fachwerkverbinder mit dieser Innenschalung zu verbinden. | |
| Gleichzeitig werden die Übergreiflängen über den horizontalen Stoß gelegt. | |
| Für das letzte Teil ist die Sonderkonstruktion zu beachten. | |
| Podest montieren | |

### Endmontage

Mittels Mobilkran die so zusammengebauten Kegelstümpfe auf das Fundament aufsetzen, kraftschlüssig verbinden, Montagefenster mit Abdeckung wieder zuschrauben, in zwei oder mehr Abschnitten ausbetonieren und nach entsprechender Abbindezeit den - wie oben beschriebenen - vorbereiteten doppelten Kegelstumpf des zweiten Schusses aufsetzen und an den Flanschen verschrauben.

Übergreiflängen über den horizontalen Stoß ziehen, Montagefenster mit Abdeckung wieder zuschrauben und betonieren.

Von hier ab wiederholt sich die Montagefolge bis zum Kegelstumpf als Turmkopf 9, der oben die Anschlüsse für die Gondel der Windkraftanlage hat und dessen unterer Anschluß zur Übertragung der Kräfte in den Turm ausgebildet ist.

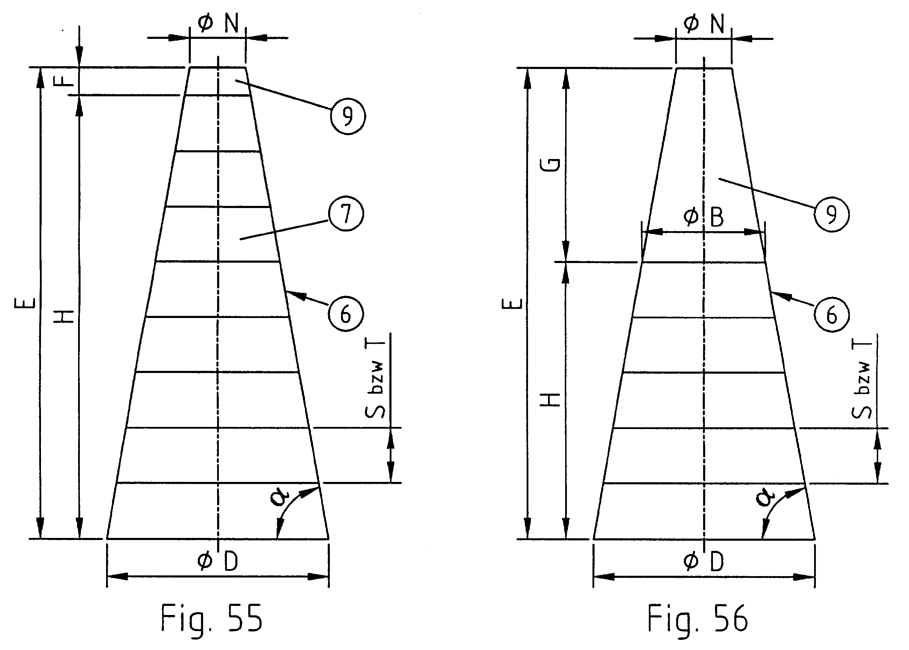

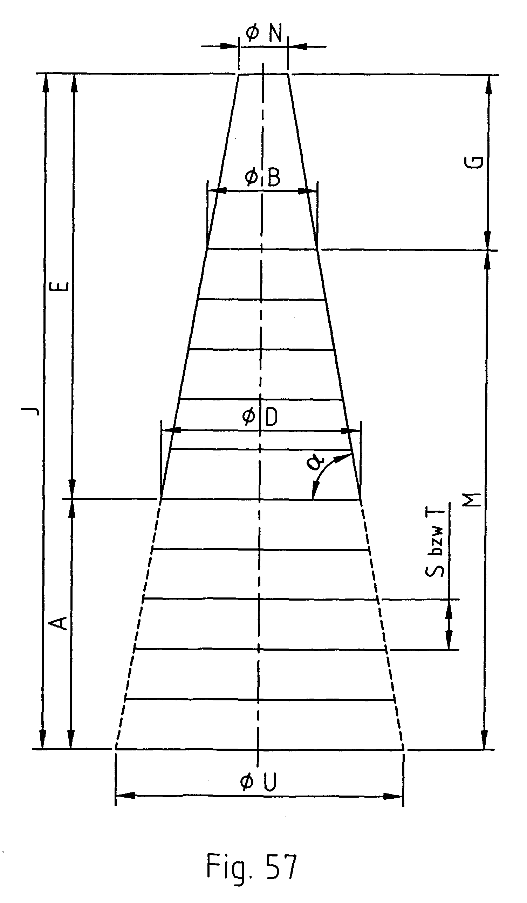

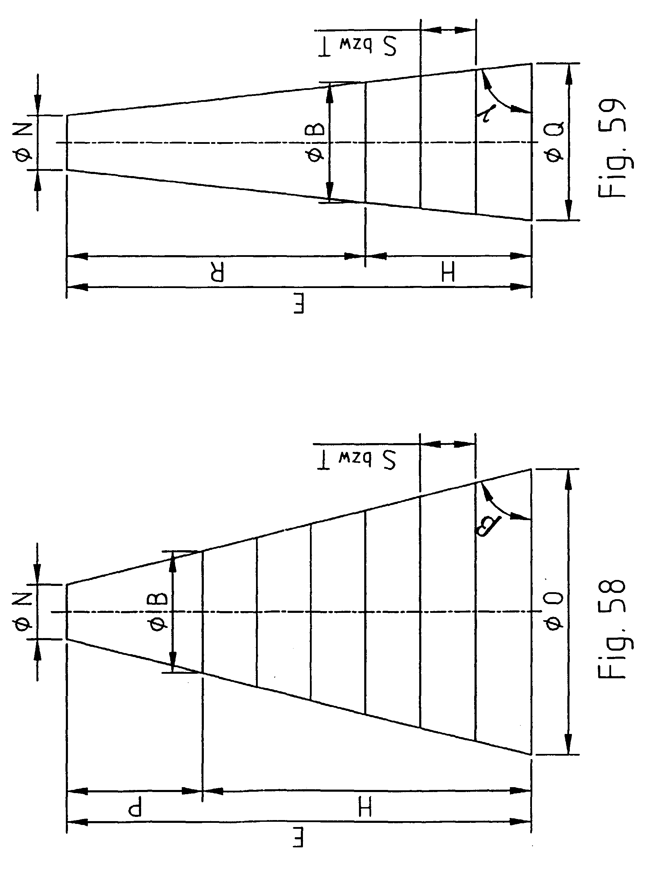

In Zusammenhang mit den Figuren 55 bis 59 sollen weitere Verfahrensweisen und Ausführungsbeispiele der Erfindung erläutert werden, angenommen, es seien folgende Vorgaben gegeben:
- Vorgabe 01: durch Hersteller der Gondel wird der obere Durchmesser 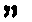 N" vorgegeben;
- Vorgabe 02: durch Statiker wird die Turmform vorgegeben, das heißt der Winkel α.
Mit dem oberen Durchmesser 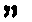 N" wird bei einer festgelegten Höhe der untere Durchmesser ermittelt.
- Vorgabe 03: durch maximale Abmessungen für einen wirtschaftlichen Transport.
Zum Beispiel Brückendurchfahrten mit 4,0 m
Hier festgelegt mit 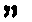 B" als maximalen Durchmesser am Fuß des Turmkopfes 9 (Stahlmantelelement)
- Vorgabe 04: durch Systemlänge
Länge / Höhe der Schalungsrohrschüsse 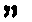 S"
Möglich sind auch 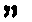 T" (Containermaß) oder andere.
- Zu Fig. 55:: Beispiel: Ein turmartiges Bauwerk mit der Höhe 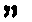 E" für eine Windkraftanlage einschließlich Turmkopf, bei dem die Schalung bis unter den Turmkopf reicht, entsprechend den Ausführungsformen nach den Fig. 1 oder einer der Fig. 2 bis 54:
Das turmartige Bauwerk hat die aus Fig. 55 ersichtliche Form. Sie wird durch die Vorgaben 01 und 02 bestimmt. Die Länge 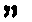 F" des Turmkopfes 9 als Stahlmantel ist hier 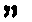 so klein wie möglich" oben auf das turmartige Bauwerk unmittelbar aufgesetzt. Mit der festgelegten Höhe 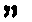 E" kann der untere Durchmesser 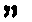 D" berechnet werden.
Das Maß 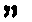 F" ergibt sich rechnerisch als Differenz aus Gesamthöhe 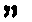 E" geteilt durch die Systemlänge 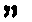 S" bzw. 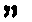 T" der Schalungsrohrschüsse nach Vorgabe 04.
- Zu Fig. 56:: Beispiel: Turm nach alternativer Bauweise
Form, Höhe und Winkel α wie bei Fig. 55
Unter den Vorgaben 01 bis 04; hier insbesondere der Vorgabe 03 soll der Turmkopf 9 aus wirtschaftlichen Gründen möglichst lang ausgeführt werden. Diese Länge 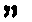 G" ergibt sich rechnerisch unter Berücksichtigung der Systemlänge 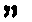 S" bzw. 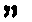 T" und der maximalen Abmessung 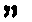 B" nach Vorgabe 03.
Das bedeutet, daß bei dieser Ausführungsform die Doppelschalung gebildet aus den Schalungsrohrschüssen nur bis zur Höhe von 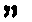 H" reicht und damit auch der Betonkern. Die letzten Meter werden somit von einem Turmkopf 9 mit der Länge 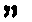 G", der aus Stahl oder einem anderen metallischen Werkstoff hergestellt ist, gebildet, also ohne Betonkern.
- Zu Fig. 57: Beispiel: Türme mit einer Länge 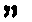 J", die größer als das Maß 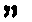 E" sind und Form, oberer Durchmesser und Winkel α wie bei Fig. 55 haben.
Da am Turmkopf 9 der Durchmesser 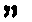 N" nicht verkleinert werden kann, muß das Bauwerk 6 nach unten verlängert werden.
Hieraus ergibt sich, daß ein Turm nach Form und Winkel α jedoch mit der Länge 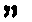 J" von der Oberkante des Turmkopfes 9 mit dem Durchmesser 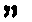 N" nach unten über die Länge 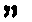 E" in der Form mit der Fig. 55 identisch ist und hier der gleiche Durchmesser 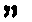 D" vorliegt.
Die Länge 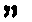 M" ergibt sich aus dem Vielfachen des Systemmaßes 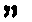 S" bzw. 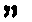 T" und aus 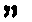 M" und 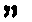 G" wiederum das endgültige Maß 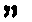 J", so daß hieraus auch wieder der Durchmesser 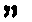 U" zu berechnen ist.
Sollten unumgängliche Gründe vorliegen, so kann der Turm noch über den Turmkopf 9 durch Verringerung von Maß 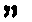 G" in der Höhe verändert werden.
- Zu Fig. 58: Durchmesser oben = 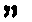 N" (wie vor); Gesamthöhe = E (wie vor)
Durchmesser unten = 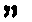 O" ist größer als Durchmesser 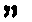 D" wie Fig. 55, Winkel β < α als Vorgabe 02.
Diese Figur ist technisch nicht relevant, nur beispielhaft angeführt und beweist theoretisch, daß unter Einhaltung der Vorgabe 03 bei einem stumpferen Turm, Winkel β kleiner Winkel α, die Länge 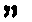 P" für den Turmkopf 9 sich weiter verringert.
- Zu Bild 59: Durchmesser oben = 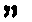 N" (wie vor); Gesamthöhe 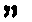 E" (wie vor)
Durchmesser unten = 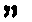 Q" kleiner als Durchmesser 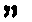 D" wie Fig. 55; Winkel β > α nach Vorgabe 02.
Diese Figur ist technisch nicht relevant, nur beispielhaft angeführt und beweist theoretisch, daß unter Einhaltung der Vorgabe 03 und Durchmesser 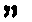 B" bei einem spitzeren Turm, Winkel γ > α, die Länge 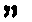 R" für den Turmkopf 9 sich vergrößert.
- Ergebnis:: Es ist davon auszugehen, daß die Turmform in etwa die der Fig. 55 bis 57 beibehält und somit die Länge des Turmkopfes 9 sich bis maximal 42 m einpendelt.
Die Formen nach Fig. 58 und Fig. 59 sind nicht zu erwarten.
Eine Zylinderform ist wegen der Schlankheit aus statischen Gründen nicht zu erwarten.

Man erkennt somit aus den Ausführungsbeispielen nach den Fig. 55 bis 59, daß hier die Doppelschalung, gebildet aus den Schalungsrohrschüssen der Außenschalung 10 und der Innenschalung 11 sich nur über einen Teil der Gesamthöhe des turmartigen Gebäudes, insbesondere für eine Windkraftanlage, erstreckt, während darauf dann jeweils ein Turmkopf nur aus Stahl oder einem anderen metallischen Werkstoff, gegebenenfalls auch Kunststoff, aufgesetzt wird.

Dadurch lassen sich weitere Einsparungen erzielen. Dabei geht man von der Überlegung aus, daß wirtschaftlich betrachtet reine Stahlmanteltürme bis zu etwa 60 m Höhe beispielsweise günstiger gebaut werden können, als turmartige Gebäude mit Betonkern und Doppelschalung aus Stahl, so daß von weiteren Überlegungen ausgegangen wird, daß die Resthöhe für den Stahlmantelturm unter 42 m bleibt und der untere Durchmesser des Stahlmantelturmes unter etwa 4 m zu liegen kommt.

Sofern das turmartige Bauwerk nur über eine gewisse Höhe wie bei den Ausführungsformen nach den Figuren 55 bis 59 mit einem Betonkern versehen ist, wird dieser genau so hergestellt und ausgebildet, wie dies im Zusammenhang mit den Ausführungsformen nach den Figuren 1 bis 54 beschrieben worden ist. Das bedeutet, daß in diesen Fällen die Doppelschalung, gebildet aus Außenschalung 10 und Innenschalung 11 mit Betonkern entweder als verlorene oder tragende Schalung eingesetzt wird und dann auf die Oberseite dieses so aufgebauten turmartigen Gebäudes der Turmkopf aus Stahl oder einem anderen metallischen Werkstoff oder Kunststoff aufgesetzt wird. Rund- und Längsarmierungen, Kopfbolzen, Überdeckungen, Podeste und alle Einzelheiten können so wie bei den Ausführungsformen nach den Figuren 1 bis 54 ausgebildet sein.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Drehachse des Rotors 2
- 2: Rotor
- 3: Gondel
- 4: Erdboden
- 5: Betonfundament
- 6: Bauwerk für Windkraftanlage
- 7: Bauwerkteil
- 8: Oberes Bauwerkteil
- 9: Turmkopf, Stahlmantelteil
- 10: Außenschalung
- 11: Innenschalung
- 12: Außenmantelfläche
- 13: Spalt, radialer; Raum zwischen Innen- und Außenschalung
- 14: Schalungsringsektor, Außenschalung
- 15: Schalungsringsektor, Innenschalung
- 16: Vorsprung, Schulter, Außenmantel am vertikalen Stoß
- 17: Vorsprung, Schulter, Außenmantel am vertikalen Stoß
- 18: Vorsprung, Schulter, Innenmantel am vertikalen Stoß
- 19: Vorsprung, Schulter, Innenmantel am vertikalen Stoß
- 20: Endabschnitt, freier, Vorsprung
- 21: Endabschnitt, freier, Vorsprung
- 22: Lager- und Arretiertasche, Vorsprung
- 23: Lager- und Arretiertasche, Vorsprung
- 24: Klemmspange
- 25: Vertikalstoß
- 26: Vertikalstoß
- 27: Vertikalstoß
- 28: Vertikalstoß
- 29: Federschenkel der Klemmspange
- 30: Federschenkel der Klemmspange
- 31: Federbogen der Klemmspange
- 32: Klemmschenkel der Klemmspange
- 33: Klemmschenkel der Klemmspange
- 34: Stirnseite, ballige der Klemmspange
- 35: Stirnseite, ballige der Klemmspange
- 36: Lager- und Arretieransatz, Lager- und Arretierschenkel der Klemmspange
- 37: Lager- und Arretieransatz, Lager- und Arretierschenkel der Klemmspange
- 38: Abschnitt von Lager- und Arretieransatz der Klemmspange
- 39: Abschnitt von Lager- und Arretieransatz der Klemmspange
- 40: Abstandhalter der Innen- und Außenschalung
- 41: U-Eisen, Gegenhalter
- 42: Kopf, quadratischer des Abstandhalters der Innen- und Außenschalung
- 43: Kopf hammerförmiger des Abstandhalters der Innen- und Außenschalung
- 44: Verstärkung der Innenschalung
- 45: Verstärkung der Innenschalung
- 46: Verstärkung der Innenschalung
- 47: Podestauflagerwinkel
- 48: Turmachse
- 49: Flansch, Anschlußelement, Außenschalung
- 50: Flansch, Anschlußelement, Außenschalung
- 51: Flansch, Anschlußelement, Innenschalung
- 52: Flansch, Anschlußelement, Innenschalung
- 53: Bohrung für Verschraubung im Flansch
- 54: Bohrung für Verschraubung im Flansch
- 55: Längsbewehrung, schlaffe
- 56: Längsbewehrung, schlaffe
- 57: Ringbewehrung, Außenschalung 10, schlaffe
- 58: Ringbewehrung, Innenschalung 11, schlaffe
- 59: -
- 60: Stoßlasche; Flansch, Außenschalung
- 61: Stoßlasche; Flansch, Außenschalung
- 62: Stoßlasche; Flansch, Außenschalung
- 63: Stoßlasche; Flansch, Innenschalung
- 64: Stoßlasche; Flansch, Innenschalung
- 65: Zugelement, Seil, Litze für Vorspannung
- 66: Spann-Nischen für Vorspannung
- 67: Spann-Nischen für Vorspannung
- 68: Zugelement, Seil, Litze für Vorspannung
- 69: Widerlager; Spann-Nischen für Vorspannung
- 70: Widerlager; Spann-Nischen für Vorspannung
- 71: Zugelement, Seil, Litze, Spann-Nischen für Vorspannung
- 72: Widerlager; Spann-Nischen für Vorspannung
- 73: Widerlager; Spann-Nischen für Vorspannung
- 74: Flansch am Übergang Turmkopf unten zum Stahlbeton-Turm
- 75: Dichtung am Übergang Turmkopf unten zum Stahlbeton-Turm
- 76: Dichtung am Übergang Turmkopf unten zum Stahlbeton-Turm
- 77: Flansch am Turmkopf oben zur Gondel
- 78: Ebene, Oberkante des Bauwerkteils 8
- 79: Podestträger
- 80: Podestblech
- 81: Fensterschließblech oberhalb Horizontalstoß Innenschalung
- 82: Fenster oberhalb Horizontalstoß Innenschalung
- 83: Teil, bolzenförmiges, Teil vom Abstandhalter Bewehrung
- 84: Klammer, Teil vom Abstandhalter Bewehrung
- 85: Übergreiflänge der Längsbewehrung
- 86: Übergreiflänge der Längsbewehrung
- 87: Übergreiflänge der Ringbewehrung
- 88: Übergreiflänge der Ringbewehrung
- 89: Bandage, Oberkante des Bauwerkteils 8
- 90: Bandage, Oberkante des Bauwerkteils 8
- 91: Bolzen, zylindrischer, Abstandhalter für Schalung
- 92: Öffnung für Abstandhalter Schalung
- 93: Kontermutter, Mutter für Abstandhalter Schalung
- 94: Unterlegscheibe für Abstandhalter Schalung
- 95: Platte für Abstandhalter Schalung
- 96: Mutter für Abstandhalter Schalung
- 97: Unterlegscheibe für Abstandhalter Schalung
- 98: Vierkant für Abstandhalter Schalung
- 99: Klemmspange, alternativ
- 100: Teil, rechteckförmiges für Klemmspange alternativ
- 101: Kreisbogen für Klemmspange alternativ
- 102: Kreisbogen für Klemmspange alternativ
- 103: Teilkreis für Klemmspange alternativ
- 104: Teilkreis für Klemmspange alternativ
- 105: Klemmzunge für Klemmspange alternativ
- 106: Klemmzunge für Klemmspange alternativ
- 107: Lappen für Klemmspange alternativ
- 108: Lappen für Klemmspange alternativ
- 109: Spaltabstand für Klemmspange alternativ
- 110: Vorsprung für vertikale Stoßverbindung Innenschalung
- 111: Vorsprung für vertikale Stoßverbindung Innenschalung
- 112: Vorsprung für vertikale Stoßverbindung Innenschalung
- 113: Vorsprung für vertikale Stoßverbindung Innenschalung
- 114: Kopfbolzen für Innen- und Außenschalung
- 115: Fachwerkverbinder für Verbindung Innen- und Außenschalung
- 116: Innenmantelfläche der Außenschalung
- 117: Flacheisen für Fachwerkverbinder, Druckstab
- 118: Flacheisen für Fachwerkverbinder, Druckstab
- 119: Zugstab für Fachwerkverbinder
- 120: Bohrung für Fachwerkverbinder
- 121: Bohrung für Fachwerkverbinder
- 122: Bohrung für Fachwerkverbinder
- 123: Bohrung für Fachwerkverbinder
- 124: Bohrung für Fachwerkverbinder
- 125: Bohrung für Fachwerkverbinder
- 126: Bohrung für Fachwerkverbinder
- 127: Bohrung für Fachwerkverbinder
- 128: Anschlußblech auf Innenschalung
- 129: Anschlußblech auf Innenschalung
- 130: Verstärkung wie 44, 45, 46
- 131: Ankerschaube
- A: Differenzmaß aus Höhe J minus Höhe E (Fig. 57)
- B: Durchmesser max am Fuß von Turmkopf 9 nach Vorgabe 03 (Fig. 56 - 59)
- C: Abstand zwischen zwei aufeinanderfolgenden Längsbewehrungen der Außenschalung 10 (Fig. 7)
- D: Durchmesser des Turmes am Mastfuß (Fig. 1 und 55)
- E: Gesamthöhe des Turmes kleiner 100 Meter bis O.K. Turmkopf (Fig. 55 - 59)
- F: Kleinstes Maß für Turmkopf 9 (Fig. 55)
- G: Größtes Maß für Turmkopf 9 (Fig. 56)
- H: Teilhöhe des Turmes aus Schalungsrohrschüssen kleiner 100 Meter (Fig. 55, 56, 58, 59)
- J: Variable Länge des Turmes über 100 Meter (Fig. 57)
- L: Länge (Höhe) eines Gebäudeteils 7 (Fig. 1)
- M: Gesamthöhe des Turmes bis O.K. aller Rohrschüsse bei Fig. 57
- N: Durchmesser am Turmkopf 9 Oben (Fig. 55 - 59)
- O: Durchmesser unten bei Fig. 58 größer als bei Fig. 55
- P: Max. Höhe für Turmkopf 9 bei Fig. 58 nach Vorgabe 03
- Q: Durchmesser unten bei Fig. 59 kleiner als bei Fig. 55
- R: Max. Höhe für Turmkopf 9 bei Fig. 59
- S: Schalungsrohrschußhöhe max. nach Materialmaß (Fig. 55 - 59)
- T: Schalungsrohrschußhöhe max. nach Containermaß (Fig. 55 - 59)
- U: Durchmesser des Turmes größer 100 Meter am Mastfuß Fig. 57

## Patentansprüche

1. Verfahren zum Herstellen von hohen, hohlen, turmartigen Bauwerken (6) von zweihundert Metern Höhe und mehr, unter Verwendung von bewehrtem Beton, unter Zuhilfenahme einer Schalung, mittels derer ein aus Beton bestehender rohrartiger, das turmartige Bauwerk (6) bildender Betonkern hergestellt wird, wobei die Schalung werkseitig in eine innenliegende, die innere Betonwand begrenzende Schalung und in eine außenliegende, die Außenwand des Betons begrenzende Schalung und in transportfähige Einzelschalungsteile unterteilt wird, die werkseitig so weit wie möglich unter anderem mit allen Bewehrungen (55, 56, 57, 58), Abstandhaltern (40) und Anschlußelementen (49, 50, 51, 52) versehen werden, und daß die Einzelschalungsteile der Innenschalung (11) und der Außenschalung (10) auf der Baustelle zu Schalungsrohrschüssen zusammengebaut werden und der jeweils äußere Schalungsrohrschuß über den inneren Schalungsrohrschuß gestülpt wird; oder aber die Sektoren für die Innenschalung innerhalb des vorgefertigten Schalungsrohrschusses der Außenschalung zusammengebaut werden; woraufhin nach der Montage der vereinigten Schalungsrohrschüsse die Einbringung des Betons in den zwischen dem inneren und dem äußeren Schalungsrohrschuß gebildeten Raum (13) erfolgt, und anschließend eine weitere, aus Innen- und Außenrohrschuß bestehende Schalung auf den jeweils darunterliegenden Doppelschalungsrohrschuß aufgesetzt und mit der zuvor erstellten Schalung alle erforderlichen Verbindungen hergestellt werden, woraufhin die Einbringung des Betons für diesen Doppelschalungsrohrschuß erfolgt, bis das Bauwerk (6) eine vorgesehene Höhe erreicht hat, und daß die die Schalung bildenden, miteinander koaxial verbundenen Schalungsrohrschüsse im und am Bauwerk belassen werden.

2. Verfahren nach Anspruch 1, **dadurch gekennzeichnet,** daß die Einzelschalungsrohrschüsse werkseitig in mehreren Schalungsringsektoren (14, 15) unterteilt werden, die an der Baustelle zu dem Schalungsrohrschuß miteinander verbunden werden.

3. Verfahren nach Anspruch 1 und/oder 2, **dadurch gekennzeichnet,** daß mehrere übereinander angeordnete Doppelschalungsrohrschüsse nach dem Einbringen des Betons und nach einer gewissen Abbindezeit durch mehrere über den Umfang der Doppelschalungsrohrschüsse verteilt angeordnete, in dem zwischen Innen- und Außenschalung befindlichen Raum angeordnete Zugelemente (71) mit vorbestimmter Vorspannkraft dauerhaft miteinander gegen das Fundament (5) gespannt werden.

4. Verfahren nach Anspruch 3, **dadurch gekennzeichnet,** daß mit zunehmender Höhe des Bauwerkes (6) die Anzahl der Zugelemente (71) verringert wird.

5. Verfahren nach Anspruch 1 oder einem der darauffolgenden Ansprüche, **dadurch gekennzeichnet,** daß die Schalungsrohrschüsse der Außenschalung (10) gegenüber den Schalungsrohrschüssen der Innenschalung (11) an statisch erforderlichen Stellen miteinander kraftschlüssig verbunden werden.

6. Verfahren nach Anspruch 1 oder einem der darauffolgenden Ansprüche, **dadurch gekennzeichnet,** daß die Länge der Schalungsrohrschüsse auf einen Bruchteil, vorzugsweise einen geringen Bruchteil, der Gesamthöhe des Bauwerkes (6) unterteilt wird.

7. Verfahren nach Anspruch 1 oder einem der darauffolgenden Ansprüche, **dadurch gekennzeichnet,** daß die orthogonal zur Längsachse des Bauwerkes (6) gemessenen Querabmessungen der Außen- und Innenschalung (10, 11) und damit auch des turmartigen Bauwerkes (6) von unten nach oben kontinuierlich oder in Sprüngen verringert werden.

8. Verfahren nach Anspruch 2 oder einem der darauffolgenden Ansprüche, **dadurch gekennzeichnet,** daß die Schalungsringsektoren (14, 15) der Schalungsrohrschüsse der Außen- und Innenschalungen (10, 11) jeweils mit im Abstand übereinander angeordneten schlaffen Ringbewehrungen (57, 58) und quer zu diesen laufenden schlaffen Längsbewehrungen (55, 56) versehen werden, und daß nach der Montage der einzelnen Schalungsrohrschüsse diese Ring- und Längsbewehrungen (57, 58 bzw. 55, 56) mit Übergreiflängen (87, 88 bzw. 85, 86) durch Rödeldraht, Klammern oder dergleichen mit benachbarten Bewehrungen des jeweils anderen Schalungsringsektors (14, 15) verbunden werden.

9. Vorrichtung zum Durchführen des Verfahrens zum Herstellen hoher, hohler, turmartiger Bauwerke (6) von zweihundert Metern Höhe und mehr, unter Verwendung von bewehrtem Beton, nach Anspruch 1 oder einem der darauffolgenden Ansprüche, mit einer aus mehreren koaxial und übereinander angeordneten und kraftschlüssig miteinander verbundenen Doppelschalungsrohrschüssen bestehenden Außen- und Innenschalung (10, 11), die einen Ringraum zwischen sich begrenzen, der zur Aufnahme von bewehrtem Beton dient, der die Wand des Bauwerkes (6) bildet, wobei jeder Schalungsrohrschuß aus mehreren miteinander verbundenen Einzelrohrschußteilen besteht.

10. Vorrichtung nach Anspruch 9, **dadurch gekennzeichnet,** daß jeder Schalungsrohrschuß der Innen- und Außenschalung (11, 10) aus mehreren miteinander verbundenen Schalungsringsektoren (14, 15) besteht.

11. Vorrichtung nach Anspruch 9 oder 10, **dadurch gekennzeichnet,** daß jeder Schalungsrohrschuß mit einer Bewehrung versehen ist, die als Bewehrung für den Beton dient.

12. Vorrichtung nach Anspruch 11, **dadurch gekennzeichnet,** daß jeder Schalungsrohrschuß mit einer in Bezug auf den betreffenden Schalungsrohrschuß ringförmig angeordneten, aus mehreren mit Abstand in Längsachsrichtung des betreffenden Schalungsrohrschusses horizontal übereinander angeordneten Ringbewehrungen (57, 58) versehen ist.

13. Vorrichtung nach Anspruch 12, **dadurch gekennzeichnet,** daß quer, vorzugsweise orthogonal zu den Ringbewehrungen (57, 58) über den Umfang des betreffenden Schalungsrohrschusses verteilt angeordnet mehrere Längsbewehrungen (55) angeordnet sind.

14. Vorrichtung nach Anspruch 12 oder 13, **dadurch gekennzeichnet,** daß die Bewehrungen (55, 56 bzw. 57, 58) der einzelnen Einzelrohrschußteile eines Schalungsrohrschusses miteinander verbunden, insbesondere durch Rödeldraht miteinander gekuppelt sind.

15. Vorrichtung nach Anspruch 9 oder einem der darauffolgenden Ansprüche, **dadurch gekennzeichnet,** daß jedes Einzelschalungsteil werkseitig mit den Ring- und Längsbewehrungen (57, 58 bzw. 55, 56) versehen ist.

16. Vorrichtung nach Anspruch 9 oder einem der darauffolgenden Ansprüche, **dadurch gekennzeichnet,** daß die einzelnen als Schalungsringsektoren ausgebildeten Einzelrohrschußteile (14, 15) mit Abstandhaltern (40) oder Anordnungen zur Aufnahme von Abstandhaltern (40) versehen sind, die den Raum (13) zwischen Innen- und Außenschalung (11, 10) überbrücken, und daß an der Innenwandung der Schalungsringsektoren (14, 15) der Außenschalung (10) und Innenschalung (11) entsprechende Widerlager, Vorsprünge, Lager, Platten oder dergleichen vorgesehen sind, die einen Teil der Abstandhalter (40) bilden.

17. Vorrichtung nach Anspruch 9 oder einem der darauffolgenden Ansprüche, **dadurch gekennzeichnet**, daß die einzelnen Schalungsringsektoren der Schalungsrohrschüsse der Innen- und Außenschalung (11, 10) mit Flanschen (49, 50, 51, 52) versehen sind, mittels derer die Schalungsringsektoren koaxial durch Verbindungselemente miteinander kuppelbar sind.

18. Vorrichtung nach Anspruch 17, **dadurch gekennzeichnet,** daß die aneinander angrenzenden Stirnseiten von Schalungsringsektoren (14, 15) mit einwärts gerichteten Vorsprüngen, Ansätzen, Pratzen, Schultern, Widerlagern, Profilstahl oder dergleichen (16, 17, 18, 19) versehen sind, die z. B. kraftschlüssig durch Verbindungsmittel miteinander gekuppelt sind.

19. Vorrichtung nach Anspruch 18, **dadurch gekennzeichnet,** daß Verbindungsmittel als federnde Klemmspangen (24) ausgebildet sind, die mit ihren Federschenkeln (29, 30) die miteinander zu kuppelnden Vorsprünge (16 bis 19) oder dergleichen der aneinander angrenzenden Schalungsringsektoren kraftschlüssig verbinden.

20. Vorrichtung nach Anspruch 19, **dadurch gekennzeichnet,** daß über die Höhe eines aus mehreren Schalungsringsektoren (14, 15) bestehenden Schalungsrohrschusses der Innen- und Außenschalung (11,10) jeweils mehrere Klemmspangen (24) übereinander angeordnet sind.

21. Vorrichtung nach Anspruch 20, **dadurch gekennzeichnet,** daß die zu einem Vertikalstoß gehörenden Klemmspangen (24) eines Schalungsrohrschusses unmittelbar mit ihren Stirnseiten aneinander angrenzen.

22. Vorrichtung nach Anspruch 21, **dadurch gekennzeichnet,** daß jede Klemmspange (24) im Querschnitt etwa die Form eines gleichschenkligen Dreiecks aufweist, dessen den Scheitelwinkel betreffenden Federschenkel (29, 30) durch einen gebogenen, einstückig mit den Federschenkeln (29, 30) ausgebildeten Federbogen (31) miteinander verbunden sind, und daß die den Scheitelwinkel betreffenden Seiten an der Basisseite je einen materialmäßig einstückigen Klemmsteg (32, 33) aufweisen, wobei die Klemmstege (32, 33) gegeneinander gerichtet sind und gegen die jeweilige Innenseite des einwärts gebogenen Vorsprunges (16 bis 19) des betreffenden Schalungsringsektors (14, 15) anliegen.

23. Vorrichtung nach Anspruch 22, **dadurch gekennzeichnet,** daß mit den den Scheitelwinkel eingrenzenden Federschenkeln (29, 30) je ein Lager- und Arretieransatz (36, 37) verbunden ist, der aus einem geradlinigen, an der Innenseite des betreffenden Federschenkels (29, 30) angeordneten Längenabschnitt aus einem daran sich von dem Federschenkel (29, 30) weggekröpften Längenabschnitt und einem sich daran anschließenden, in Richtung wiederum auf den Federschenkel (29, 30) hingekröpften Längenabschnitt besteht, und daß der freie, auf den Federschenkel (29, 30) hingekröpfte Längenabschnitt hinter einen mit der Wandung des Vorsprungs (16 bis 19) verbundenen Endabschnitt (20, 21) eingreift, und daß die jeweils einwärts gerichteten Vorsprünge (16 bis 19) der aneinander angrenzenden Schalungsringsektoren im Bereich der Endabschnitte (20, 21) von der betreffenden Klemmspange (24) umschlossen sind.

24. Vorrichtung nach Anspruch 23, **dadurch gekennzeichnet,** daß die Klemmspange (24) aus Federstahl besteht.

25. Vorrichtung nach Anspruch 21 bis 23, **dadurch gekennzeichnet,** daß die Klemmspange (24) aus einem federelastischen Kunststoff besteht, der die erforderliche Shore-Härte und Alterungsbeständigkeit aufweist sowie gegen die üblicherweise auf Baustellen anfallenden aggressiven Wässer sowie gegen Ozon beständig und lichtecht ist.

26. Vorrichtung nach Anspruch 21 oder einem der darauffolgenden Ansprüche, **dadurch gekennzeichnet,** daß die Klemmspange (24) leistenartig ausgebildet ist.

27. Vorrichtung nach Anspruch 26, **dadurch gekennzeichnet,** daß die Klemmspange (24) eine Länge von etwa zwei bis fünf Metern, vorzugsweise etwa 3 Meter, besitzt.

28. Vorrichtung nach Anspruch 9 oder einem der darauffolgenden Ansprüche, **dadurch gekennzeichnet,** daß jeder Schalungsrohrschuß der Innenschalung (11) mehrere in achsialer Richtung des betreffenden Schalungsrohrschusses mit Abstand zueinander angeordnete Verstärkungen (44 bis 46) aufweist, die z. B. den Innenraum, also der dem Beton abgewandten Seite der Innenschalung (11) durchgreifen.

29. Vorrichtung nach Anspruch 28, **dadurch gekennzeichnet,** daß die Verstärkungen (44 bis 46) auch aus mehreren Stützen, Leisten, Flacheisen oder anderen Stahlprofilen bestehen, die mit der dem Beton abgewandten Innenwand des die Innenschalung (11) bildenden Schalungsrohrschusses verbunden sind.

30. Vorrichtung nach Anspruch 29, **dadurch gekennzeichnet,** daß in jeder Ebene, in der sich Verstärkungen (44 bis 46) befinden, mehrere solcher Verstärkungen (44 bis 46) angeordnet sind, die vorzugsweise parallel zueinander über den Umfang oder spiralförmig gewendelt verlaufen.

31. Vorrichtung nach Anspruch 30, **dadurch gekennzeichnet,** daß die Verstärkungen (44 bis 46) aus Stahl bestehen.

32. Vorrichtung nach Anspruch 9 oder einem der darauffolgenden Ansprüche, **dadurch gekennzeichnet,** daß sowohl die Bewehrungen (55 bis 58) als auch die Schalungsrohrschüsse der Innen- und Außenschalung (11, 10) aus Stahl bestehen.

33. Vorrichtung nach Anspruch 9 oder einem der Ansprüche 10 bis 31, **dadurch gekennzeichnet,** daß die Schalungsrohrschüsse der Innen- und Außenschalung (11, 10) sowie die Verstärkungen (44 bis 46) aus Kunststoff bestehen.

34. Vorrichtung nach Anspruch 33, **dadurch gekennzeichnet,** daß die Schalungen aus einem geeigneten Polymer-Kunststoff bestehen.

35. Vorrichtung nach Anspruch 34, **dadurch gekennzeichnet,** daß die Schalungsrohrschüsse der Innen- und Außenschalung (11, 10) aus einem geeigneten Polyurethan-Kunststoff bestehen, der die erforderliche Shore-Härte aufweist sowie alterungs- und ozonbeständig ist.

36. Vorrichtung nach Anspruch 35, **dadurch gekennzeichnet,** daß die Einzelschalungsteile der Innen- und Außenschalung (11, 10) aus glasfaserverstärktem Kunststoff bestehen.

37. Vorrichtung nach Anspruch 33, **dadurch gekennzeichnet,** daß die Einzelschalungsteile der Innen- und Außenschalung (11, 10) aus Kevelar bestehen, wie er beim Bau von Flugzeugen, insbesondere von Tragflächen und Rümpfen, zur Anwendung gelangt.

38. Vorrichtung nach Anspruch 9 oder einem der darauffolgenden Ansprüche, **dadurch gekennzeichnet,** daß jeweils im Bereich der oberen Mündungsöffnung eines Schalungsrohrschusses der Innenschalung (11) mehrere Podestträger (79) im Innenraum der Innenschalung (11) auf einem an die Innenschalung befestigten Auflagerprofil (47) liegend angeordnet sind, auf denen sich begehbare Roste, Podestbleche (80) oder dergleichen befinden, wobei eine etwa ein Meter breite, umlaufende Brüstung auf Kragarmen gelagert und mit Blech- oder Lichtgitterabdeckung und Schutzgeländer vorgesehen ist.

39. Vorrichtung nach Anspruch 9, **dadurch gekennzeichnet,** daß die Schalungsringsektoren (14, 15) zum Zwecke des Transports mit Ösen, Vorsprüngen oder dergleichen versehen sind, die mit dem betreffenden Teil fest verbunden sind.

40. Vorrichtung nach Anspruch 9 oder einem der darauffolgenden Ansprüche, **dadurch gekennzeichnet,** daß alle oder nur einige der in Längsachsrichtung des turmartigen Bauwerkes (6) übereinander angeordneten Schalungsrohrschüsse im Horizontalstoßbereich der Innenschalungen (11) mit verschließbaren fensterartigen Durchbrechungen (82) versehen sind, durch die der Ringraum (13) zwischen Innen- und Außenschalung (11,10) erreichbar ist.

41. Vorrichtung nach Anspruch 9 oder einem der darauffolgenden Ansprüche, **dadurch gekennzeichnet,** daß in dem Ringraum (13) zwischen Innen- und Außenschalung (11, 10) Hüllrohre über den Umfang der betreffenden Schalungen verteilt angebracht sind, durch die jeweils Zugelemente (65, 68, 71) hindurchgeführt sind, die zum Einbringen der Vorspannung in den Beton dienen.

42. Vorrichtung nach Anspruch 41, **dadurch gekennzeichnet,** daß im unteren Bereich des turmartigen Bauwerkes (6) erheblich mehr Zugelemente (65, 68, 71) über den Umfang des Bauwerkes (6) verteilt angeordnet sind als im oberen Bereich, und daß die Anzahl der Zugelemente (65, 68, 71) mit zunehmender Höhe abnimmt.

43. Vorrichtung nach Anspruch 42, **dadurch gekennzeichnet,** daß die Zugelemente (65, 68, 71) durch ein der Aufstellung des turmartigen Bauwerkes (6) dienendes Fundament (5) hindurchgeführt werden und daß die ersten Zugelemente (65) in einem gewissen Abstand von diesem Fundament (5) nach Aufbringung der Spannung unter Spannung blockiert und arretiert sind, während die darauffolgenden Zugelemente (68, 71) eines höheren Bereichs des turmartigen Bauwerkes (6) nach Aufbringen der Zugkraft arretiert und blockiert festlegbar sind und daß die Zugelemente (65, 68, 71) von dem jeweiligen Höhenbereich schleifenförmig durch das betreffende Fundament (5) hindurchgeführt sind, so daß die Reaktionskräfte der auf den Beton aufgebrachten Spannung (Vorspannung) durch das Fundament (5) aufnehmbar sind.

44. Vorrichtung nach Anspruch 9 oder einem der darauffolgenden Ansprüche, **dadurch gekennzeichnet,** daß auf dem letzten (obersten) Bauwerkteil (8) der aus Rohrschüssen bestehenden Innen- und Außenschalung (10, 11) ein vorzugsweise nur aus Stahl bestehender Turmkopf (9) aufgesetzt ist.

45. Vorrichtung nach Anspruch 44, **dadurch gekennzeichnet,** daß die Berührungsebene (78) zwischen Turmkopf (9) und der Innen- und Außenschalung (11, 10) des Bauwerkteils (8) durch einen oder mehrere Dichtungselemente (75, 76) abgedichtet ist.

46. Vorrichtung nach Anspruch 45, **dadurch gekennzeichnet,** daß die jeweils nach innen gerichteten vertikalen Flansche der Schalungsringsektoren (14, 15) durch Führungsbolzen in paßgerechter Lage montierbar sind, um mit der Klemmspange (24) diese endgültige Lage kraftschlüssig zu fixieren.

47. Vorrichtung nach Anspruch 9 oder einem der darauffolgenden Ansprüche, **dadurch gekennzeichnet,** daß Klemmspangen (24) für die Innen- und Außenschalung (11, 10) für den vertikalen Stoß in dem vom Beton auszufüllenden Ringraum (13) angeordnet sind.

48. Vorrichtung nach Anspruch 9 oder einem der darauffolgenden Ansprüche, **dadurch gekennzeichnet,** daß die horizontalen Flansche der Schalungsrohrschüsse der Innenschalung (11) auf der von dem Beton auszufüllenden Ringraum (13) abgewandten Seite - dem Innenraum zugekehrt - angeordnet sind.

49. Vorrichtung nach Anspruch 9 oder einem der darauffolgenden Ansprüche, **dadurch gekennzeichnet,** daß sowohl die Schalungsringsektoren der Innen- als auch der Außenschalung (11, 10) zusätzlich zu Klemmspangen (24) durch Steck- oder Schraubverbindungen miteinander gekuppelt sind.

50. Vorrichtung nach Anspruch 9 oder einem der darauffolgenden Ansprüche, **dadurch gekennzeichnet,** daß die aufeinander aufzusetzenden, jeweils konisch verlaufenden und im Querschnitt kreisförmig ausgebildeten Schalungsrohrschüsse der Innen- und Außenschalung (11, 10) über Flansche (49 bis 52) miteinander verbunden sind, durch die jeweils Befestigungsmittel wie Schrauben, Nieten, Bolzen oder dergleichen oder Zentriermittel hindurchgreifen.

51. Vorrichtung nach Anspruch 9 oder einem der darauffolgenden Ansprüche, **dadurch gekennzeichnet,** daß in dem von dem Beton auszufüllenden Ringraum (13) und/oder im Innenraum der Innenschalung (11) Hüllrohre für Zugelemente (65, 68, 71) oder dergleichen angeordnet sind.

52. Vorrichtung nach Anspruch 9, **dadurch gekennzeichnet,** daß sich die Schalungsringsektoren (14, 15) eines Schalungsrohrschusses der Innen- oder Außenschalung (11, 10) über einen spitzen Kreiswinkel erstrecken.

53. Vorrichtung nach Anspruch 9 oder einem der darauffolgenden Ansprüche, **dadurch gekennzeichnet** daß jeder Schalungsrohrschuß sich über eine Länge (Höhe) von 6 bis 15 Meter, vorzugsweise 12 Metern, erstreckt.

54. Vorrichtung nach Anspruch 53, **dadurch gekennzeichnet,** daß jeder fabrikmäßig als Fertigmodul vorgefertigter Schalungsringsektor in seinen Abmessungen (Länge und Querabmessungen) so gestaltet ist, daß er in den international verwendeten Containern (Schiffs- und Luftfahrtcontainer) transportierbar ist.

55. Vorrichtung nach Anspruch 9 oder einem der darauffolgenden Ansprüche, **dadurch gekennzeichnet,** daß an jedem Rohrschuß der Innen- und/oder Außenschalung (11, 10) über den Umfang viele hammerartig ausgebildete Vorsprünge (Kopfbolzen - 114) angeordnet sind, die mit ihren freien Endabschnitten im Beton angeordnet sind.

56. Vorrichtung nach Anspruch 44 oder einem der darauffolgenden Ansprüche, **dadurch gekennzeichnet,** daß der Turmkopf (9) über mehrere über seinen Umfang verteilte Zugelemente wie Stahlseile, Spannlitzen (68), Ankerschrauben über erheblich verstärkte Flansche (74) derart aufgesetzt ist, daß alle von oben, im wesentlichen aus Rotor (2), Gondel (3) und Montagezustand kommenden Kräfte in den Stahlbeton eingeleitet werden.

57. Vorrichtung nach Anspruch 56**, dadurch gekennzeichnet,** daß zur Erzielung einer möglichst flächigen Krafteinleitung in den Betonkern auf der Oberseite des Stahlbetons Mörtel aufgebracht und vor dessen Abbinden der Turmkopf (9) mit dem Flansch (74) auf diesen aufgesetzt ist.

58. Vorrichtung nach Anspruch 44 oder einem der darauffolgenden Ansprüche, **dadurch gekennzeichnet,** daß der Beton an seinem oberen, dem Turmkopf (9) zugekehrten Höhenabschnitt innen und außen mit ringförmig ausgebildeten Bandagen (89, 90) aus Stahl versehen ist.

59. Vorrichtung nach Anspruch 44 oder einem der darauffolgenden Ansprüche, **dadurch gekennzeichnet,** daß der nach außen gerichtete und verstärkte Flansch (77) mit dem Drehkranz der Gondel (3) durch Schrauben oder dergleichen, fest, aber lösbar, gekuppelt ist.

60. Vorrichtung nach Anspruch 44 oder einem der darauffolgenden Ansprüche, **dadurch gekennzeichnet,** daß der Turmkopf (9) unter Zwischenschaltung von das Herausquetschen von Mörtel verhindernden Dichtungen (75, 76) aufgesetzt ist.

61. Vorrichtung nach Anspruch 16 oder einem der darauffolgenden Ansprüche, **dadurch gekennzeichnet,** daß mit dem jeweiligen Schalungsrohrschuß der Außenschalung (10) im Querschnitt etwa U-förmige Eisen (41), zum Beispiel durch Schweißen, verbunden sind, die mit hakenförmigem Vorsprung versehen sind, die hinter einen formmäßig entsprechend angepaßten quadratischen oder hammerförmigen Kopf (42, 43) verdrehsicher und formschlüssig greifen.

62. Vorrichtung nach Anspruch 61**, dadurch gekennzeichnet,** daß der Form- und Kraftschluß durch keilförmig einander anliegende Flächen des etwa U-förmigen Eisens (41) und der zugekehrten Wandung des entsprechenden Kopfes (42 bzw. 43) bewirkt ist.

63. Vorrichtung nach Anspruch 62, **dadurch gekennzeichnet** daß der jeweilige Kopf (42, 43) einstückig mit einem zylindrischen Bolzen (91) verbunden ist, der durch eine vergrößerte Öffnung (92) der Innenschalung (11) gesteckt ist, wobei der korrekte Abstand des Kopfes (42 bzw. 43) zu seinem zugehörigen U-Eisen (41) einerseits und zur Innenschalung (11) andererseits durch eine Kontermutter oder dergleichen (93) eingestellt ist, die sich an der abgesetzt hervorstehenden Fläche der auf der gegenüberliegenden Seite liegenden Platte (95) größerer Querabmessungen und dadurch die Öffnung (92) überdeckend, bündig mit der Außenseite der Innenschalung (11) vorzugsweise über eine Unterlegscheibe (94) abstützt, nachdem sie durch die betreffende Öffnung wie Kopf (42 oder 43) bei der Montage hindurchgeführt worden ist, und der Kopf (42, 43) zwischen die hakenförmigen Vorsprünge der U-Eisen durch Drehen des Kopfes (42, 43) um die Längsachse des zylindrischen Bolzens (91) und Zurückdrehen arretiert ist, wobei das Festspannen der Abstandhalter (40) über eine auf der Innenseite der Innenschalung (11) angeordnete weitere Mutter (96), die sich vorzugsweise ebenfalls über eine Unterlegscheibe (97) gegen die Platte (95) abstützt, bewirkt ist, die auf den mit Gewinde versehenen zylindrischen Bolzen (91) wie die Kontermutter (93) aufgeschraubt ist.

64. Vorrichtung nach Anspruch 63, **dadurch gekennzeichnet,** daß das freie Ende des Bolzens (91) in den Innenraum der Innenschalung (11) hineinragt, das an seinem freien Ende mit einem Mehrkant, zum Beispiel Vierkant (98), versehen ist, derart, daß beim Aufschrauben der Muttern (93, 96) mittels eines Werkzeuges der Bolzen (91) und damit auch der zugeordnete Kopf (42, 43) durch Aufsetzen des Werkzeuges auf den Mehrkant (98) arretierbar ist.

65. Vorrichtung nach Anspruch 1 oder einem der darauffolgenden Ansprüche, **dadurch gekennzeichnet,** daß an der dem Beton jeweils zugekehrten Wand der Außenschalung (10) und/oder der Innenschalung (11) über den Umfang und über die Höhe mehrere Verlegehilfen fest mit der betreffenden Schalung, zum Beispiel durch Schweißen, verbunden sind, die jeweils einen bolzenförmigen Teil (83) aufweisen, der mit der jeweiligen Innenwand, insbesondere durch Punktschweißen fest verbunden ist, wobei der bolzenförmige Teil (83) mit Gewinde versehen ist, auf das eine Klammer (84) aus Metall oder Kunststoff, angeordnet ist, die die jeweilige Rundstahlbewehrung fest arretiert.

66. Vorrichtung nach Anspruch 65**, dadurch gekennzeichnet,** daß für die Ringbewehrung (57, 58) ein bolzenförmiger Teil mit geringerer Länge als für die Längsbewehrung (55, 56) vorgesehen ist.

67. Vorrichtung nach Anspruch 20 oder einem der darauffolgenden Ansprüche, **dadurch gekennzeichnet,** daß die Klemmspange (99) in einem orthogonal zu ihrer Längsachse geführten Querschnitt aus einem rechteckförmigen Teil (100) und an den diametral gegenüberliegenden kürzeren Rechteckseiten aus einem mit diesem rechteckförmigen Teil (100) jeweils materialmäßig einstückigen Teilkreis (103 bzw. 104) besteht, die sich in gegeneinander gerichteten Klemmzungen (105 bzw. 106) fortsetzen, die mit ihren Längsachsen parallel zur Längsachse des rechteckförmigen Teils (100) oder annähernd parallel dazu verlaufen und zwischen diesem rechteckförmigen Teil (100) einen Spaltabstand (109) belassen, in den einstückig mit der Innen- oder Außenschalung (11, 10) verbundene Lappen (107, 108) formschlüssig unter Spannung angeordnet sind.

68. Vorrichtung nach Anspruch 67, **dadurch gekennzeichnet,** daß die Klemmzungen (105, 106) zwischen sich einen Spaltabstand belassen, durch den die um etwa 180 Grad abgekröpften, mit der jeweiligen Schalung (10) bzw. (11) verbundenen Lappen (107, 108) materialmäßig einstückig verbunden hindurchgreifen.

69. Vorrichtung nach Anspruch 67 oder 68, **dadurch gekennzeichnet,** daß der Spaltabstand (109) der Klemmspangen (99) sich zumindest zu einem Ende konisch in Richtung der Längsachse erweitert.

70. Vorrichtung nach Anspruch 9 oder einem der darauffolgenden Ansprüche, **dadurch gekennzeichnet,** daß an der dem Beton zugekehrten Wandung der Innen- und/oder Außenschalung jeweils mit Abstand zueinander über den Umfang und die Länge (Höhe) des betreffenden Schalungsrohrschusses versetzt zueinander angeordnete Kopfbolzen (114) in nach statisch erforderlichen Stückzahlen angeordnet sind, die das gemeinsame Tragverhalten der Innen- und Außenschalung (10, 11) mit dem Betonkern sicherstellen und auch bei unterschiedlichen Materialien gemeinsam eine zuverlässige Kraftübertragung sicherstellen (zum Beispiel bei Druck- oder Wärmespannungen gegen Ausbeuten zu sichern).

71. Vorrichtung nach Anspruch 70, **dadurch gekennzeichnet,** daß die Kopfbolzen (114) in der Seitenansicht aus einem geradlinigen, etwa orthogonal zur Mantelfläche des betreffenden Schalungsringsektors verlaufenden Abschnitt und einem dazu unter einem spitzen, vorzugsweise rechten Winkel, verlaufenden abgekröpften Querabschnitt bestehen und daß die Kopfbolzen (114) im Betonbereich angeordnet sind.

72. Vorrichtung nach Anspruch 9 oder einem der darauffolgenden Ansprüche, **dadurch gekennzeichnet,** daß die Schalungsringsektoren vertikal durchgehende, Stoßflacheisen bildende Flansche (16, 17) aufweisen, die mehrere Durchgangslöcher besitzen, durch die Schraubbolzen hindurchgesteckt sind, die die jeweiligen Schalungsringsektoren miteinander zum Schalungsrohrschuß der Außen- bzw. Innenschalung (10, 11) verbinden.

73. Vorrichtung nach Anspruch 9 oder einem der darauffolgenden Ansprüche, **dadurch gekennzeichnet,** daß jeweils im Stoßbereich der einander angrenzenden Schalungsringsektoren sich über die Höhe eines Schalungsrohrschusses erstreckender Fachwerkverbinder (115) angeordnet ist, der mit der Außen- und Innenschalung (10, 11) gekuppelt ist.

74. Vorrichtung nach Anspruch 73, **dadurch gekennzeichnet,** daß der Fachwerkverbinder (115) mit den betreffenden Stoßflacheisen (16) der Außenschalung (10) durch Schweißen oder dergleichen verbunden ist.

75. Vorrichtung nach Anspruch 73 oder 74, **dadurch gekennzeichnet,** daß jeder Fachwerkverbinder (115) aus einer Mehrzahl von etwa orthogonal zu dem betreffenden Schalungsrohrschuß verlaufende Flacheisen (117, 118) und etwa diagonal dazu verlaufende Verbindungsglieder (119) bestehen, die mit dem Flacheisen fest, z. B. durch Schweißen, gekuppelt sind.

76. Vorrichtung nach Anspruch 75, **dadurch gekennzeichnet,** daß jeder Fachwerkverbinder (115) im gesamten Bereich mit Flacheisen (117, 118) verbunden ist, die an ihrem freien Ende Bohrungen (120, 121, 122, 123) aufweisen, die mit Bohrungen (124, 125 bzw. 126, 127) in koaxiale Deckung bringbar sind, durch die Schraubenbolzen hindurchgreifen, so daß die an der Innenschalung (11) verschweißten Flacheisen (128, 129) mit der dem Beton zugekehrten Innenseite der Innenschalung (11) fest, insbesondere durch Schrauben, verbunden sind.

77. Vorrichtung nach Anspruch 9 oder einem der darauffolgenden Ansprüche, **dadurch gekennzeichnet,** daß der letzte einzusetzende Schalungsringsektor der Innenschalung (11) mit von der radialen Richtung abweichenden, abgekröpften Vorsprüngen (110, 111) versehen ist, die im eingebauten Zustand parallel zu entsprechenden Vorsprüngen (112, 113) benachbarter Schalungsringsektoren verlaufen und hier durch Schraubbolzen verbunden sind.

78. Vorrichtung nach Anspruch 9 oder einem der darauffolgenden Ansprüche, **dadurch gekennzeichnet,** daß die Außenschalung (10) und die Innenschalung (11) als verlorene Schalung eingesetzt sind.

79. Vorrichtung nach Anspruch 9 oder einem der Ansprüche 10 bis 77, **dadurch gekennzeichnet,** daß die Außenschalung (10) und die Innenschalung (11) als statisch mittragende Schalung eingesetzt sind.

80. Vorrichtung nach Anspruch 9 oder einem der darauffolgenden Ansprüche, **dadurch gekennzeichnet**, daß nur ein Teil des Gebäudes aus Schalungsrohrschüssen der Innen- und Außenschalung (10, 11) und einem Betonkern besteht, während eine Resthöhe nur aus einem Turmkopf (9) ohne Betonkern hergestellt ist.

81. Vorrichtung nach Anspruch 9 oder einem der darauffolgenden Ansprüche, **dadurch gekennzeichnet**, daß das turmartige Gebäude bis zu einer Höhe von etwa 60 m aus einer Innen- und Außenschalung (10, 11) und einem Betonkern hergestellt ist, während die Resthöhe nur aus einem dem Turmkopf bildenden Bauteil besteht, das aufgesetzt ist.

82. Vorrichtung nach Anspruch 9 oder einem der darauffolgenden Ansprüche, **dadurch gekennzeichnet**, daß das die Resthöhe bildende Bauteil aus Stahl besteht.

83. Vorrichtung nach Anspruch 9 oder einem der Ansprüche 10 bis 81, **dadurch gekennzeichnet**, daß das die Resthöhe bildende Bauteil aus Kunststoff besteht.

84. Vorrichtung nach Anspruch 9 oder einem der Ansprüche 10 bis 81, **dadurch gekennzeichnet**, daß das die Resthöhe bildende Bauteil aus Leichtmetall, zum Beispiel Aluminium oder einer Aluminium-Guß-Legierung besteht.

85. Vorrichtung nach Anspruch 81 oder einem der darauffolgenden Ansprüche, **dadurch gekennzeichnet,** daß das die Resthöhe bildende Bauteil gleichzeitig den Turmkopf beinhaltet, der auch in der vorgegebenen Höhe oben die Gondel mit Rotor, Getriebe und Generator, aufnimmt.

86. Vorrichtung nach Anspruch 81 oder einem der darauffolgenden Ansprüche, **dadurch gekennzeichnet,** daß der die Doppelschalung aus Außenschalung (10) und Innenschalung (11) mit Beton aufweisende Abschnitt des turmartiges Gebäudes über einen wesentlichen Höhenbereich reicht.
